(19) Europäisches Patentamt European Patent Office Office européen des brevets

(11) **EP 4 637 093 A1**

(12) **EUROPEAN PATENT APPLICATION**
published in accordance with Art. 153(4) EPC

(43) Date of publication:
**22.10.2025 Bulletin 2025/43**

(21) Application number: **23902687.5**

(22) Date of filing: **12.12.2023**

(51) International Patent Classification (IPC):
**H04L 27/26** (2006.01)

(52) Cooperative Patent Classification (CPC):
**H04L 27/26**

(86) International application number:
**PCT/CN2023/138067**

(87) International publication number:
**WO 2024/125491 (20.06.2024 Gazette 2024/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.12.2022 CN 202211599020**

(71) Applicant: **Datang Mobile Communications Equipment Co., Ltd.**
**Beijing 100085 (CN)**

(72) Inventors:
• **WANG, Junwei**
  **Beijing 100085 (CN)**
• **GAO, Xuejuan**
  **Beijing 100085 (CN)**

(74) Representative: **Maiwald GmbH**
**Engineering**
**Elisenhof**
**Elisenstrasse 3**
**80335 München (DE)**

(54) **MULTI-CARRIER DATA PROCESSING METHOD AND APPARATUS**

(57) The present application provides a multi-carrier data processing method and device. The method includes: determining, by a transmitter, a modulation order and a mapping layer number of a codeword of a scheduled transport block on multiple carriers, wherein the multiple carriers are carriers in a multi-carrier serving cell; performing, by the transmitter, symbol-level processing on the codeword according to the modulation order and the mapping layer number to obtain transmission data; sending, by the transmitter, the transmission data to a receiver. For a codeword, modulation orders on the multiple carriers are the same and mapping layer numbers on the multiple carriers are the same; or, for a codeword, modulation orders on the multiple carriers are the same and mapping layer numbers on the multiple carriers are different; or, for a codeword, modulation orders on the multiple carriers are different and mapping layer numbers on the multiple carriers are different.

determining, by the transmitter, a modulation order and a mapping layer number of a codeword of a scheduled transport block on multiple carriers, where the multiple carriers are carriers in a multi-carrier serving cell (SCOMX) — 101

performing, by the transmitter, symbol-level processing on the codeword according to the modulation order and the mapping layer number to obtain transmission data — 102

sending, by the transmitter, the transmission data to a receiver — 103

**FIG. 1**

EP 4 637 093 A1

## Description

The present application claims the priority of Chinese Application No. 202211599020.6 filed on December 12, 2022, entitled "multi-carrier data processing method and device", the disclosure of which are incorporated in its entirety by reference herein.

## TECHNICAL FIELD

The present application relates to the field of communication technologies, and in particular to a multi-carrier data processing method and device.

## BACKGROUND

In current New Radio (NR) designs, one serving cell corresponds to one carrier, i.e., serving cells and carriers have a one-to-one relationship. When performing symbol-level processing on data, it is directed to a scenario where one cell corresponds to one carrier, and all scheduling parameters within one carrier have identical values.

When a user equipment requires high service transmission rates, one typical method is to employ Carrier Aggregation (CA). However, multi-carrier aggregation technology necessitates strong UE capabilities, i.e., requiring reception capabilities for multiple serving cells, while common signaling overhead is relatively large.

## SUMMARY

An object of embodiments of the present application is to provide a multi-carrier data processing method and device, which can solve the problem of large common signaling overhead in the data processing method of the related art.

One embodiment of the present application provides a multi-carrier data processing method applied to a transmitter. The method includes:

determining, by a transmitter, a modulation order and a mapping layer number of a codeword of a scheduled transport block on multiple carriers, where the multiple carriers are carriers in a multi-carrier serving cell;

performing, by the transmitter, symbol-level processing on the codeword according to the modulation order and the mapping layer number to obtain transmission data;

sending, by the transmitter, the transmission data to a receiver;

wherein for a codeword, modulation orders on the multiple carriers are the same and mapping layer numbers on the multiple carriers are the same; or,

for a codeword, modulation orders on the multiple carriers are the same and mapping layer numbers on the multiple carriers are different; or,

for a codeword, modulation orders on the multiple carriers are varied and mapping layer numbers on the multiple carriers are different.

In some embodiments, for a codeword, the mapping layer numbers of the codeword on the multiple carriers are the same;

the determining a mapping layer number of the codeword of the scheduled transport block on multiple carriers, includes:

if the multiple carriers all carry a codeword of one scheduled transport block, determining the mapping layer number of the codeword on the multiple carriers according to a first layer number indication;

if the multiple carriers all carry codewords of two scheduled transport blocks, determining the mapping layer number of the codeword of each scheduled transport block on the multiple carriers respectively according to a second layer number indication;

if a first portion of the multiple carriers carries codewords of two scheduled transport blocks and a second portion of the multiple carriers carries a codeword of one scheduled transport block, determining a mapping layer number of the codeword of each scheduled transport block on the multiple carriers according to the second layer number indication, or determining a mapping layer number of the codeword of each scheduled transport block on the multiple carriers according to the first layer number indication and the second layer number indication, respectively;

wherein the first layer number indication indicates a mapping layer number of a codeword of one scheduled transport block; and the second layer number indication indicates a sum of the mapping layer numbers corresponding to the codewords of two scheduled transport blocks.

In some embodiments, if the multiple carriers all carry a codeword of one scheduled transport block, the determining the mapping layer number of the codeword on the multiple carriers according to a first layer number indication, includes at least one of the following operations:

if the multiple carriers all carry a codeword of a first transport block, determining a mapping layer number corresponding to the codeword according to a layer number indication 1 corresponding to the first transport block; if the multiple carriers all carry a codeword of a second transport block, determining a mapping layer number corresponding to the codeword according to a layer number indication 2 corresponding to the second transport block; if a first portion of the multiple carriers carries the codeword of the first transport block, and a second portion of the multiple carriers carries the codeword of the second transport block, determining a mapping layer number of the codeword in the first portion of the multiple carriers according to the layer number indication 1 corresponding to the first transport block, and determining a mapping layer number of the codeword in the second portion of the multiple carrier according to the layer number indication 2 corresponding to the second transport block.

In some embodiments, if the multiple carriers all carry codewords of two scheduled transport blocks, the determining a mapping layer number of the codeword of each scheduled transport block on the multiple carriers respectively according to a second layer number indication, includes:

according to the second layer number indication, determining that in the multiple carriers, the mapping layer number corresponding to the codeword of the first transport block is a first value, and the mapping layer number corresponding to the codeword of the second transport block is a second value; wherein a value indicated by the second layer number is a sum of the first value and the second value.

In some embodiments, if a first portion of the multiple carriers carries codewords of two scheduled transport blocks and a second portion of the multiple carriers carries a codeword of one scheduled transport block, determining a mapping layer number of the codeword of each scheduled transport block on the multiple carriers according to the second layer number indication, includes:

if the first portion of the multiple carriers carries the codeword of the first transport block and the codeword of the second transport block and the second portion of the multiple carrier carries the codeword of the first transport block, determining, according to the second layer number indication, the mapping layer number of the codeword of the first transport block on the first portion of the multiple carriers and the second portion of the multiple carriers is a third value, and the mapping layer number of the codeword of the second transport block on the first portion of the multiple carriers is a fourth value; wherein a value of the second layer number indication is a sum of the third value and the fourth value.

In some embodiments, if a first portion of the multiple carriers carries codewords of two scheduled transport blocks and a second portion of the multiple carriers carries a codeword of one scheduled transport block, determining a mapping layer number of the codeword of each scheduled transport block on the multiple carriers according to the first layer number indication and the second layer number indication, respectively, includes:

if the first portion of the multiple carrier carries the codeword of the first transport block and the codeword of the second transport block and the second portion of the multiple carrier carries the codeword of the first transport block, according to the first layer number indication, determining that the mapping layer number of the codeword of the first transport block on the first portion of the multiple carrier and the second portion of the multiple carrier is a fifth value; and according to the second layer number indication, determine that the mapping layer number of the codeword of the second transport block on the first portion of the multiple carrier is a sixth value; wherein a value of the second layer number indication is a sum of the fifth value and the sixth value.

In some embodiments, the method further includes:

receiving scheduling signaling sent by the receiver; wherein the scheduling signaling includes the first layer number indication and/or the second layer number indication; where the transmitter is a user equipment and the receiver is a network device.

In some embodiments, the performing, by the transmitter, symbol-level processing on the codeword according to the modulation order and the mapping layer number to obtain transmission data, includes:

according to the modulation order, modulating bit information of all scheduled carriers of the codeword to obtain modulation symbols corresponding to the codeword;
according to the mapping layer number, performing layer mapping processing on the modulation symbols to obtain a first mapping result;
performing antenna port mapping processing on the first mapping result to obtain a second mapping result;
performing resource mapping processing on the second mapping result to obtain the transmission data.

In some embodiments, when one codeword has the same modulation order and the same mapping layer number on the multiple carriers, the performing resource mapping processing on the second mapping result to obtain the transmission data, includes:

determining a starting position and the number of symbols on each carrier and each time domain symbol, for performing resource mapping on the second mapping result;
according to the starting position and the number of symbols, performing resource mapping on the second mapping result corresponding to each antenna port to obtain the transmission data.

In some embodiments, the performing resource mapping on the second mapping result corresponding to each antenna port to obtain the transmission data, includes:

for the second mapping result corresponding to each antenna port, first performing frequency domain resource mapping, and then performing symbol resource mapping;
wherein the frequency domain resource include resource unit (RE), the symbol resources include time domain symbol resources.

In some embodiments, for the second mapping result corresponding to each antenna port, first performing frequency domain resource mapping, and then performing symbol resource mapping, includes:

step 1: for the second mapping result corresponding to each antenna port, performing frequency domain resource mapping on the time domain symbol $l$ according to a first carrier order;
step 2: when resource mapping of all frequency domain resources on the time domain symbol $l$ is completed, performing frequency domain resource mapping on the time domain symbol $l + 1$ according to the first carrier order until resource mapping of all frequency domain resources on the time domain symbol $l + 1$ is completed;
step 3: repeating the step 2 until the second mapping result is mapped to all time domain symbols.

In some embodiments, the first carrier order comprises one of the following:

an order of carrier indexes from low to high;
an order of carrier indexes from high to low;
preconfigured carrier order.

In some embodiments, when one codeword has the same modulation order and different mapping layer numbers on the multiple carriers, according to the mapping layer number, performing layer mapping processing on the modulation symbols to obtain a first mapping result, includes:

determining a starting modulation symbol and the number of symbols in each carrier and each time domain symbol for performing layer mapping processing on the modulation symbols;
according to the starting modulation symbol and the number of symbols, performing layer mapping on the modulation symbols to obtain the first mapping result.

In some embodiments, when one codeword has different modulation orders and different mapping layer numbers on the multiple carriers, according to the modulation order, modulating bit information of all scheduled carriers of the codeword to obtain modulation symbols corresponding to the codeword, includes:

determining a starting bit position and bit length for modulating the bit information of the scheduled carrier, on each carrier and each time-domain symbol;
performing modulation processing on the bit information according to the starting bit position and bit length to obtain the modulation symbols.

In some embodiments, performing, by the transmitter, symbol-level processing on the codeword according to the modulation order and the mapping layer number to obtain transmission data, includes:

> determining a starting position and data information amount of a data information sequence of the codeword on each carrier or each time-domain symbol;
> performing symbol-level processing on the codeword according to the starting position and the data information amount to obtain the transmission data;
> wherein the data information sequence is input data of the symbol-level processing.

In some embodiments, the codeword includes a plurality of data information sequences;

> each data information sequence includes: data information of the codeword on a time domain symbol of a carrier; or,
> each data information sequence includes: data information of the codeword on all time domain symbols of a carrier.

One embodiment of the present application provides a multi-carrier data processing method, applied to a receiver. The method includes:

> receiving, by a receiver, transmission data, wherein the transmission data is data obtained by a transmitter through performing symbol-level processing on a codeword of a scheduled transport block;
> determining a modulation order and a mapping layer number of the codeword on multiple carriers, wherein the multiple carriers are carriers in a multi-carrier serving cell;
> de-mapping and demodulating the transmission data according to the modulation order and the mapping layer number to obtain bit information of the codeword;
> wherein for a codeword, modulation orders on the multiple carriers are the same and mapping layer numbers on the multiple carriers are the same; or,
> for a codeword, modulation orders on the multiple carriers are the same and mapping layer numbers on the multiple carriers are different; or,
> for a codeword, modulation orders on the multiple carriers are different and mapping layer numbers on the multiple carriers are different.

In some embodiments, for a codeword, the mapping layer numbers of the codeword on the multiple carriers are the same; and determining the mapping layer number of the codeword of the scheduled transport block on the multiple carriers includes at least one of the following:

> if the multiple carriers all carry a codeword of one scheduled transport block, determining the mapping layer number of the codeword on the multiple carriers according to a first layer number indication;
> if the multiple carriers all carry codewords of two scheduled transport blocks, determining the mapping layer number of the codeword of each scheduled transport block on the multiple carriers respectively according to a second layer number indication;
> if a first portion of the multiple carriers carries codewords of two scheduled transport blocks and a second portion of the multiple carriers carries a codeword of one scheduled transport block, then determining the mapping layer number of the codeword of each scheduled transport block on the multiple carriers according to the second layer number indication, or determining the mapping layer number of the codeword of each scheduled transport block on the multiple carriers according to the first layer number indication and the second layer number indication, respectively;
> where the first layer number indication indicates the mapping layer number of a codeword of a scheduled transport block; and the second layer number indication indicates a sum of the mapping layer numbers corresponding to the codewords of two scheduled transport blocks.

In some embodiments, if the multiple carriers all carry a codeword of one scheduled transport block, determining the mapping layer number of the codeword on the multiple carriers according to the first layer number indication includes at least one of the following:

> if the multiple carriers all carry a codeword of a first transport block, determining a mapping layer number corresponding to the codeword according to a layer number indication 1 corresponding to the first transport block;
> if the multiple carriers all carry a codeword of a second transport block, determining a mapping layer number corresponding to the codeword according to a layer number indication 2 corresponding to the second transport block;
> if a first portion of the multiple carriers carries the codeword of the first transport block, and a second portion of the multiple carriers carries the codeword of the second transport block, determining a mapping layer number of the codeword in the first portion of the multiple carriers according to the layer number indication 1 corresponding to the first transport block, and determining a mapping layer number of the codeword in the second portion of the multiple carrier according to the layer number indication 2 corresponding to the second transport block.

In some embodiments, if the multiple carriers all carry codewords of two scheduled transport blocks, determining the mapping layer number of the codeword of each scheduled transport block on the multiple carriers according to the second layer number indication, includes:

according to the second layer number indication, determining that in the multiple carriers, the mapping layer number corresponding to the codeword of the first transport block is a first value, and the mapping layer number corresponding to the codeword of the second transport block is a second value;
where a value indicated by the second layer number is a sum of the first value and the second value.

In some embodiments, if a first portion of the multiple carriers carries codewords of two scheduled transport blocks, and a second portion of the multiple carriers carries a codeword of one scheduled transport block, then determining the mapping layer number of each scheduled transmission codeword on the multiple carriers according to the second layer number indication, includes:
if the first portion of the multiple carriers carries the codeword of the first transport block and the codeword of the second transport block and the second portion of the multiple carrier carries the codeword of the first transport block, determining, according to the second layer number indication, the mapping layer number of the codeword of the first transport block on the first portion of the multiple carriers and the second portion of the multiple carriers is a third value, and the mapping layer number of the codeword of the second transport block on the first portion of the multiple carriers is a fourth value; where a value of the second layer number indication is a sum of the third value and the fourth value.

In some embodiments, if the first portion of the multiple carriers carries codewords of two scheduled transport blocks and the second portion of the multiple carriers carries a codeword of one scheduled transport block, then determining the mapping layer number of the codeword of each scheduled transport block on the multiple carriers according to the first layer number indication and the second layer number indication, includes:
if the first portion of the multiple carrier carries the codeword of the first transport block and the codeword of the second transport block and the second portion of the multiple carrier carries the codeword of the first transport block, then according to the first layer number indication, determining that the mapping layer number of the codeword of the first transport block on the first portion of the multiple carrier and the second portion of the multiple carrier is a fifth value; and according to the second layer number indication, determining that the mapping layer number of the codeword of the second transport block on the first portion of the multiple carrier is a sixth value; where a value of the second layer number indication is a sum of the fifth value and the sixth value.

In some embodiments, the method further includes:

receiving scheduling signaling sent by the transmitter, wherein the scheduling signaling includes the first layer number indication and/or the second layer number indication,
wherein the transmitter is a network device, and the receiver is a user equipment.

In some embodiments, the de-mapping and demodulating the transmission data according to the modulation order and the mapping layer number to obtain bit information of the codeword, includes:

performing resource de-mapping on the transmission data to obtain a second mapping result before resource mapping;
performing antenna port de-mapping on the second mapping result to obtain a first mapping result before antenna port mapping;
performing layer de-mapping on the first mapping result according to the mapping layer number to obtain modulation symbols before layer mapping;
performing quadrature amplitude modulation (QAM) demodulation on the modulation symbols according to the modulation order to obtain bit information of the scheduled codeword om all scheduled carriers.

In some embodiments, the de-mapping and demodulating the transmission data according to the modulation order and the mapping layer number to obtain bit information of the codeword, includes:

determining a starting position and data information amount of a data information sequence of the codeword in each carrier or each time domain symbol;
according to the starting position and the data information amount, de-mapping and demodulating the transmission data to obtain bit information of the scheduled codeword.

In some embodiments, the codeword includes a plurality of data information sequences;

each data information sequence includes: data information of the codeword on a time domain symbol of a carrier; or,
each data information sequence includes: data information of the codeword on all time domain symbols of a carrier.

One embodiment of the present application provides a multi-carrier data processing device, applied to a transmitter, including: a memory, a transceiver, and a processor;
wherein the memory is used to store a computer program; the transceiver is used to send and receive data under the control of the processor; the processor is used to read the computer program in the memory and perform the following operations:

determining a modulation order and a mapping layer number of a codeword of a scheduled transport block on multiple carriers, wherein the multiple carriers are carriers in a multi-carrier serving cell;
performing symbol-level processing on the codeword according to the modulation order and the mapping layer number to obtain transmission data;
sending the transmission data to a receiver;
wherein for a codeword, modulation orders on the multiple carriers are the same and mapping layer numbers on the multiple carriers are the same; or,
for a codeword, modulation orders on the multiple carriers are the same and mapping layer numbers on the multiple carriers are different; or,
for a codeword, modulation orders on the multiple carriers are different and mapping layer numbers on the multiple carriers are different.

In some embodiments, for a codeword, the mapping layer numbers of the codeword on the multiple carriers are the same;
the processor is configured to read the computer program in the memory and perform at least one of the following operations:

if the multiple carriers all carry a codeword of one scheduled transport block, determining the mapping layer number of the codeword on the multiple carriers according to a first layer number indication;
if the multiple carriers all carry codewords of two scheduled transport blocks, determining the mapping layer number of the codeword of each scheduled transport block on the multiple carriers respectively according to a second layer number indication;
if a first portion of the multiple carriers carries codewords of two scheduled transport blocks and a second portion of the multiple carriers carries a codeword of one scheduled transport block, determining a mapping layer number of the codeword of each scheduled transport block on the multiple carriers according to the second layer number indication, or determining a mapping layer number of the codeword of each scheduled transport block on the multiple carriers according to the first layer number indication and the second layer number indication, respectively;
wherein the first layer number indication indicates a mapping layer number of a codeword of one scheduled transport block; and the second layer number indication indicates a sum of the mapping layer numbers corresponding to the codewords of two scheduled transport blocks.

In some embodiments, the processor is configured to read the computer program in the memory and perform at least one of the following operations:

if the multiple carriers all carry a codeword of a first transport block, determining a mapping layer number corresponding to the codeword according to a layer number indication 1 corresponding to the first transport block;
if the multiple carriers all carry a codeword of a second transport block, determining a mapping layer number corresponding to the codeword according to a layer number indication 2 corresponding to the second transport block;
if a first portion of the multiple carriers carries the codeword of the first transport block, and a second portion of the multiple carriers carries the codeword of the second transport block, determining a mapping layer number of the codeword in the first portion of the multiple carriers according to the layer number indication 1 corresponding to the first transport block, and determining a mapping layer number of the codeword in the second portion of the multiple carrier according to the layer number indication 2 corresponding to the second transport block.

In some embodiments, the processor is configured to read the computer program in the memory and perform at least one of the following operations:

according to the second layer number indication, determining that in the multiple carriers, the mapping layer number corresponding to the codeword of the first transport block is a first value, and the mapping layer number corresponding to the codeword of the second transport block is a second value;
wherein a value indicated by the second layer number is a sum of the first value and the second value.

In some embodiments, the processor is configured to read the computer program in the memory and perform at least one of the following operations:

if the first portion of the multiple carriers carries the codeword of the first transport block and the codeword of the second transport block and the second portion of the multiple carrier carries the codeword of the first transport block, determining, according to the second layer number indication, the mapping layer number of the codeword of the first transport block on the first portion of the multiple carriers and the second portion of the multiple carriers is a third value, and the mapping layer number of the codeword of the second transport block on the first portion of the multiple carriers is a fourth value;
wherein a value of the second layer number indication is a sum of the third value and the fourth value.

In some embodiments, the processor is configured to read the computer program in the memory and perform at least one of the following operations:

if the first portion of the multiple carrier carries the codeword of the first transport block and the codeword of the second transport block and the second portion of the multiple carrier carries the codeword of the first transport block, according to the first layer number indication, determining that the mapping layer number of the codeword of the first transport block on the first portion of the multiple carrier and the second portion of the multiple carrier is a fifth value; and according to the second layer number indication, determine that the mapping layer number of the codeword of the second transport block on the first portion of the multiple carrier is a sixth value;
wherein a value of the second layer number indication is a sum of the fifth value and the sixth value.

In some embodiments, the processor is configured to read the computer program in the memory and perform at least one of the following operations:

receiving scheduling signaling sent by the receiver; wherein the scheduling signaling includes the first layer number indication and/or the second layer number indication;
where the transmitter is a user equipment and the receiver is a network device.

In some embodiments, the processor is configured to read the computer program in the memory and perform at least one of the following operations:

according to the modulation order, modulating bit information of all scheduled carriers of the codeword to obtain modulation symbols corresponding to the codeword;
according to the mapping layer number, performing layer mapping processing on the modulation symbols to obtain a first mapping result;
performing antenna port mapping processing on the first mapping result to obtain a second mapping result;
performing resource mapping processing on the second mapping result to obtain the transmission data.

In some embodiments, when one codeword has the same modulation order and the same mapping layer number on the multiple carriers, the processor is configured to read the computer program in the memory and perform at least one of the following operations:

determining a starting position and the number of symbols on each carrier and each time domain symbol, for performing resource mapping on the second mapping result;
according to the starting position and the number of symbols, performing resource mapping on the second mapping result corresponding to each antenna port to obtain the transmission data.

In some embodiments, the processor is configured to read the computer program in the memory and perform at least one of the following operations:

for the second mapping result corresponding to each antenna port, first performing frequency domain resource mapping, and then performing symbol resource mapping;
wherein the frequency domain resource include resource unit (RE), the symbol resources include time domain symbol resources.

In some embodiments, the processor is configured to read the computer program in the memory and perform at least one of the following operations:

step 1: for the second mapping result corresponding to each antenna port, performing frequency domain resource mapping on the time domain symbol $l$ according to a first carrier order;
step 2: when resource mapping of all frequency domain resources on the time domain symbol $l$ is completed, performing frequency domain resource mapping on the time domain symbol $l + 1$ according to the first carrier order until resource mapping of all frequency domain resources on the time domain symbol $l + 1$ is completed;
step 3: repeating the step 2 until the second mapping result is mapped to all time domain symbols.

In some embodiments, the first carrier order comprises one of the following:

an order of carrier indexes from low to high;
an order of carrier indexes from high to low;
preconfigured carrier order.

In some embodiments, when one codeword has the same modulation order and different mapping layer numbers on the multiple carriers, the processor is configured to read the computer program in the memory and perform at least one of the following operations:

determining a starting modulation symbol and the number of symbols in each carrier and each time domain symbol for performing layer mapping processing on the modulation symbols;
according to the starting modulation symbol and the number of symbols, performing layer mapping on the modulation symbols to obtain the first mapping result.

In some embodiments, when one codeword has different modulation orders and different mapping layer numbers on the multiple carriers, the processor is configured to read the computer program in the memory and perform at least one of the following operations:

determining a starting bit position and bit length for modulating the bit information of the scheduled carrier, on each carrier and each time-domain symbol;
performing modulation processing on the bit information according to the starting bit position and bit length to obtain the modulation symbols.

In some embodiments, the processor is configured to read the computer program in the memory and perform at least one of the following operations:

determining a starting position and data information amount of a data information sequence of the codeword on each carrier or each time-domain symbol;
performing symbol-level processing on the codeword according to the starting position and the data information amount to obtain the transmission data;
wherein the data information sequence is input data of the symbol-level processing.

In some embodiments, the codeword includes a plurality of data information sequences;

each data information sequence includes: data information of the codeword on a time domain symbol of a carrier;
or,
each data information sequence includes: data information of the codeword on all time domain symbols of a carrier.

One embodiment of the present application provides a multi-carrier data processing device, applied to a receiver, including: a memory, a transceiver, and a processor;
wherein the memory is used to store a computer program; the transceiver is used to send and receive data under the control of the processor; the processor is used to read the computer program in the memory and perform the following operations:

receiving transmission data, wherein the transmission data is data obtained by a transmitter through performing symbol-level processing on a codeword of a scheduled transport block;

determining a modulation order and a mapping layer number of the codeword on multiple carriers, wherein the multiple carriers are carriers in a multi-carrier serving cell;

de-mapping and demodulating the transmission data according to the modulation order and the mapping layer number to obtain bit information of the codeword;

wherein for a codeword, modulation orders on the multiple carriers are the same and mapping layer numbers on the multiple carriers are the same; or,

for a codeword, modulation orders on the multiple carriers are the same and mapping layer numbers on the multiple carriers are different; or,

for a codeword, modulation orders on the multiple carriers are different and mapping layer numbers on the multiple carriers are different.

In some embodiments, for a codeword, the mapping layer numbers of the codeword on the multiple carriers are the same; the processor is used to read the computer program in the memory and perform at least one of the following:

if the multiple carriers all carry a codeword of one scheduled transport block, determining the mapping layer number of the codeword on the multiple carriers according to a first layer number indication;

if the multiple carriers all carry codewords of two scheduled transport blocks, determining the mapping layer number of the codeword of each scheduled transport block on the multiple carriers respectively according to a second layer number indication;

if a first portion of the multiple carriers carries codewords of two scheduled transport blocks and a second portion of the multiple carriers carries a codeword of one scheduled transport block, then determining the mapping layer number of the codeword of each scheduled transport block on the multiple carriers according to the second layer number indication, or determining the mapping layer number of the codeword of each scheduled transport block on the multiple carriers according to the first layer number indication and the second layer number indication, respectively;

where the first layer number indication indicates the mapping layer number of a codeword of a scheduled transport block; and the second layer number indication indicates a sum of the mapping layer numbers corresponding to the codewords of two scheduled transport blocks.

In some embodiments, the processor is used to read the computer program in the memory and perform at least one of the following:

if the multiple carriers all carry a codeword of a first transport block, determining a mapping layer number corresponding to the codeword according to a layer number indication 1 corresponding to the first transport block;

if the multiple carriers all carry a codeword of a second transport block, determining a mapping layer number corresponding to the codeword according to a layer number indication 2 corresponding to the second transport block;

if a first portion of the multiple carriers carries the codeword of the first transport block, and a second portion of the multiple carriers carries the codeword of the second transport block, determining a mapping layer number of the codeword in the first portion of the multiple carriers according to the layer number indication 1 corresponding to the first transport block, and determining a mapping layer number of the codeword in the second portion of the multiple carrier according to the layer number indication 2 corresponding to the second transport block.

In some embodiments, the processor is used to read the computer program in the memory and perform the following operations:

according to the second layer number indication, determining that in the multiple carriers, the mapping layer number corresponding to the codeword of the first transport block is a first value, and the mapping layer number corresponding to the codeword of the second transport block is a second value;

where a value indicated by the second layer number is a sum of the first value and the second value.

In some embodiments, the processor is used to read the computer program in the memory and perform the following operations:

if the first portion of the multiple carriers carries the codeword of the first transport block and the codeword of the second transport block and the second portion of the multiple carrier carries the codeword of the first transport block, determining, according to the second layer number indication, the mapping layer number of the codeword of the first transport block on the first portion of the multiple carriers and the second portion of the multiple carriers is a third value, and the mapping layer number of the codeword of the second transport block on the first portion of the multiple carriers is a fourth value; where a value of the second layer number indication is a sum of the third value and the fourth value.

In some embodiments, the processor is used to read the computer program in the memory and perform the following operations:

if the first portion of the multiple carrier carries the codeword of the first transport block and the codeword of the second transport block and the second portion of the multiple carrier carries the codeword of the first transport block, then according to the first layer number indication, determining that the mapping layer number of the codeword of the first transport block on the first portion of the multiple carrier and the second portion of the multiple carrier is a fifth value; and according to the second layer number indication, determining that the mapping layer number of the codeword of the second transport block on the first portion of the multiple carrier is a sixth value; where a value of the second layer number indication is a sum of the fifth value and the sixth value.

In some embodiments, the processor is used to read the computer program in the memory and perform the following operations:

receiving scheduling signaling sent by the transmitter, wherein the scheduling signaling includes the first layer number indication and/or the second layer number indication,
wherein the transmitter is a network device, and the receiver is a user equipment.

In some embodiments, the processor is used to read the computer program in the memory and perform the following operations:

performing resource de-mapping on the transmission data to obtain a second mapping result before resource mapping;
performing antenna port de-mapping on the second mapping result to obtain a first mapping result before antenna port mapping;
performing layer de-mapping on the first mapping result according to the mapping layer number to obtain modulation symbols before layer mapping;
performing quadrature amplitude modulation (QAM) demodulation on the modulation symbols according to the modulation order to obtain bit information of the scheduled codeword om all scheduled carriers.

In some embodiments, the processor is used to read the computer program in the memory and perform the following operations:

determining a starting position and data information amount of a data information sequence of the codeword in each carrier or each time domain symbol;
according to the starting position and the data information amount, de-mapping and demodulating the transmission data to obtain bit information of the scheduled codeword.

In some embodiments, the codeword includes a plurality of data information sequences;

each data information sequence includes: data information of the codeword on a time domain symbol of a carrier; or,
each data information sequence includes: data information of the codeword on all time domain symbols of a carrier.

One embodiment of the present application provides a multi-carrier data processing device, applied to a transmitter, including:

a first determining unit configured to determine a modulation order and a mapping layer number of a codeword of a scheduled transport block on multiple carriers, wherein the multiple carriers are carriers in a multi-carrier serving cell;
a first processing unit configured to perform symbol-level processing on the codeword according to the modulation order and the mapping layer number to obtain transmission data;
a first sending unit configured to send the transmission data to a receiver;
wherein for a codeword, modulation orders on the multiple carriers are the same and mapping layer numbers on the multiple carriers are the same; or,
for a codeword, modulation orders on the multiple carriers are the same and mapping layer numbers on the multiple carriers are different; or,
for a codeword, modulation orders on the multiple carriers are different and mapping layer numbers on the multiple carriers are different.

One embodiment of the present application provides a multi-carrier data processing device, applied to a receiver, including:

a first receiving unit configured to receive transmission data, wherein the transmission data is data obtained by a transmitter through performing symbol-level processing on a codeword of a scheduled transport block;
a second determining unit configured to determine a modulation order and a mapping layer number of the codeword on multiple carriers, wherein the multiple carriers are carriers in a multi-carrier serving cell;
a second processing unit configured to de-map and demodulate the transmission data according to the modulation order and the mapping layer number to obtain bit information of the codeword;
wherein for a codeword, modulation orders on the multiple carriers are the same and mapping layer numbers on the multiple carriers are the same; or,
for a codeword, modulation orders on the multiple carriers are the same and mapping layer numbers on the multiple carriers are different; or,
for a codeword, modulation orders on the multiple carriers are different and mapping layer numbers on the multiple carriers are different.

One embodiment of the present application provides a processor-readable storage medium, including a computer program stored thereon; wherein the computer program is used to cause a processor to execute the above multi-carrier data processing method.
The aforementioned technical solution of the present application has at least the following beneficial effects.
In the embodiment of the present application, when data transmission is performed based on multiple carriers, the modulation order and the mapping layer number of the codeword of the scheduled transport block on the multiple carriers are determined; symbol-level processing is performed on the codeword according to the modulation order and the mapping layer number to obtain transmission data. The embodiment of the present application provides a method for symbol-level processing under SCOMX, and realizes the processing technical solution when the modulation order and/or layer indication of different carriers are the same or different, thereby ensuring the scheduling flexibility. Appropriate transmission parameters are selected for each carrier according to actual channel conditions, which can reduce signaling overhead during data processing. In addition, the present application makes minor modifications to the existing protocol and can minimize complexity of the existing user equipment.

BRIEF DESCRIPTION OF THE DRAWINGS

FIG. 1 is a first schematic flowchart of a multi-carrier data processing method according to an embodiment of the present application;
FIG. 2 is a schematic diagram of a SCOMX according to an embodiment of the present application;
FIG. 3 is a schematic diagram showing layer indication of different carriers of a SCOMX serving cell according to an embodiment of the present application;
FIG. 4 is a first schematic flowchart of symbol-level processing according to an embodiment of the present application;
FIG. 5 is a first schematic diagram showing mapping of multiple scheduled carriers and resources according to an embodiment of the present application;
FIG. 6 is a first schematic diagram showing resource mapping of antenna ports according to an embodiment of the present application;
FIG. 7 is a second schematic diagram showing resource mapping of antenna ports according to an embodiment of the present application;
FIG. 8 is a second schematic flowchart of symbol-level processing according to an embodiment of the present application;
FIG. 9 is a schematic diagram showing resources that can be mapped to different carriers according to an embodiment of the present application;
FIG. 10 is a third schematic flowchart of symbol-level processing according to an embodiment of the present application;
FIG. 11 is a first schematic diagram of determining a to-be-processed data information location according to an embodiment of the present application;
FIG. 12 is a second schematic diagram of determining a to-be-processed data information location according to an embodiment of the present application;

FIG. 13 is a second schematic diagram showing mapping of multiple scheduled carriers and resources according to an embodiment of the present application;

FIG. 14 is a second schematic flowchart of a multi-carrier data processing method according to an embodiment of the present application;

FIG. 15 is a first schematic diagram of a multi-carrier data processing device according to an embodiment of the present application;

FIG. 16 is a second schematic diagram of a multi-carrier data processing device according to an embodiment of the present application;

FIG. 17 is a third schematic diagram of a multi-carrier data processing device according to an embodiment of the present application; and

FIG. 18 is a fourth schematic diagram of a multi-carrier data processing device according to an embodiment of the present application.

## DETAILED DESCRIPTION

In order to make the technical problems to be solved, technical solutions and advantages of the present application clearer, detailed description will be provided below in conjunction with the attached drawings and specific embodiments. In the following description, specific details such as specific configurations and components are provided only to help comprehensively understand the embodiments of the present application. Therefore, those skilled in the art should understand that various changes and modifications can be made to the embodiments described herein without departing from the scope and spirit of the present application. Additionally, for the sake of clarity and conciseness, descriptions of known functions and constructions are omitted.

It should be understood that the terms "an embodiment" or "one embodiment" mentioned throughout this specification mean that a particular feature, structure, or characteristic related to this embodiment is included in at least one embodiment of the present application. Therefore, the appearance of "in one embodiment" or "in an embodiment" at various places throughout this specification does not necessarily refer to the same embodiment. Moreover, these particular features, structures, or characteristics may be combined in any suitable manner in one or more embodiments.

In various embodiments of the present application, it should be understood that numerical orders of processes described below does not imply a specific sequence of execution. The execution order of each process should be determined based on its function and inherent logic, and should not impose any limitations on the implementation process of the embodiments of the present application.

In the embodiment of the present application, the term "and/or" describes association relationship of associated objects, indicating that there can be three relationships, for example, A and/or B means that there are three situations: there is A alone, there are both A and B, there is B alone. The character "/" generally indicates that before and after related objects are in an "or" relationship.

In the embodiment of the present application, the term "plurality" refers to two or more than two, and other quantifiers are similar.

The technical solutions in the embodiments of the present application will be clearly and completely described below with reference to the accompanying drawings in the embodiments of the present application. Obviously, the described embodiments are only some embodiments of the present application, rather than all embodiments. Based on the embodiments in the present application, all other embodiments obtained by those of ordinary skill in the art without creative efforts fall within the scope of protection of the present application.

The embodiments of the present application provide a multi-carrier data processing method and device, which can solve the problem of large common signaling overhead in the data processing method of the related art.

The method and the device are based on the same application concept. Since the principles of solving problems in the method and the device are similar, reference may be made to each other for implementations of the device and the method, the repetition of which is not further provided herein.

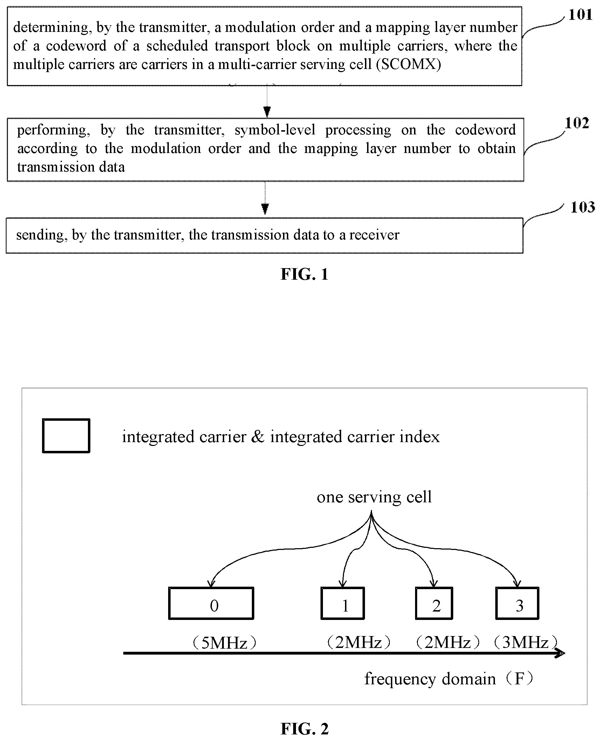

As shown in FIG. 1, one embodiment of the present application provides a multi-carrier data processing method, which is applied to a transmitter and specifically includes the following steps:

Step 101: determining, by the transmitter, a modulation order and a mapping layer number of a codeword of a scheduled transport block on multiple carriers, where the multiple carriers are carriers in a multi-carrier serving cell (SCOMX);

Step 102: performing, by the transmitter, symbol-level processing on the codeword according to the modulation order and the mapping layer number to obtain transmission data;

Step 103: sending, by the transmitter, the transmission data to a receiver.

For a codeword, the modulation orders and the mapping layer numbers on the multiple carriers are the same; or,

for a codeword, the modulation orders on the multiple carriers are the same and the mapping layer numbers are different; or,

for a codeword, the modulation orders and the mapping layer numbers on the multiple carriers are different.

In this embodiment, the transmitter is a data transmitter, which can be a user equipment or a network device (such as a base station); the receiver is a data receiver, which can be a network device or a user equipment. For uplink transmission, the transmitter is a user equipment, and the receiver is a network device; for downlink transmission, the transmitter is a network device, and the receiver is a user equipment. The network device schedules uplink transmission or downlink transmission. If the network device schedules multiple carriers of SCOMX for data transmission, it is necessary to indicate the modulation order and mapping layer number of the codeword of the scheduled transport block on multiple carriers, so that the transmitter performs symbol-level processing on to-be-transmitted data based on the modulation order and mapping layer number.

SCOMX means that: from the perspective of high-level service management, it manages only one serving cell, but data of the serving cell can be transmitted on multiple carriers, that is, resources of the physical layer correspond to multiple carriers. The carriers belonging to one serving cell can be called integrated carriers, as shown in FIG. 2.

The symbol-level processing may include: modulation process of bit information, layer mapping process, antenna port mapping process, and resource mapping process.

The modulation order and mapping layer number configured by the network device can include multiple situations:

1) for a codeword, values of modulation orders of multiple scheduled carriers are the same, and mapping layer numbers of layer indications are also the same;
2) values of modulation orders of multiple scheduled carriers are the same, but values of layer indications are different;
3) values of modulation orders of multiple scheduled carriers may be different, and values of layer indications may also be different.

It is to be noted that in the embodiments of the present application, the multiple carriers may refer to multiple different frequency domain resources. In some embodiments, in addition to resources in the frequency domain dimension, multiple carriers may also refer to different time domain resources, spatial domain resources, code domain resources, and other different dimensional resources.

In the embodiment of the present application, when data transmission is performed based on multiple carriers, the modulation order and the mapping layer number of the codeword of the scheduled transport block on the multiple carriers are determined; symbol-level processing is performed on the codeword according to the modulation order and the mapping layer number to obtain transmission data. The embodiment of the present application provides a method for symbol-level processing under SCOMX, and realizes the processing technical solution when the modulation order and/or layer indication of different carriers are the same or different, thereby ensuring the scheduling flexibility. Appropriate transmission parameters are selected for each carrier according to actual channel conditions, which can reduce signaling overhead during data processing. In addition, the present application makes minor modifications to the existing protocol and can minimize complexity of the existing user equipment.

In some embodiments, the modulation order of the modulation process is described below.

According to a modulation order $Q_m$ indicated by the network device, multiple bits of an input codeword q are modulated, and modulation orders of multiple scheduled carriers can be the same or different.

a: parameter input during modulation process: $\tilde{b}^{(q)}(0), \ldots, \tilde{b}^{(q)}(M_{\text{bit}}^{(q)} - 1)$ ;

For each codeword q, assuming that bit-level processing (i.e., scrambled by a scrambling code, after channel coding processing) output is used as an input of the modulation process, its bit information is: $\tilde{b}^{(q)}(0), \ldots, \tilde{b}^{(q)}(M_{\text{bit}}^{(q)} - 1)$,

where $M_{\text{bit}}^{(q)}$ represents a total number of input bits. For data transmission on multiple carriers in a multi-carrier service cell, $M_{\text{bit}}^{(q)}$ represents a sum of bit information to be transmitted on all scheduled carriers, and $M_{\text{bit}}^{(q)}$ bits of information are transmitted on all scheduled carriers, and each scheduled carrier only transmits a part of the information.

b: modulation process and output of the modulation process:

the user equipment modulates the input bit information according to the value of the modulation order $Q_m$ indicated by the network device. The corresponding relationship between the relevant $Q_m$ and the modulation scheme is shown in Table 1:

Table 1: modulation mode

| modulation scheme | modulation order | remark |
|---|---|---|
| Quadrature Phase Shift Keying (QPSK) | 2 | two input bits, generating one modulation symbol d$^{(q)}$ |
| 16QAM | 4 | four input bits, generating one modulation symbol d$^{(q)}$ |
| 64QAM | 6 | six input bits, generating one modulation symbol d$^{(q)}$ |
| 256QAM | 8 | eight input bits, generating one modulation symbol d$^{(q)}$ |
| 1024QAM | 10 | ten input bits, generating one modulation symbol d$^{(q)}$ |

For the multi-carrier modulation process, the values of $Q_m$ can be the same or different. If the modulation orders of the codeword on multiple carriers are the same, there is one value of $Q_m$; if the modulation orders of the codeword one multiple carriers are different, there are multiple values of $Q_m$.

The output of the modulation process is: : $d^{(q)}(0), ..., d^{(q)}(M_{\text{symb}}^{(q)} - 1)$, where $M_{\text{symb}}^{(q)}$ represents the number of symbols output by the modulation process. Each output symbol is a complex-valued modulation symbol. For scheduling on multiple carriers, $d^{(q)}(0), ..., d^{(q)}(M_{\text{symb}}^{(q)} - 1)$ output by the modulation process is a sum of symbols to be sent on all scheduled carriers, that is, on the scheduled multiple carriers, for transport blocks (TB) of each codeword q, the modulation process can be completed at one time. Accordingly, the sum of the number of modulation symbols transmitted on all scheduled carriers is $M_{\text{symb}}^{(q)}$. The output of the modulation process is used as input for the layer mapping process.

When one downlink control information (DCI) can schedule up to two codewords (such as q0 and q1), a maximum of two TBs, TB1 and TB2, can be transmitted. During the scheduling process:

1) if DCI schedules two TBs, that is, both TBs are enabled, then in the symbol-level processing, q0 represents data of TB1, and accordingly, a layer number indication and $Q_m$ indication related to q0 are also indication parameters of TB1. q1 represents data of TB2, and accordingly, the layer number indication and $Q_m$ indication related to q1 are also indication parameters of TB2. In this case, the TB of codeword q0 refers to TB1; the TB of codeword q1 refers to TB2. Correspondingly, the codeword of TB1 refers to codeword q0, and the codeword of TB2 refers to codeword q1.

2) if DCI schedules one TB, and it is TB1, that is, TB1 is enabled and TB2 is disabled, then in the symbol-level processing, q0 represents data of TB1, and accordingly, the layer number indication and $Q_m$ indication related to q0 are also indication parameters of TB1. In this case, the TB of codeword q0 refers to TB1. The codeword of TB1 refers to codeword q0.

3) if DCI schedules one TB, and it is TB2, that is, TB2 is enabled and TB1 is disabled, then in the symbol-level processing, q0 represents data of TB2, and accordingly, the layer indication and $Q_m$ indication related to q0 are also indication parameters of TB2. In this case, the TB of codeword q0 refers to TB2. The codeword of TB2 refers to codeword q0.

For example: q0TB1: indicates q0 in the symbol-level processing, which represents the data of TB1;

q0TB2: indicates q0 in the symbol-level processing, which represents the data of TB2;
q1TB1: indicates q1 in the symbol-level processing, which represents the data of TB1;
q1TB2: represents q1 in the symbol-level processing, which represents the data of TB2.

During symbol processing, unless otherwise specified, q0 means q0TB1 or q0TB2; q1 means q1TB2.

The following describes a method for determining the mapping layer number in the layer mapping process.

As an optional embodiment, for a codeword, the mapping layer number of the codeword on the multiple carriers is the same; and determining the mapping layer number of the codeword of the scheduled transport block on the multiple carriers includes at least one of the following:

(1) if the multiple carriers all carry a codeword of one scheduled transport block, determining the mapping layer number of the codeword on the multiple carriers according to a first layer number indication;

(2) if the multiple carriers all carry codewords of two scheduled transport blocks, determining the mapping layer number of the codeword of each scheduled transport block on the multiple carriers respectively according to a second layer number indication;

(3) if a first portion of the multiple carriers carries codewords of two scheduled transport blocks and a second portion of the multiple carriers carries a codeword of one scheduled transport block, then determining the mapping layer number of the codeword of each scheduled transport block on the multiple carriers according to the second layer number indication, or determining the mapping layer number of the codeword of each scheduled transport block on the multiple carriers according to the first layer number indication and the second layer number indication, respectively;

Where the first layer number indication indicates the mapping layer number of a codeword of a scheduled transport block; and the second layer number indication indicates a sum of the mapping layer numbers corresponding to the codewords of two scheduled transport blocks.

In this embodiment, when determining the mapping layer number, it is determined respectively according to conditions of the scheduled transport blocks carried by multiple carriers. The network device indicates the mapping layer number corresponding to the codeword through the first layer number indication and/or the second layer number indication. The first layer number indication can only indicate the mapping layer number of one codeword (which can be the mapping layer number of the codeword of the first transport block, or the mapping layer number of the codeword of the second transport block), and the second layer number indication is used to indicate the sum of the mapping layer numbers corresponding to two codewords.

It is assumed that a layer indication value in_layer1 of a scheduling signaling scheduling 1 codeword (such as q0TB1 or q0TB2) indicates that a layer index value (i.e., mapping layer number) of q0TB1 or q0TB2 is layer1; a layer indication value in_layer2 for scheduling 1 codeword (such as q1TB2) indicates that the mapping layer number of q1TB2 is layer2;

the layer indication value for scheduling 2 codewords (codeword 0 and codeword 1) is in_layer1&2 (it is to be noted that when DCI schedules 2 codewords, only one layer indication parameter is indicated), which means that the total mapping layer number for codeword 0 and codeword 1 is layer1&2.

For the SCOMX cell, before performing layer mapping, the mapping layer number of the codeword needs to be determined, for example, determining the layer number indication layerl for the transmission codeword q0TB1 or q0TB2, determining layer number indication layer2 for the transmission codeword q1TB2 (if the scheduled carrier indicates scheduling two transport blocks). The determination method is divided into the following three types of situations.

Case 1

In some embodiments, if the multiple carriers all carry a codeword of one scheduled transport block, determining the mapping layer number of the codeword on the multiple carriers according to the first layer number indication includes at least one of the following:

a: if the multiple carriers all carry a codeword of a first transport block, determining a mapping layer number corresponding to the codeword according to a layer number indication 1 corresponding to the first transport block; where the layer number indication 1 is a first layer number indication used to indicate relevant information of the first transport block;

b: if the multiple carriers all carry a codeword of a second transport block, determining a mapping layer number corresponding to the codeword according to a layer number indication 2 corresponding to the second transport block; where the layer number indication 2 is a first layer number indication used to indicate relevant information of the second transport block;

c: if a first portion of the multiple carriers carries the codeword of the first transport block, and a second portion of the multiple carriers carries the codeword of the second transport block, determining a mapping layer number of the codeword in the first portion of the multiple carriers according to the layer number indication 1 corresponding to the first transport block, and determining a mapping layer number of the codeword in the second portion of the multiple carrier according to the layer number indication 2 corresponding to the second transport block.

In this embodiment, for a codeword, the mapping layer number of the codeword on the multiple carriers is the same, that is, the modulation orders of the codeword on the multiple carriers are the same, and the mapping layer numbers are also the same. All carriers carry a codeword of one scheduled transport block, and the scheduled transport block can be the first transport block or the second transport block.

The following example illustrates a method for determining the mapping layer number when multiple carriers carry a codeword of a scheduled transport block.

The following provides an example to illustrate the method for determining the mapping layer number when multiple carriers carry the codeword of one scheduled transport block.

Assumption 1: all scheduled carriers carry one codeword, and one TB1 is scheduled, that is, in this embodiment, all carriers carry one q0TB1.

In this case, only one TB is transmitted in this scheduling on the SCOMX cell. At this point, the layer indication values of all scheduled carriers are the same and are less than or equal to a value max_layer (such as max _layer=4), that is, the layer indication value layerl is equal to in_layer1. At this point, there is no need to calculate layer2. In the symbol-level processing process, q0 is q0TB1, that is, in this case, the TB of codeword q0 refers to TB1, and the codeword of TB1 refers to q0.

Assumption 2: all scheduled carriers carry one codeword, and one TB2 is scheduled, that is, in this embodiment, all carriers carry one q0TB2.

In this case, only one TB is transmitted in this scheduling on the SCOMX cell. At this point, the layer indication values of all scheduled carriers are the same and are less than or equal to a value max_layer (such as max _layer=4), that is, the layer indication value layerl is equal to in_layer1. At this point, there is no need to calculate layer2. In the symbol-level processing process, q0 is q0TB2, that is, the TB of codeword q0 in this case is TB2, and the codeword of TB2 refers to q0.

Assumption 3: all scheduled carriers carry one codeword (some carriers transmit q0TB1, and some carriers transmit q0TB2).

In this case, in the SCOMX cell, only one TB is transmitted in this scheduling, and the layer indication number of all scheduled carriers transmitting q0TB1 is the same and is less than or equal to a value max_layer (e.g., max_layer=4), that is, the layer indication value layerl is equal to in_layer1 parameter indicated by a TB1 enable signaling;

the layer indication number of all scheduled carriers transmitting q0TB2 is the same and is less than or equal to a value max_layer (eg max_layer=4), that is, the layer indication value layerl is equal to in_layer1 parameter indicated by a TB2 enable signaling.

It is to be noted that, in the symbol-level processing, q0TB1 and q0TB2 are each executed independently according to q0, and the carrier involved is determined according to the signaling for scheduling q0TB1 or q0TB2.

Case 2

In some embodiments, if the multiple carriers all carry codewords of two scheduled transport blocks, determining the mapping layer number of the codeword of each scheduled transport block on the multiple carriers according to the second layer number indication, includes:

according to the second layer number indication, determining that in the multiple carriers, the mapping layer number corresponding to the codeword of the first transport block is a first value, and the mapping layer number corresponding to the codeword of the second transport block is a second value;
where a value indicated by the second layer number is a sum of the first value and the second value.

After the network device indicates the value of the second layer number indication, the mapping layer number corresponding to each codeword can be predefined. For example, all scheduled carriers use 2 codewords (codeword 0 and codeword 1); in this case, on the SCOMX cell, this scheduling transmits 2 TBs, and data of the two TBs are transmitted on all scheduled carriers. At this point, the layer indication values in_layer1&2 (that is, the second layer number indication) of all scheduled carriers are the same and greater than a value max_layer (such as max_layer=4). The method for determining layer1 and laye2 is, for example:

1) if in_layer1&2=5, then layer1=2, layer2=3;
2) if in_layer1&2=6, then layer1=3, layer2=3;
3) if in_layer1&2=7, then layer1=3, layer2=4;
4) if in_layer1&2=8, then layer1=4, layer2=4.

Case 3

Method 1: in some embodiments, if a first portion of the multiple carriers carries codewords of two scheduled transport blocks, and a second portion of the multiple carriers carries a codeword of one scheduled transport block, then determining the mapping layer number of each scheduled transmission codeword on the multiple carriers according to the second layer number indication, includes:
if the first portion of the multiple carriers carries the codeword of the first transport block and the codeword of the second transport block and the second portion of the multiple carrier carries the codeword of the first transport block, determining, according to the second layer number indication, the mapping layer number of the codeword of the first transport block on the first portion of the multiple carriers and the second portion of the multiple carriers is a third value, and the mapping layer number of the codeword of the second transport block on the first portion of the multiple carriers is a fourth value; where a value of the second layer number indication is a sum of the third value and the fourth value.

In this embodiment, some scheduled carriers carry 2 codewords, and other scheduled carriers carry 1 codeword (such as q0TB1). In the SCOMBX cell, this scheduling transmits 2 TBs. The transmission relationship between layer indication and codeword 0/codeword 1 on the scheduled carrier is as follows:

for TB whose codeword is q0TB1: data is transmitted on all scheduled carriers, that is, all scheduled carriers transmit q0TB1, i.e., the second portion of the multiple carriers transmits q0TB1. In the symbol-level processing process, q0 is q0TB1, that is, in this case, the TB of codeword q0 is TB1, and the codeword of TB1 refers to q0;

for TB whose codeword is q1TB2: data is transmitted only on the scheduled carrier that carries two codewords, that is, q1TB2 is transmitted on the first portion of the multiple carriers, i.e., the first portion of the multiple carriers transmits q0TB1 and q1TB2. In the symbol-level processing process, q1 is q1TB2, that is, in this case, the TB of the codeword q1 is TB2, and the codeword of TB2 refers to q1.

In some embodiments, some scheduled carriers carry 2 codewords, and other scheduled carriers carry 1 codeword (such as q0TB2). In the SCOMBX cell, this scheduling transmits 2 TBs. The transmission relationship between layer indication and codeword 0/codeword 1 on the scheduled carrier is as follows:

TB whose codewords are q1TB2 and q0TB2, corresponds to q0 in symbol-level processing; data is transmitted on all scheduled carriers; the TB whose codeword is q0TB1, corresponds to q1 in the symbol-level processing, and data is transmitted only on scheduled carrier carrying 2 codewords. Then, the layer2 of all scheduled carriers is determined according to in_layer1&2 indication (the corresponding relationship is shown in Table 2); for the carrier that schedules two codewords, the layer indication value layer1 with codeword q0TB1 is determined jointly according to in_layer1&2 and in_layer2 in a method including: Layer1=in_layer1&2-in_layer2. in_layer is indicated by the scheduling signaling corresponding to q0TB2.

When determining the mapping layer number of different carriers according to the second layer number indication, the mapping layer number of all scheduled carriers is determined according to the layer indication in_layer1&2 of 2-codeword scheduling. The corresponding relationship can be determined by the following Table 2:

Table 2: determine layerl and layer2 according to layer indication in_layer1&2

| layer indication in_layer1&2 (input) | 5 | 6 | 7 | 8 |
|---|---|---|---|---|
| layer indication layerl (output) | 2 | 3 | 3 | 4 |
| layer indication layer2 (output) | 3 | 3 | 4 | 4 |

The layer indication layerl is used for layer mapping and resource mapping of TB whose codeword is q0TB1, and layer2 is used for layer mapping and resource mapping of the codeword q1TB2, which are determined according to the corresponding relationship between the layer indication layer1&2 and the above Table 2. For example, according to the above Table 2, the value of the above second layer number indication is 7, then it can be determined that the layer1 value corresponding to q0TB1 is 3 (that is, the third value), and the layer1 value corresponding to q1TB2 is 4 (that is, the fourth value).

In some embodiments, layerl and layer2 may also be determined by the formula:

$$\text{layer1} = \lfloor (\text{layer1\&2})/2 \rfloor$$

$$\text{layer2} = \lceil (\text{layer1\&2})/2 \rceil$$

or,

$$\text{layer2} = \lfloor (\text{layer1\&2})/2 \rfloor$$

$$\text{layer1} = \lceil (\text{layer1\&2})/2 \rceil$$

In the above formula, $\lfloor \cdot \rfloor$ means rounding down, and $\lceil \cdot \rceil$ means rounding up.

It is to be noted that when the layer indication layer1 is determined according to the layer indication In_layer1&2, the layer indication parameter in_layer1 of the scheduled carrier carrying 1 codeword can be ignored, or the user equip expects that: the value of the layer indication parameter of the scheduled carrier carrying 1 codeword is the same as the value calculated according to in_layer1&2; correspondingly, when the two values are different, the user equipment considers that the scheduling is invalid.

Method 2: in some embodiments, if the first portion of the multiple carriers carries codewords of two scheduled transport blocks and the second portion of the multiple carriers carries a codeword of one scheduled transport block, then determining the mapping layer number of the codeword of each scheduled transport block on the multiple carriers according to the first layer number indication and the second layer number indication, includes:

if the first portion of the multiple carrier carries the codeword of the first transport block and the codeword of the second transport block and the second portion of the multiple carrier carries the codeword of the first transport block, then according to the first layer number indication, determining that the mapping layer number of the codeword of the first transport block on the first portion of the multiple carrier and the second portion of the multiple carrier is a fifth value; and according to the second layer number indication, determining that the mapping layer number of the codeword of the second transport block on the first portion of the multiple carrier is a sixth value; where a value of the second layer number indication is a sum of the fifth value and the sixth value.

In this embodiment, the mapping layer number corresponding to the codeword of the first transport block is determined according to a scheduling signaling indication corresponding to the first transport block, and the mapping layer number corresponding to the codeword of the second transport block is determined according to the second layer number indication which is used to indicate the total number of layers, that is, the value of the second layer number indication is subtracted from the value of the first layer number indication to obtain a result which is the mapping layer number corresponding to the codeword of the second transport block.

For example, for a carrier that schedules one codeword, the layer indicator value layer1 of the codeword q0TB1 is determined based on the layer indicator in_layer1 of the single-codeword scheduling (i.e., layer1 is equal to in_layer1). For a carrier that schedules two codewords, the layer indicator value layer2 of the codeword q1TB2 is determined based on in_layer1&2 and in_layer1. The determination method is: Layer2=in_layer1&2-in_layer1.

In this case, for the scheduled carriers of 2 codewords, the layer indication values in_layer1&2 are the same; for the scheduled carriers of 1 codeword, the layer indication values in_layer1 are the same.

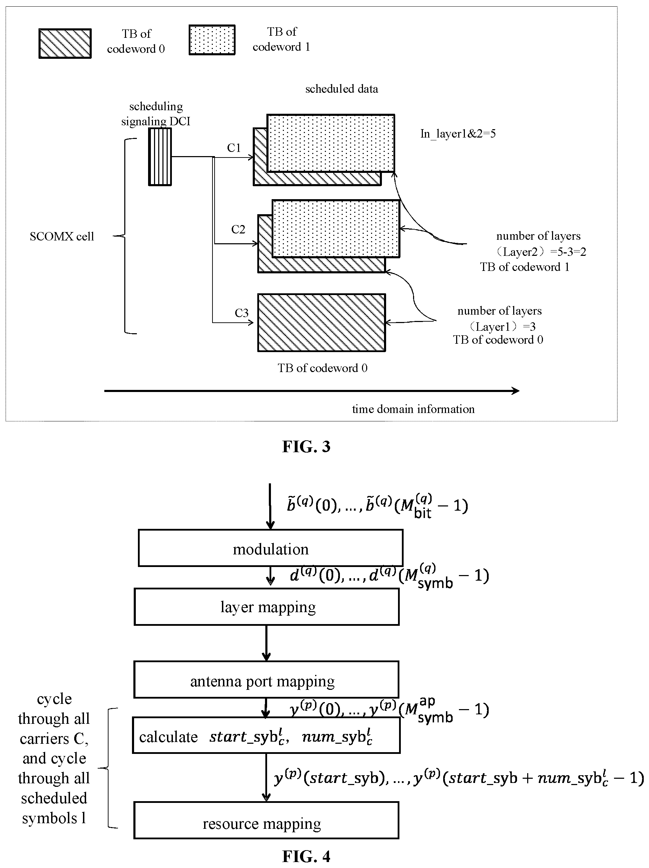

Assuming that the value indicated by in_layer1&2 is 5 and the value indicated by in_layer1 is 3, as shown in FIG. 3, in a scheduling signaling DCI, for the scheduled carriers C1 and C2, the base station indicates 2-codeword transmission (codeword q0TB1 and codeword q1TB2), and the corresponding layer indication in_layer1&2=5. For the scheduled carrier C3, the base station indicates 1-codeword transmission (codeword q0TB1), and the corresponding layer indication in_layer1=3. Then,

for the TB whose codeword is q0TB1, it is transmitted on three scheduled carriers (C1/C2/C3); during the layer mapping and resource mapping process, it is performed according to the indication value layer=3, that is, layer1=-in_layer1;

for the TB whose codeword is q1TB2, it is transmitted on two scheduled carriers (C1/C2); during the layer mapping and resource mapping process, it is performed according to the indication value in_layer1&2-in_layer1=2, that is, layer2=in_layer1&2-in_layer1.

As an optional embodiment, if a first portion of the multiple carriers carries codewords of two scheduled transport blocks, a second portion of the multiple carriers carries a codeword of one scheduled transport block, and among the scheduled transport blocks carried by the second portion of the multiple carriers, some carriers schedule codeword of the first transport block (q0TB1), and some carriers schedule codeword of the second transport block (q0TB2), then, in the SCOMBX cell, this scheduling transmits 2 TBs. The transmission relationship between layer indication and codeword 0/codeword 1 on the scheduled carrier is as follows:

for one TB whose codewords are q1TB2 and q0TB2: data is transmitted on the corresponding scheduled carrier (indicating the scheduled carrier with codeword 1 and a scheduled carrier for transmitting 2 codewords);

for TB whose codeword is q0TB1, data is transmitted on the corresponding scheduled carrier (indicating a scheduled carrier with codeword 0 and a scheduled carrier for transmitting 2 codewords).

In this embodiment, the layer indication relationship of different carriers can be any one of the methods in the above case three.

It is to be noted that, in this embodiment, when one carrier schedules 2 TBs, a layer indication parameter in_layer1&2 is indicated, which means that the parameter implicitly indicates in_layer1 and in_layer2. For SCOMX cell scheduling, when one carrier schedules 2 TBs, in_layer1 or/and in_layer2 may also be indicated separately, thereby obtaining indication parameters of in_layer1 and in_layer2. For example,

1) indicating in_layer1 and in_layer2 respectively;

2) indicating In_layer1&2, in_layer1, and determining in_layer2 according to a calculation formula, that is, in_layer2=-In_layer1&2-in_layer1;

3) indicating In_layer1&2, in_layer2, and determining in_layer1 according to a calculation formula, that is, in_layer1=-In_layer1&2-in_layer2.

As an optional embodiment, the method further includes: receiving scheduling signaling sent by the receiver; where the scheduling signaling includes the first layer number indication and/or the second layer number indication, and the transmitter is a user equipment and the receiver is a network device.

In this embodiment, when the transmitter is a user equipment, the network device needs to send scheduling signaling to the user equipment to indicate the mapping layer number of the codeword on multiple carriers.

The following describes an implementation process of performing symbol-level processing on codewords according to the modulation order and the mapping layer number through specific implementation examples.

As an optional embodiment, performing symbol-level processing on the codeword according to the modulation order and the mapping layer number to obtain transmission data, includes:

step 1: according to the modulation order, modulating bit information of all scheduled carriers of the codeword to obtain modulation symbols corresponding to the codeword.

step 2: according to the mapping layer number, performing layer mapping processing on the modulation symbols to obtain a first mapping result;

step 3: performing antenna port mapping processing on the first mapping result to obtain a second mapping result;

step 4: performing resource mapping processing on the second mapping result to obtain transmission data.

In this embodiment, the symbol-level processing includes four steps: modulation process, layer mapping process, antenna port mapping process and resource mapping process. An output of the modulation process is used as an input of the layer mapping process; an output of the layer mapping process is used as an input of the antenna port mapping process; an output of the antenna port mapping process is used as an input of the resource mapping process; and an output result of the resource mapping process is the to-be-transmitted data.

When codewords are scheduled on multiple carriers, the configured modulation orders and mapping layer numbers are different, and the process of symbol-level processing on the codewords is different. The implementation process of the symbol-level processing is described below for different configuration situations.

Configuration 1: the modulation order $Q_m$ of the codewords on multiple carriers is the same, and the mapping layer number is the same. As shown in FIG. 4, it includes:

step 1: modulation process, in which the modulation method is shown in Table 1 and will not be described in detail here;

step 2: layer mapping process. In this example, the mapping layer number of the transport block corresponding to the codeword 0 transmitted on each scheduled carrier is the same; the mapping layer number of the transport block corresponding to the codeword 1 transmitted on each scheduled carrier is the same.

a: parameter input of layer mapping: : $d^{(q)}(0), ..., d^{(q)}(M^{(q)}_{\text{symb}} - 1)$ ; that is, the output of the modulation process is used as the input of the layer mapping process.

For each codeword q, assuming that the output of the modulation process is the input of the layer mapping process, its complex-valued modulation symbol is $d^{(q)}(0), ..., d^{(q)}(M^{(q)}_{\text{symb}} - 1)$ , where $M^{(q)}_{\text{symb}}$ represents the number of symbols output from the modulation process.

b: layer mapping process and output of layer mapping.

The user equipment performs layer mapping on the symbols according to the number of layers and the number of codewords indicated by the network device. The relationship between the relevant symbols and layer mapping includes: for the above method 1 for determining the mapping layer number in case 1, case 2 and case 3, the multiplexing relationship of codeword to layer mapping is shown in Table 3. For the method 2 for case 1, case 2 and case 3, the multiplexing relationship of codeword to layer mapping is shown in Table 4 and Table 5.

Table 3: multiplexing relationship of codeword to layer mapping

| Number of layers | Number of codewords | codeword to layer mapping | $i = 0,1,...,M_{\text{symb}}^{\text{layer}} - 1$ |
|---|---|---|---|
| 1 | 1 | $x^{(0)}(i) = d^{(0)}(i)$ | $M_{\text{symb}}^{\text{layer}} = M_{\text{symb}}^{(0)}$ |
| 2 | 1 | $x^{(0)}(i) = d^{(0)}(2i)$ <br> $x^{(1)}(i) = d^{(0)}(2i + 1)$ | $M_{\text{symb}}^{\text{layer}} = M_{\text{symb}}^{(0)}/2$ |
| 3 | 1 | $x^{(0)}(i) = d^{(0)}(3i)$ <br> $x^{(1)}(i) = d^{(0)}(3i + 1)$ <br> $x^{(2)}(i) = d^{(0)}(3i + 2)$ | $M_{\text{symb}}^{\text{layer}} = M_{\text{symb}}^{(0)}/3$ |
| 4 | 1 | $x^{(0)}(i) = d^{(0)}(4i)$ <br> $x^{(1)}(i) = d^{(0)}(4i + 1)$ <br> $x^{(2)}(i) = d^{(0)}(4i + 2)$ <br> $x^{(3)}(i) = d^{(0)}(4i + 3)$ | $M_{\text{symb}}^{\text{layer}} = M_{\text{symb}}^{(0)}/4$ |
| 5 | 2 | $x^{(0)}(i) = d^{(0)}(2i)$ <br> $x^{(1)}(i) = d^{(0)}(2i + 1)$ <br> $x^{(2)}(i) = d^{(1)}(3i)$ <br> $x^{(3)}(i) = d^{(1)}(3i + 1)$ <br> $x^{(4)}(i) = d^{(1)}(3i + 2)$ | $M_{\text{symb}}^{\text{layer}} = \text{M}_{\text{symb}}^{(0)}/2 = M_{\text{symb}}^{(1)}/3$ |
| 6 | 2 | $x^{(0)}(i) = d^{(0)}(3i)$ <br> $x^{(1)}(i) = d^{(0)}(3i + 1)$ <br> $x^{(2)}(i) = d^{(0)}(3i + 2)$ <br> $x^{(3)}(i) = d^{(1)}(3i)$ <br> $x^{(4)}(i) = d^{(1)}(3i + 1)$ <br> $x^{(5)}(i) = d^{(1)}(3i + 2)$ | $M_{\text{symb}}^{\text{layer}} = M_{\text{symb}}^{(0)}/3 = M_{\text{symb}}^{(1)}/3$ |
| 7 | 2 | $x^{(0)}(i) = d^{(0)}(3i)$ <br> $x^{(1)}(i) = d^{(0)}(3i + 1)$ <br> $x^{(2)}(i) = d^{(0)}(3i + 2)$ <br> $x^{(3)}(i) = d^{(1)}(4i)$ <br> $x^{(4)}(i) = d^{(1)}(4i + 1)$ <br> $x^{(5)}(i) = d^{(1)}(4i + 2)$ <br> $x^{(6)}(i) = d^{(1)}(4i + 3)$ | $M_{\text{symb}}^{\text{layer}} = M_{\text{symb}}^{(0)}/3 = M_{\text{symb}}^{(1)}/4$ |
| 8 | 2 | $x^{(0)}(i) = d^{(0)}(4i)$ <br> $x^{(1)}(i) = d^{(0)}(4i + 1)$ <br> $x^{(2)}(i) = d^{(0)}(4i + 2)$ <br> $x^{(3)}(i) = d^{(0)}(4i + 3)$ <br> $x^{(4)}(i) = d^{(1)}(4i)$ <br> $x^{(5)}(i) = d^{(1)}(4i + 1)$ <br> $x^{(6)}(i) = d^{(1)}(4i + 2)$ <br> $x^{(7)}(i) = d^{(1)}(4i + 3)$ | $M_{\text{symb}}^{\text{layer}} = M_{\text{symb}}^{(0)}/4 = M_{\text{symb}}^{(1)}/4$ |

The output after layer mapping is: $x(i) = [x^{(0)}(i) ... x^{(v-1)}(i)]^T$, $i = 0,1,...,M_{\text{symb}}^{\text{layer}} - 1$; where v is the layer number indicator, $M_{\text{symb}}^{\text{layer}}$ is the number of symbols per layer, and its value is $M_{\text{symb}}^{\text{layer}} = M_{\text{symb}}^{(q)}/v$.

Taking v = 2 as an example, the layer mapping method is described as:

Assuming: $v = 2$, $M_{\text{symb}}^{(q)} = 12$, $M_{\text{symb}}^{\text{layer}} = M_{\text{symb}}^{(q)}/v = 6$, then,

$$x(0) = \left[x^{(0)}(0),\ x^{(1)}(0)\right]^{T} = \left[d^{(0)}(0),\ d^{(0)}(1)\right]^{T}$$

$$x(1) = \left[x^{(0)}(1),\ x^{(1)}(1)\right]^{T} = \left[d^{(0)}(2),\ d^{(0)}(3)\right]^{T}$$

$$x(2) = \left[x^{(0)}(2),\ x^{(1)}(2)\right]^{T} = \left[d^{(0)}(4),\ d^{(0)}(5)\right]^{T}$$

$$x(3) = \left[x^{(0)}(3),\ x^{(1)}(3)\right]^{T} = \left[d^{(0)}(6),\ d^{(0)}(7)\right]^{T}$$

$$x(4) = \left[x^{(0)}(4),\ x^{(1)}(4)\right]^{T} = \left[d^{(0)}(8),\ d^{(0)}(9)\right]^{T}$$

$$x(5) = \left[x^{(0)}(5),\ x^{(1)}(5)\right]^{T} = \left[d^{(0)}(10),\ d^{(0)}(11)\right]^{T}$$

Table 4: multiplexing relationship of codeword to layer mapping

| Number of layers | codeword q | $i = 0,1,\dots, M_{\text{symb}}^{\text{layer}} - 1$ codeword to layer mapping | |
|---|---|---|---|
| 1 | q = 0 | $x^{(0)}(i) = d^{(0)}(i)$ | $M_{\text{symb}}^{\text{layer}} = M_{\text{symb}}^{(0)}$ |
| 2 | q = 0 | $x^{(0)}(i) = d^{(0)}(2i)$ $x^{(1)}(i) = d^{(0)}(2i + 1)$ | $M_{\text{symb}}^{\text{layer}} = M_{\text{symb}}^{(0)}/2$ |
| 3 | q = 0 | $x^{(0)}(i) = d^{(0)}(3i)$ $x^{(1)}(i) = d^{(0)}(3i + 1)$ $x^{(2)}(i) = d^{(0)}(3i + 2)$ | $M_{\text{symb}}^{\text{layer}} = M_{\text{symb}}^{(0)}/3$ |
| 4 | q = 0 | $x^{(0)}(i) = d^{(0)}(4i)$ $x^{(1)}(i) = d^{(0)}(4i + 1)$ $x^{(2)}(i) = d^{(0)}(4i + 2)$ $x^{(3)}(i) = d^{(0)}(4i + 3)$ | $M_{\text{symb}}^{\text{layer}} = M_{\text{symb}}^{(0)}/4$ |

It is to be noted that in Table 4, the number of layers is the layer indication layer1 of the TB corresponding to codeword 0. $M_{\text{symb}}^{\text{layer}}$ is the number of symbols of the TB corresponding to codeword 0.

It is to be noted that the number of layers in Table 5 is the layer number indication layer2 of the TB corresponding to codeword 1, and the determination method is not repeated here. $M_{\text{symb}}^{\text{layer}}$ is the number of symbols of the TB corresponding to codeword 1. $v_0$ is the layer indication value (layer1) of the TB corresponding to codeword 0. For example, when layer=3, $v_0 = 3$, $x^{(v_0+2)}(i) = x^{(3+2)}(i)$.

In addition, in this embodiment, for the multi-carrier modulation process, the layer number indication value of the transport block corresponding to each codeword is the same, and its value is indicated by the network device. The output after mapping is: $x(i) = [x^{(0)}(i) \dots x^{(v-1)}(i)]^{T}$, $i = 0,1, \dots, M_{\text{symb}}^{\text{layer}} - 1$, where v represents the layer number indication, $M_{\text{symb}}^{\text{layer}}$ is the number of symbols per layer, and its value is $M_{\text{symb}}^{\text{layer}} = M_{\text{symb}}^{(q)}/v$.

Table 5: multiplexing relationship of codeword to layer mapping

| Number of layers | codeword q | $M_{\text{symb}}^{\text{layer}} - 1$<br>codeword to layer mapping i = 0,1, ..., |  |
|---|---|---|---|
| 1 | q = 1 | $x^{(v0+0)}(i) = d^{(1)}(i)$ | $M_{\text{symb}}^{\text{layer}} = M_{\text{symb}}^{(q)}$ |
| 2 | q = 1 | $x^{(v0+0)}(i) = d^{(1)}(2i)$<br>$x^{(v0+1)}(i) = d^{(1)}(2i + 1)$ | $M_{\text{symb}}^{\text{layer}} = M_{\text{symb}}^{(q)}/2$ |
| 3 | q = 1 | $x^{(v0+0)}(i) = d^{(1)}(3i)$<br>$x^{(v0+1)}(i) = d^{(1)}(3i + 1)$<br>$x^{(v0+2)}(i) = d^{(1)}(3i + 2)$ | $M_{\text{symb}}^{\text{layer}} = M_{\text{symb}}^{(q)}/3$ |
| 4 | q = 1 | $x^{(v0+0)}(i) = d^{(1)}(4i)$<br>$x^{(v0+1)}(i) = d^{(1)}(4i + 1)$<br>$x^{(v0+2)}(i) = d^{(1)}(4i + 2)$<br>$x^{(v0+3)}(i) = d^{(1)}(4i + 3)$ | $M_{\text{symb}}^{\text{layer}} = M_{\text{symb}}^{(q)}/4$ |

Step 3: antenna port mapping.

a: parameter input of antenna port mapping: $[x^{(0)}(i) ... x^{(v-1)}(i)]^T$, $i = 0,1, ..., M_{\text{symb}}^{\text{layer}} - 1$, that is, the output of layer mapping is used as the input of antenna port mapping.
The processed output of the layer mapping is used as the input of the layer antenna port mapping, and a matrix expression of its complex-valued is $[x^{(0)}(i) ... x^{(v-1)}(i)]^T$, $i = 0,1, ..., M_{\text{symb}}^{\text{layer}} - 1$; where $M_{\text{symb}}^{\text{layer}}$ is the number of symbols corresponding to each layer.
b: antenna port mapping process and antenna port mapping output

The above input parameters are mapped to antenna ports in the following way:

$$
\begin{matrix}
y^{(P_0)}(i) \\
\vdots \\
y^{(P_{v-1})}(i)
\end{matrix}
=
\begin{matrix}
x^{(0)}(i) \\
\vdots \\
x^{(v-1)}(i)
\end{matrix}
$$

In this formula, the number of complex symbols corresponding to each antenna port is:

$y^{(p)}(0), ..., y^{(p)}(M_{\text{symb}}^{\text{ap}} - 1)$, $i = 0,1, ..., M_{\text{symb}}^{\text{layer}} - 1$, $M_{\text{symb}}^{\text{ap}} = M_{\text{symb}}^{\text{layer}}$; where $M_{\text{symb}}^{\text{ap}}$ is the number of symbols corresponding to each antenna port.

Step 4: resource mapping.

In some embodiments, when a codeword has the same modulation order and the same mapping layer number on the multiple carriers, the performing resource mapping processing on the second mapping result to obtain transmission data includes:
determining a starting position and the number of symbols on each carrier and each time domain symbol, for performing resource mapping on the second mapping result; according to the starting position and the number of symbols, performing resource mapping on the second mapping result corresponding to each antenna port to obtain transmission data.
In this embodiment, for the data symbols of a specific codeword, the data symbols after antenna port mapping are: $y^{(p)}(0), ..., y^{(p)}(M_{\text{symb}}^{\text{ap}} - 1)$, and the following two parameters for resource mapping of each time-domain symbol *l* on the scheduled carrier c need to be calculated:

$\text{start\_syb}_c^l$ : starting symbol position of output $y^{(p)}(0), \dots, y^{(p)}(M_{\text{symb}}^{\text{ap}} -$ 1) after antenna port mapping;

$\text{num\_syb}_c^l$ : the number of symbols of output $y^{(p)}(0), \dots, y^{(p)}(M_{\text{symb}}^{\text{ap}} -$ 1) after antenna port mapping;

according to the above parameters, $y^{(p)}(\text{start\_syb}_c^l), \dots, y^{(p)}(\text{start\_syb}_c^l + \text{num\_syb}_c^l - 1)$ is used as the input parameter for resource mapping of carrier c and time domain symbol *l* to perform resource mapping.

In some embodiments, performing resource mapping on the second mapping result corresponding to each antenna port includes:
for the second mapping result corresponding to each antenna port, first performing frequency domain resource mapping, and then performing symbol resource mapping; where the frequency domain resource include resource unit (RE), the symbol resources include time domain symbol resources, and the symbol resource mapping includes time domain symbol resource mapping.

Further, for the second mapping result corresponding to each antenna port, first performing frequency domain resource mapping, and then performing symbol resource mapping, includes:

step 1: for the second mapping result corresponding to each antenna port, performing frequency domain resource mapping on the time domain symbol *l* according to a first carrier order;
step 2: when resource mapping of all frequency domain resources on the time domain symbol *l* is completed, performing frequency domain resource mapping on the time domain symbol *l* + 1 according to the first carrier order until resource mapping of all frequency domain resources on the time domain symbol *l* + 1 is completed;
Step 3: repeating the step 2 until the second mapping result is mapped to all time domain symbols.

In some embodiments, the first carrier order includes one of the following:

an order of carrier indexes from low to high;
an order of carrier indexes from high to low;
preconfigured carrier order.

In this embodiment, the modulation order of the codeword on multiple carriers is the same, and the mapping layer number is the same. The transmitter performs mapping of data of each antenna port to a resource block. Assuming that the number of complex symbols corresponding to each antenna port is $y^{(p)}(0), \dots, y^{(p)}(M_{\text{symb}}^{\text{ap}} - 1)$ , then the mapping order is: first mapping frequency domain resources (RE level), then mapping symbol resources (time domain symbols). It is to be noted that in the resource mapping process, some unusable resources need to be skipped, such as resources occupied by a dedicated demodulation reference signal (DMRS).

For frequency-domain resource mapping, the process is performed sequentially in the frequency order of the multiple scheduled carriers. After completing the frequency-domain mapping for all scheduled carriers, the resource mapping for the next time-domain symbol is executed. Specifically, for the resource mapping process, it is necessary to determine a starting position of each time domain symbol *l* of each scheduled carrier c, that is, which symbol in $y^{(p)}(0), \dots, y^{(p)}(M_{\text{symb}}^{\text{ap}} - 1)$ where mapping begins, and the number of symbols.

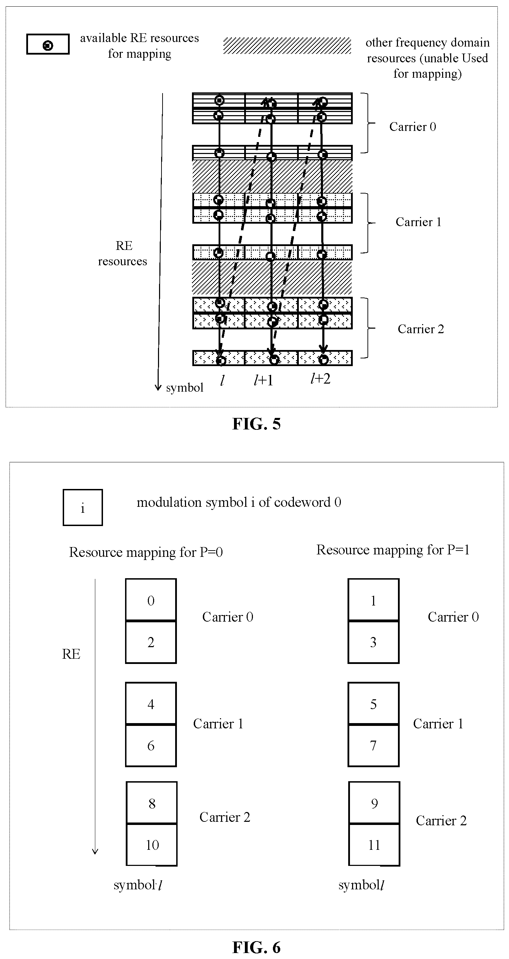

As shown in FIG. 5, the resource mapping order can be described as follows:
first performing the resource mapping of symbol *l*:

starting from RE with lower index to RE with higher index of carrier 0;
then starting from RE with lower index to RE with higher index of carrier 1;
finally, starting from RE with lower index to RE with higher index of carrier 2;
until the RE resource mapping of this symbol for all carriers is completed.

Then resource mapping of symbol *l* + 1 is performed in the same way as the resource mapping process of symbol *l*;

After that, the resource mapping of symbol *l* + 2 is performed in the same way as the resource mapping process of symbol *l*;

until the RE resource mapping of all scheduling symbols is completed.

The following provides an example to illustrate how the starting position $\text{start\_syb}_c^l$ and the number of symbols $\text{num\_syb}_c^l$ are determined for each carrier and each symbol relative to $y^{(p)}(0), \dots, y^{(p)}(M_{\text{symb}}^{\text{ap}} - 1)$ when performing resource mapping.

It is assumed that the number of scheduled carriers is C, and a layer indication for codeword q for each carrier is denoted as $v_c$.

It is assumed that the number of scheduled time-domain symbols is L; for symbol $l$ and carrier c, the number of resource elements (REs) available for mapping scheduled data is $\text{RE}_c^l$.

It is assumed that $y^{(p)}(0), \dots, y^{(p)}(M_{\text{symb}}^{\text{ap}} - 1)$ represents symbol information for resource mapping.

Initializing a temporary variable: tmp=0; and the following loop is performed from $l$=0 to L-1:

$$\{$$
$$\text{performing the following steps from } c=0 \text{ to C-1:}$$
$$\{$$
$$\text{start\_syb}_c^l = \text{tmp}$$
$$\text{num\_syb}_c^l = \text{RE}_c^l \quad \text{//the number of resources available for}$$
data mapping per symbol (i.e., subtracting frequency-domain resources unavailable for data mapping from frequency-domain resources of the scheduled carriers)
$$\text{tmp} = \text{start\_syb}_c^l + \text{num\_syb}_c^l \quad \text{//an end of the symbol for}$$
performing the current resource mapping serve as the starting for the next resource mapping
$$\text{sequence } y^{(p)}(\text{start\_syb}_c^l), y^{(p)}(\text{start\_syb}_c^l + 1) \dots, y^{(p)}(\text{start\_syb}_c^l + \text{num\_syb}_c^l - 1)$$
$$\}$$
$$\}$$

It is to be noted that for a transport block of a specific codeword (such as a transport block corresponding to codeword 1), the network side device schedules its transmission on carriers that may differ from those allocated for the transport block of codeword 0. For example,

the carriers for transmission of codeword 0 are: carrier 0, carrier 1, carrier 2;
the carriers for transmission of codeword 1 are: carrier 0 and carrier 2;
then, the resource mapping process for codeword 1 is performed only on the carrier that schedules the codeword 1, that is, the carrier that does schedule the codeword 1 needs to be skipped. The above process can be described as: first performing the resource mapping of symbol $l$:

starting from RE with lower index to RE with higher index of carrier 0;
then starting from RE with lower index to RE with higher index of carrier 2.

For a multi-carrier SCOMX cell, the mapping order of the carriers needs to be determined during frequency domain resource mapping, in following manners:

1): performing mapping in ascending order according to the carrier indexed. For example, assuming that the carriers scheduled by the network device are: carrier 0, carrier 1, carrier 2, then the frequency domain mapping order is: first carrier 0, then carrier 1, and finally carrier 2.
2): performing mapping in descending order according to the carrier index. For example, assuming that the carriers scheduled by the network device are: carrier 0, carrier 1, carrier 2, then the frequency domain mapping order is: first carrier 2, then carrier 1, and finally carrier 0.

3): performing mapping according to the order configured by the network device.

With an example of performing mapping in ascending order according to the carrier indexed, it is assumed that carrier 0 and carrier 1 are scheduled for two codewords, and carrier 2 is scheduled for a codeword.

A: for codeword q0, parameters are as follows:

$v$ =2 (layer1 value), $M_{\text{symb}}^{(0)} = 12$ (number of output symbols in modulation);

the number of scheduled time domain symbols is 1 (L=1); the number of scheduled carriers is 3 (C=3);

the number of resources to which data of all scheduled carriers can be mapped, is $RE_c^l = 2$;

then, $M_{\text{symb (q=0)}}^{\text{ap}} = \frac{M_{\text{symb}}^{(0)}}{v} = 6$ (that is, the number of symbols mapped at each layer).

a calculation output is as follows:

for antenna port P=0 of carrier 0, carrier 1, and carrier 2:

$$y^{(0)}(0), \dots, y^{(0)}(M_{\text{symb (q=0)}}^{\text{ap}} - 1) = \{ d^{(0)}(0), d^{(0)}(2), d^{(0)}(4), d^{(0)}(6), d^{(0)}(8),$$

$$d^{(0)}(10)\};$$

for antenna ports P=1 for carrier 0, carrier 1, and carrier 2:

$$y^{(1)}(0), \dots, y^{(1)}(M_{\text{symb (q=0)}}^{\text{ap}} - 1) = \{ d^{(0)}(1), d^{(0)}(3), d^{(0)}(5), d^{(0)}(7), d^{(0)}(9),$$

$$d^{(0)}(11)\};$$

where $\text{start\_syb}_{c=0}^{l=0} = 0; \text{start\_syb}_{c=1}^{l=0} = 2; \text{start\_syb}_{c=2}^{l=0} = 4$;

$$\text{num\_syb}_c^l = RE_c^l = 2$$

Then, the resource mapping effect of antenna port 0 (P=0) and antenna port 1 (P=1) of carrier 0, carrier 1, and carrier 2 is shown in FIG. 6.

B: for codeword q1, parameters are as follows:

$v$ =3 (layer3 value), $M_{\text{symb}}^{(1)} = 12$ (number of output symbols in modulation);

the number of scheduled time domain symbols is 1 (L=1); the number of scheduled carriers is 2 (C=2);

the number of resources to which data of all scheduled carriers can be mapped, is $RE_c^l = 2$;

then, $M_{\text{symb (q=1)}}^{\text{ap}} = \frac{M_{\text{symb}}^{(1)}}{v} = 4$ (that is, the number of symbols mapped at each layer).

a calculation output is as follows:

for antenna port P=2 of carrier 0, carrier 1:

$$y^{(2)}(0), \dots, y^{(2)}(M_{\text{symb (q=1)}}^{\text{ap}} - 1) = \{d^{(1)}(0), d^{(1)}(3), d^{(1)}(6), d^{(1)}(9)\}$$

for antenna port P=3 of carrier 0, carrier 1:

$$y^{(3)}(0), \dots, y^{(3)}(M^{ap}_{symb\ (q=1)} - 1) = \{d^{(1)}(1), d^{(1)}(4), d^{(1)}(7),\ d^{(1)}(10)\}$$

for antenna port P=4 of carrier 0/1:

$$y^{(4)}(0), \dots, y^{(4)}(M^{ap}_{symb\ (q=1)} - 1) = \{d^{(1)}(2), d^{(1)}(5), d^{(1)}(8),\ d^{(1)}(11)\}$$

Where $\qquad \text{start\_syb}^{l=0}_{c=0} = 0 ; \quad \text{start\_syb}^{l=0}_{c=1} = 2 ; \quad \text{start\_syb}^{l=0}_{c=2} = 2$ ;

$\text{num\_syb}^{l}_{c} = \text{RE}^{l}_{c} = 2$ .

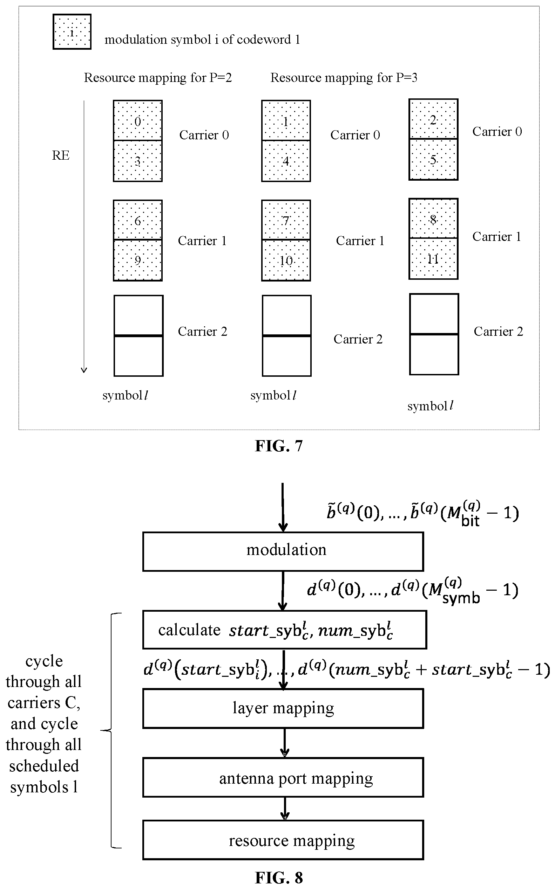

Then, the resource mapping effect of antenna port 2 (P=2) and antenna port 3 (P=3) of carrier 0, carrier 1 is shown in FIG. 7.

Configuration 2: the modulation order $Q_m$ of the codewords on multiple carriers is the same, but the mapping layer number is different.

In this embodiment, the modulation order $Q_m$ being same means that the indicated value of $Q_m$ is the same value on multiple scheduled carriers; and the layer number indication layer being different means that for all scheduled carriers transmitting codeword 0, the layer number indication in_layer1 may be different, which means that for all scheduled carriers transmitting codeword 1, the layer number indication layer2 may also be different. The method for determining the mapping layer number is not described in detail here.

As shown in FIG. 8, it includes:

Step 1: modulation process, in which the modulation method is shown in Table 1 and will not be described in detail here;

step 2: layer mapping process, antenna port mapping process and resource mapping process.

In some embodiments, when one codeword has the same modulation order and different mapping layer numbers for the multiple carriers, performing layer mapping processing on the modulation symbol according to the mapping layer number to obtain a first mapping result includes:

determining a starting modulation symbol and the number of symbols in each carrier and each time domain symbol for performing layer mapping processing on the modulation symbol;

according to the starting modulation symbol and the number of symbols, performing layer mapping on the modulation symbol to obtain the first mapping result.

In this example, no matter it is codeword 0 or codeword 1, the TB layer indication values corresponding to different scheduled carriers may be different; it is necessary to calculate the starting modulation symbol position for lay mapping on each symbol of every carrier.

Parameter input: $d^{(q)}(0), \dots, d^{(q)}(M^{(q)}_{symb} - 1)$ ; that is, the output of the modulation process is used as the input of the layer mapping process, and its complex-valued modulation symbol is $d^{(q)}(0), \dots, d^{(q)}(M^{(q)}_{symb} - 1)$ ,

where $M^{(q)}_{symb}$ represents the number of symbols output from the modulation process.

As shown in FIG. 8, for bitstream of a transport block of a specific codeword, the modulated output is $d^{(q)}(0), \dots, d^{(q)}(M^{(q)}_{symb} - 1)$ ; and the following two parameters for layer mapping of scheduled time-domain symbol *l* on the scheduled carrier c need to be calculated:

$\text{start\_syb}^{l}_{c}$ : starting symbol position of modulated output QAM symbols $d^{(q)}(0), \dots, d^{(q)}(M^{(q)}_{symb} - 1)$ ;

$\text{num\_syb}^{l}_{c}$ : the number of symbols of modulated output QAM symbols $d^{(q)}(0), \dots, d^{(q)}(M^{(q)}_{symb} - 1)$ .

According to the above parameters, $d^{(q)}(\text{start\_syb}_c^l), \dots, d^{(q)}(\text{num\_syb}_c^l + \text{start\_syb}_c^l - 1)$ is used as the input parameter for layer mapping of carrier c and time domain symbol $l$ to perform layer mapping, antenna port mapping and resource mapping.

The following describes the process of determining the starting symbol position $\text{start\_syb}_c^l$ and $\text{num\_syb}_c^l$ for layer mapping on each symbol of each carrier.

It is assumed that the number of scheduled carriers is C, and a layer indication for codeword q for each carrier is denoted as $v_c$.

It is assumed that the number of scheduled time-domain symbols is L; for symbol $l$ and carrier c, the number of resource elements (REs) available for mapping scheduled data is $\text{RE}_c^l$.

It is assumed that $d^{(q)}(0), \dots, d^{(q)}(M_{\text{symb}}^{(q)} - 1)$ represents symbol information for resource mapping.

Initializing a temporary variable: tmp=0; and the following loop is performed from $l$=0 to L-1:

$$\{$$
$$\text{performing the following steps from } c=0 \text{ to C-1:}$$
$$\{$$
$$\text{start\_syb}_c^l = \text{tmp}$$
$$\text{num\_syb}_c^l = v_c * \text{RE}_c^l \quad //\text{the number of symbols for layer}$$

mapping is equal to the number of layers multiplied by the number of resources available for data mapping.

$$\text{tmp} = \text{start\_syb}_c^l + \text{num\_syb}_c^l \quad //\text{an end of the symbol for}$$

performing the current layer mapping serve as the starting for the next layer mapping

$$\text{sequence } d^{(q)}(\text{start\_syb}_c^l), d^{(q)}(\text{start\_syb}_c^l + 1) \dots, d^{(q)}(\text{start\_syb}_c^l + \text{num\_syb}_c^l - 1)$$

as input to the layer mapping, performing the layer mapping.

$$\}$$

$$\}$$

It is to be noted that: the layer mapping process is performed for one or more modulated symbols corresponding to each scheduled carrier c and scheduled time-domain symbol $l$, and then the corresponding antenna port mapping and resource mapping processes are subsequently performed based on the output of the layer mapping process.

The following example illustrates the implementation process for determining the starting demodulation symbol position and demodulation symbol length for each scheduled carrier and each scheduled symbol.

Assumptions for input parameters:

for codeword q, there are C scheduled carriers, and a scheduled data duration is L symbols;

$\text{RE}_c^l$ is the number of frequency-domain resource elements (REs) available for transmission scheduled data on the $l$-th time-domain symbol of the c-th scheduled carrier;

$v_c$ is a layer indication value for the c-th scheduled carrier; where c = 0, ... C - 1; $l$ = 0, ... L - 1;

Output parameters are:

the following two parameters for layer mapping of scheduled time-domain symbol $l$ on the scheduled carrier c need to be calculated:

$\text{start\_syb}_c^l$   :   starting symbol position of modulated output QAM symbols

$$d^{(q)}(0), \ldots, d^{(q)}(M^{(q)}_{\text{symb}} - 1) \; ;$$

$\text{num\_syb}^l_c$ : the number of modulated output QAM symbols $d^{(q)}(0), \ldots, d^{(q)}(M^{(q)}_{\text{symb}} - 1)$ .

According to the above parameters, one or more modulation symbols $d^{(q)}(\text{start\_syb}^l_c), \ldots, d^{(q)}(\text{num\_syb}^l_c + \text{start\_syb}^l_c - 1)$ are determined for layer mapping of scheduled time-domain symbol $l$ on the scheduled carrier i, which is used as the input parameter for performing layer mapping of time-domain symbol $l$ on the scheduled carrier c to perform layer mapping.

The following example illustrates the process of calculating $\text{start\_syb}^l_c$ and $\text{num\_syb}^l_c$.

It is assumed that the number of scheduled carriers is C=3, and the layer indication of each carrier is: $v_{c=0} = 1$, $v_{c=1} = 2$, $v_{c=2} = 3$,
a scheduling symbol length L=2, the number of frequency domain resources per symbol per carrier:

Symbol 0: $\text{RE}^{l=0}_{c=0} = 24$, $\text{RE}^{l=0}_{c=1} = 36$, $\text{RE}^{l=0}_{c=2} = 48$ ;

Symbol 1: $\text{RE}^{l=1}_{c=0} = 36$, $\text{RE}^{l=1}_{c=1} = 24$, $\text{RE}^{l=1}_{c=2} = 48$ .

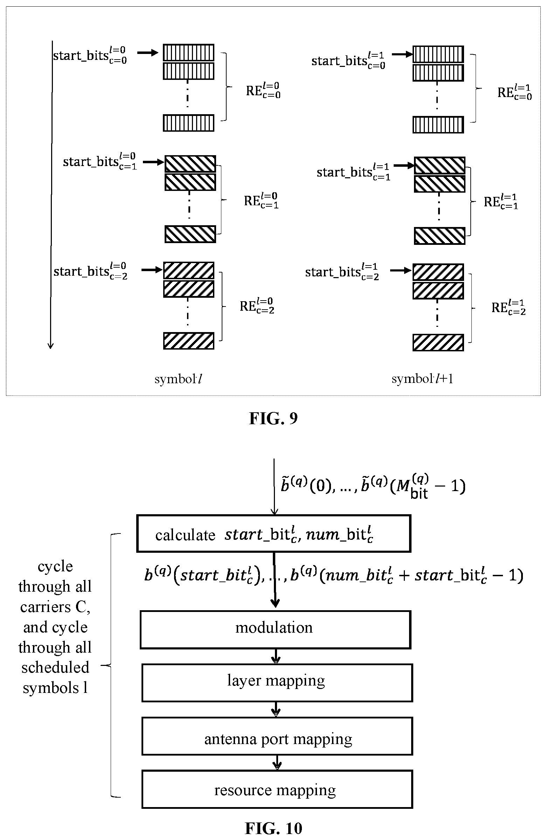

As shown in FIG. 9, it is to first calculate from the first symbol l=0:

first carrier: $\text{start\_syb}^{l=0}_{c=0} = 0$ , note: since this is the first mapped carrier/symbol, it starts from 0

$$\text{tmp} = \text{start\_syb}^{l=0}_{c=0} + v_{c=0} * \text{RE}^{l=0}_{c=0} = 0 + 24 * 1 = 24$$

$$\text{num\_syb}^{l=0}_{c=0} = v_{c=0} * \text{RE}^{l=0}_{c=0} = 24$$

Second carrier: $\text{start\_syb}^{l=0}_{c=1} = \text{tmp} = 24$

$$\text{tmp} = \text{start\_syb}^{l=0}_{c=1} + v_{c=1} * \text{RE}^{l=0}_{c=1} = 24 + 36 * 2 = 96$$

$$\text{num\_syb}^{l=0}_{c=1} = v_{c=1} * \text{RE}^{l=0}_{c=1} = 72$$

Third carrier: $\text{start\_syb}^{l=0}_{c=2} = \text{tmp} = 96$

[0483] $$\text{tmp} = \text{start\_syb}^{l=0}_{c=2} + v_{c=2} * \text{RE}^{l=0}_{c=2} = 96 + 48 * 3 = 240$$

$$\text{num\_syb}^{l=0}_{c=2} = v_{c=2} * \text{RE}^{l=0}_{c=2} = 144$$

Now it is to calculate the second symbol:

First carrier: $\text{start\_syb}^{l=1}_{c=0} = \text{tmp} = 240$

$$\text{tmp} = \text{start\_syb}^{l=1}_{c=0} + v_{c=0} * \text{RE}^{l=1}_{c=0} = 240 + 36 * 1 = 276$$

$$\text{num\_syb}_{c=0}^{l=1} = v_{c=0} * \text{RE}_{c=0}^{l=1} = 36$$

Second carrier: $\text{start\_syb}_{c=1}^{l=1} = \text{tmp} = 276$

$$\text{tmp} = \text{start\_syb}_{c=1}^{l=1} + v_{c=1} * \text{RE}_{c=1}^{l=1} = 276 + 24 * 2 = 324$$

$$\text{num\_syb}_{c=1}^{l=1} = v_{c=1} * \text{RE}_{c=1}^{l=1} = 48$$

Third carrier: $\text{start\_syb}_{c=2}^{l=1} = \text{tmp} = 324$

$$\text{tmp} = \text{start\_syb}_{c=2}^{l=1} + v_{c=2} * \text{RE}_{c=2}^{l=1} = 324 + 48 * 3 = 468$$

$$\text{num\_syb}_{c=2}^{l=1} = v_{c=2} * \text{RE}_{c=2}^{l=1} = 144$$

According to the calculated $\text{start\_syb}_c^l$ and $\text{num\_syb}_c^l$ , one or more modulation symbols

$d^{(q)}(\text{start\_syb}_c^l), \dots, d^{(q)}(\text{num\_syb}_c^l + \text{start\_syb}_c^l - 1)$   are determined for layer mapping of scheduled time-domain symbol *l* on the scheduled carrier c, which is used as the input parameter for performing layer mapping of time-domain symbol *l* on the scheduled carrier i to perform layer mapping. Accordingly, according to output of the layer mapping of time-domain symbol *l* on the scheduled carrier l, antenna port mapping and resource mapping process are performed.

Taking the above assumptions for calculating the parameters $\text{start\_syb}_c^l$ and $\text{num\_syb}_c^l$ as an example, the result of layer mapping is illustrated as follow.

The number of scheduled carriers is C=3, and the layer indication of each carrier is: $v_{c=0}$ = 1, $v_{c=1}$ = 2, $v_{c=2}$ = 3.

The scheduling symbol length L=2, the number of frequency domain resources per symbol per carrier:

Symbol 0: $\text{RE}_{c=0}^{l=0}$=24, $\text{RE}_{c=1}^{l=0}$=36, $\text{RE}_{c=2}^{l=0}$=48 ;

Symbol 1: $\text{RE}_{c=0}^{l=1}$=36, $\text{RE}_{c=1}^{l=1}$=24, $\text{RE}_{c=2}^{l=1}$=48 .

Then for symbol 0, carrier 0:

the input for the layer mapping is: $d^{(q)}\big(\text{start\_syb}_{c=0}^{l=0} = 0\big), \dots, d^{(q)}(24 - 1), \ v_m^0 = 1$ ;

the output of layer mapping is:

$$x(0) = \big[x^{(0)}(0)\big]^{\text{T}} = \big[d^{(0)}(0)\big]^{\text{T}}$$

$$x(1) = \big[x^{(0)}(1)\big]^{\text{T}} = \big[d^{(0)}(1)\big]^{\text{T}}$$

$$x(2) = \big[x^{(0)}(2)\big]^{\text{T}} = \big[d^{(0)}(2)\big]^{\text{T}}$$

$$\dots\dots$$

$$x(24 - 1) = \big[x^{(0)}(23)\big]^{\text{T}} = \big[d^{(0)}(23)\big]^{\text{T}}.$$

Then for symbol 0, carrier 1:

the input for the layer mapping is: $d^{(q)}\left(\text{start\_syb}_{c=1}^{l=0} = 24\right), \dots, d^{(q)}(96-1), \ v_{\mathrm{m}}^{1} = 2$ ;

the output of layer mapping is:

$$x(24) = \left[x^{(0)}(0) , \ x^{(1)}(0)\right]^{T} = \left[d^{(0)}(24) , \ d^{(0)}(25)\right]^{T}$$

$$x(25) = \left[x^{(0)}(1) , \ x^{(1)}(1)\right]^{T} = \left[d^{(0)}(26) , \ d^{(0)}(27)\right]^{T}$$

$$x(26) = \left[x^{(0)}(2) , \ x^{(1)}(2)\right]^{T} = \left[d^{(0)}(28) , \ d^{(0)}(29)\right]^{T}$$

$$....$$

$$x(60-1) = \left[x^{(0)}(59) , \ x^{(1)}(59)\right]^{T} = \left[d^{(0)}(94) , \ d^{(0)}(95)\right]^{T}.$$

Then for symbol 0, carrier 2, the input for layer mapping is: $d^{(q)}\left(\text{start\_syb}_{c=2}^{l=0} = 96\right), \dots, d^{(q)}(240-1), \ v_{\mathrm{m}}^{2} = 3$ ;

the output of layer mapping is:

$$x(60) = \left[x^{(0)}(0) , \ x^{(1)}(0), \ x^{(2)}(0)\right]^{T} = \left[d^{(0)}(96) , \ d^{(0)}(97), \ d^{(0)}(98)\right]^{T}$$

$$x(61) = \left[x^{(0)}(1) , \ x^{(1)}(1), \ x^{(2)}(1)\right]^{T} = \left[d^{(0)}(99) , \ d^{(0)}(100), \ d^{(0)}(101)\right]^{T}$$

$$x(62) = \left[x^{(0)}(2) , \ x^{(1)}(2), \ x^{(2)}(2)\right]^{T} = \left[d^{(0)}(102) , \ d^{(0)}(103), \ d^{(0)}(104)\right]^{T}$$

$$... ...$$

$$x(108-1) = \left[x^{(0)}(107) , \ x^{(1)}(107), \ x^{(2)}(107)\right]^{T} =$$

$$\left[d^{(0)}(237) , \ d^{(0)}(238), \ d^{(0)}(239)\right]^{T}.$$

Then for symbol 1, carrier 0:

the input for the layer mapping is: $d^{(q)}\left(\text{start\_syb}_{c=0}^{l=1} = 240\right), \dots, d^{(q)}(276-1), \ v_{\mathrm{m}}^{0} = 1$ ;

the output of layer mapping is:

$$x(108) = \left[x^{(0)}(108)\,)\right]^T = \left[d^{(0)}(240)\,)\right]^T$$

$$x(109) = \left[x^{(0)}(109)\,\right]^T = \left[d^{(0)}(241)\,)\right]^T$$

$$x(110) = \left[x^{(0)}(110)\,\right]^T = \left[d^{(0)}(242)\,)\right]^T$$

$$\ldots\ldots$$

$$x(144-1) = \left[x^{(0)}(143)\,\right]^T = \left[d^{(0)}(275)\,)\right]^T.$$

Then for symbol 1, carrier 1:

the input for the layer mapping is: $d^{(q)}\left(\text{start\_syb}_{c=1}^{l=0} = 276\right), \ldots, d^{(q)}(324-1), \; v_m^1 = 2$

the output of layer mapping is:

$$x(144) = \left[x^{(0)}(144)\,,\; x^{(1)}(144)\right]^T = \left[d^{(0)}(276)\,,\; d^{(0)}(277)\right]^T$$

$$x(145) = \left[x^{(0)}(145)\,,\; x^{(1)}(145)\right]^T = \left[d^{(0)}(278)\,,\; d^{(0)}(279)\right]^T$$

$$x(146) = \left[x^{(0)}(146)\,,\; x^{(1)}(146)\right]^T = \left[d^{(0)}(280)\,,\; d^{(0)}(281)\right]^T$$

$$\ldots\ldots$$

$$x(168-1) = \left[x^{(0)}(167)\,,\; x^{(1)}(167)\right]^T = \left[d^{(0)}(321)\,,\; d^{(0)}(323)\right]^T.$$

Then for symbol 1, carrier 2:

the input for the layer mapping is: $d^{(q)}\left(\text{start\_syb}_{c=2}^{l=0} = 324\right), \ldots, d^{(q)}(468-1), \; v_m^2 = 3$ ;

the output of layer mapping is:

$$x(168) = \left[x^{(0)}(168), \ x^{(1)}(168), \ x^{(2)}(168)\right]^{T}$$

$$= \left[d^{(0)}(324), \ d^{(0)}(325), \ d^{(0)}(326)\right]^{T}$$

$$x(169) = \left[x^{(0)}(169), \ x^{(1)}(169), \ x^{(2)}(169)\right]^{T}$$

$$= \left[d^{(0)}(327), \ d^{(0)}(328), \ d^{(0)}(329)\right]^{T}$$

$$x(170) = \left[x^{(0)}(170), \ x^{(1)}(170), \ x^{(2)}(170)\right]^{T}$$

$$= \left[d^{(0)}(330), \ d^{(0)}(331), \ d^{(0)}(332)\right]^{T}$$

$$... ...$$

$$x(216-1) = \left[x^{(0)}(215), \ x^{(1)}(215), \ x^{(2)}(215)\right]^{T} =$$

$$\left[d^{(0)}(465), \ d^{(0)}(466), \ d^{(0)}(467)\right]^{T}.$$

Configuration 3: modulation orders $Q_m$ of the codeword on multiple carriers are different, and the mapping layer number is different.

In some embodiments, when one codeword has different modulation orders and different mapping layer numbers on the multiple carriers, performing modulation processing on the bit information of all scheduled carriers of the scheduled codeword according to the modulation order to obtain a modulation symbol corresponding to the scheduled codeword, includes:

determining a starting bit position and bit length for modulating the bit information of the scheduled carrier, on each carrier and each time-domain symbol; performing modulation processing on the bit information according to the starting bit position and bit length to obtain the modulation symbol.

In this embodiment, the modulation order $Q_m$ being different means that indicated values of $Q_m$ are different on multiple scheduled carriers, for example, scheduled carrier 1 adopts QPSK ($Q_m$=2), and scheduled carrier 1 adopts 64QAM, ($Q_m$=6).

The layer number indication layer being different means that for all scheduled carriers transmitting codeword 0, the layer number indication in_layer1 may be different, and for all scheduled carriers transmitting codeword 1, the layer number indication layer2 may also be different. The method of determining the mapping layer number is not described in detail here.

Since the modulation order $Q_m$ value may vary across scheduled carriers, it is necessary to determine the starting bit position of each time domain symbol of each scheduled carrier from the beginning of the modulation process, that is, for the input parameters of the modulation process of the transport block of codeword q, which bit position in

$\tilde{b}^{(q)}(0), ..., \tilde{b}^{(q)}\left(M_{\text{bit}}^{(q)} - 1\right)$ is to begin modulation and the number of bits involved in modulation. Subsequently, the layer mapping process, antenna port mapping process, and resource mapping process are executed in sequence.

In this embodiment, the mapping order of the modulation symbols can be determined in the following two schemes:

1): first mapping "all antenna ports of the previous carrier", and then mapping "all antenna ports of the next carrier";
2: first mapping "antenna port 0 of all carriers", then mapping "antenna port 1 of all carriers", then mapping "antenna port 2 of all carriers", and so on.

As shown in FIG. 10, it includes:

step 1: modulation process, in which the modulation method is shown in Table 1. The parameter input of the modulation process is: $\tilde{b}^{(q)}(0), ..., \tilde{b}^{(q)}(M_{\text{bit}}^{(q)} - 1)$.

For each codeword q, assuming that bit-level processing (i.e., scrambled by a scrambling code, after channel coding processing) output is used as an input of the modulation process, its bit information is:

$\tilde{b}^{(q)}(0), \dots, \tilde{b}^{(q)}(M_{\text{bit}}^{(q)} - 1)$ , where $M_{\text{bit}}^{(q)}$ represents a sum of bit information to be transmitted on all scheduled

carriers, and $M_{\text{bit}}^{(q)}$ bits of information are transmitted on all scheduled carriers, and each scheduled carrier only transmits a part of the information. In this embodiment, it needs to determine the starting bit position and bit length of each scheduled time domain symbol on each scheduled carrier.

The following describes the process of determining the starting symbol position $\text{start\_bit}_c^l$ and $\text{num\_bit}_c^l$ for layer mapping on each symbol of each carrier.

It is assumed that the number of scheduled carriers is C, and a layer indication for codeword q for each carrier is denoted as $v_c$; and the modulation order for each scheduled carrier is $Q_m^c$ .

It is assumed that the number of scheduled time-domain symbols is L; for symbol *l* and carrier c, the number of resource elements (REs) available for mapping scheduled data is $\text{RE}_c^l$ .

It is assumed that $\tilde{b}^{(q)}(0), \dots, \tilde{b}^{(q)}(M_{\text{bit}}^{(q)} - 1)$ is used as input information bit.

Initializing a temporary variable: tmp=0; and the following loop is performed from *l*=0 to L-1:

$\{$
performing the following steps from c=0 to C-1:

$\{$

$\text{start\_bit}_c^l = \text{tmp}$
$\text{num\_bit}_c^l = Q_m^c * v_c * \text{RE}_c^l$ //the number of bits processed during modulation is equal to a product of the number of layers, the number of resources available for data mapping and the modulation order.
$\text{tmp} = \text{start\_bit}_c^l + \text{num\_bit}_c^l$ //an end of the bits for performing the current modulation serve as the starting for the next modulation
sequence $\tilde{b}^{(q)}(\text{start\_bit}_c^l), \dots, b^{(q)}\text{start\_bit}_c^l + \text{num\_bit}_c^l - 1)$ and $Q_m^c$ as input to the l modulation, performing the modulation.

$\}$

$\}$

It is to be noted that: the modulation process is performed on one or more data information corresponding to scheduled time-domain symbol of each scheduled carrier c; the corresponding antenna port mapping and resource mapping processes are subsequently performed based on the output of the modulation process.

The following example illustrates the implementation process for determining the starting bit position and bit length for each scheduled symbol of scheduled carrier.

Assumptions for input parameters:

for codeword q, there are C scheduled carriers, and a scheduled data duration is L symbols;

$\text{RE}_c^l$ is the number of frequency-domain resource elements (REs) available for transmission scheduled data on the *l*-th time-domain symbol of the c-th scheduled carrier;

$Q_m^c$ represents the modulation order for the c-th scheduled carrier, with possible values of 1, 2, 4, 6, 8, and 10;

$v_c$ is a layer indication value for the c-th scheduled carrier; where c = 0, ... C - 1; *l* = 0, ... L - 1.

Output parameters are:

the starting bit number $\text{start\_bits}_c^l$ of each symbol of each scheduled carrier and the number of bits $\text{num\_bit}_c^l$ for QAM modulation are needed to be calculated.

The following example illustrates the process of calculating $\text{start\_syb}_c^l$ and $\text{num\_syb}_c^l$, and the modulation process.

It is assumed that the number of scheduled carriers is C=3, the modulation order of each carrier is $Q_m^0 = 2, Q_m^1 = 4, Q_m^2 = 2$, and the layer indication of each carrier is: $v_{c=0} = 1$, $v_{c=1} = 2$, $v_{c=2} = 3$, a scheduling symbol length L=2, the number of frequency domain resources per symbol per carrier:

Symbol 0: $\text{RE}_{c=0}^{l=0}=24$, $\text{RE}_{c=1}^{l=0}=36$, $\text{RE}_{c=2}^{l=0}=48$ ;

Symbol 1: $\text{RE}_{c=0}^{l=1}=36$, $\text{RE}_{c=1}^{l=1}=24$, $\text{RE}_{c=2}^{l=1}=48$ .

As shown in FIG. 9, it is to first calculate from the first symbol:

first carrier: $\text{start\_bits}_{c=0}^{l=0} = 0$ , note: since this is the first mapped carrier/symbol, it starts from 0

$$\text{tmp} = \text{start\_bits}_{c=0}^{l=0} + v_{c=0} * Q_m^{c=0} * \text{RE}_{c=0}^{l=0} = 0 + 24 * 1 * 2 = 48$$

$$\text{num\_bit}_{c=0}^{l=0} = v_{c=0} * Q_m^{c=0} * \text{RE}_{c=0}^{l=0} = 48$$

Second carrier: $\text{start\_bits}_{c=1}^{l=0} = \text{tmp}$

$$\text{tmp} = \text{start\_bits}_{c=1}^{l=0} + v_{c=1} * Q_m^{c=1} * \text{RE}_{c=1}^{l=0} = 48 + 36 * 2 * 4 = 336$$

$$\text{num\_bit}_{c=1}^{l=0} = v_{c=1} * Q_m^{c=1} * \text{RE}_{c=1}^{l=0} = 288$$

Third carrier: $\text{start\_bits}_{c=2}^{l=0} = \text{tmp}$

$$\text{tmp} = \text{start\_bits}_{c=2}^{l=0} + v_{c=2} * Q_m^{c=2} * \text{RE}_{c=2}^{l=0} = 336 + 48 * 3 * 2 = 624$$

$$\text{num\_bit}_{c=2}^{l=0} = v_{c=2} * Q_m^{c=2} * \text{RE}_{c=2}^{l=0} = 288$$

Now it is to calculate the second symbol:

First carrier: $\text{start\_bits}_{c=0}^{l=1} = \text{tmp}$

$$\text{tmp} = \text{start\_bits}_{c=0}^{l=1} + v_{c=0} * Q_m^{c=0} * \text{RE}_{c=0}^{l=1} = 624 + 36 * 1 * 2 = 696$$

$$\text{num\_bit}_{c=0}^{l=1} = v_{c=0} * Q_m^{c=0} * \text{RE}_{c=0}^{l=1} = 72$$

Second carrier: $\text{start\_bits}_{c=1}^{l=1} = \text{tmp}$

$$\text{tmp} = \text{start\_bits}_{c=1}^{l=1} + v_{c=1} * Q_m^{c=1} * \text{RE}_{c=1}^{l=1} = 696 + 24 * 2 * 4 = 888$$

$$\text{num\_bit}_{c=1}^{l=1} = v_{c=1} * Q_m^{c=1} * \text{RE}_{c=1}^{l=1} = 192$$

Third carrier: $\text{start\_bits}_{c=2}^{l=1} = \text{tmp}$

$$\text{tmp} = \text{start\_bits}_{c=2}^{l=1} + v_{c=2} * Q_m^{c=2} * \text{RE}_{c=2}^{l=1} = 888 + 48 * 3 * 2 = 1176$$

$$\text{num\_bit}_{c=2}^{l=1} = v_{c=2} * Q_m^{c=2} * \text{RE}_{c=2}^{l=1} = 288$$

Then for symbol 0, carrier 0:

the input for the symbol modulation is:

$$\tilde{b}^{(q)}\left(\text{start\_bits}_{c=0}^{l=0} = 0\right), \dots, \tilde{b}^{(q)}(48 - 1), \ Q_m^0 = 2$$

the number of modulated bits is: 48;
the modulation output is: $d^{(q)}(0) \dots d^{(q)}(24 - 1)$;
the output modulation symbol is: 24.

For symbol 0, carrier 1:

the input for the symbol modulation is: $\tilde{b}^{(q)}\left(start\_bits_{c=1}^{l=0} = 48\right), \dots, b^{(q)}(336 - 1), \ Q_m^1 = 4$ ;
the number of modulated bits is: 288;
the modulation output is: $d^{(q)}(24) \dots d^{(q)}(96 - 1)$
the output modulation symbol is: 72.

For symbol 0, carrier 2:

the input for the symbol modulation is:

$$\tilde{b}^{(q)}\left(start\_bits_{c=2}^{l=0} = 336\right), \dots, \tilde{b}^{(q)}(624 - 1), \ Q_m^2 = 2$$

the number of modulated bits is: 288;
the modulation output is: $d^{(q)}(96) \dots d^{(q)}(240 - 1)$;
the output modulation symbol is: 144.

For symbol 1, carrier 0:

the input for the symbol modulation is:

$$\tilde{b}^{(q)}\left(start\_bits_{c=0}^{l=1} = 624\right), \dots, \tilde{b}^{(q)}(696 - 1), \ Q_m^0 = 2$$

the number of modulated bits is: 72;
the modulation output is: $d^{(q)}(240) \dots d^{(q)}(276 - 1)$
the output modulation symbol is: 36.

Then for symbol 1, carrier 1, the input for the symbol modulation is:

$$\tilde{b}^{(q)}(start\_bits_{i=1}^{c=0} = 696), ..., \tilde{b}^{(q)}(888 - 1), \; Q_m^1 = 4$$

the number of modulated bits is: 192;
the modulation output is: $d^{(q)}(276) ... d^{(q)}(324 - 1)$
the output modulation symbol is: 48.

For symbol 1, carrier 2:

the input for the symbol modulation is:

$$\tilde{b}^{(q)}\big(start\_bits_{i=2}^{l=0} = 888\big), ..., \tilde{b}^{(q)}(1176 - 1), \; Q_m^2 = 2$$

the number of modulated bits is: 288;
the modulation output is: $d^{(q)}(324) ... d^{(q)}(468 - 1)$
the output modulation symbol is: 144.

The transmitter performs modulation processing for each scheduled carrier/each time-domain symbol based on the above inputs. Subsequently, the corresponding layer mapping, antenna port mapping, and resource mapping processes are performed based on the modulation outputs of each scheduled carrier/each time-domain symbol.

As an optional embodiment, the performing symbol-level processing on the codeword according to the modulation order and the mapping layer number to obtain transmission data, includes:
determining a starting position and data information amount of a data information sequence of the codeword on each carrier or each time-domain symbol; performing symbol-level processing on the codeword according to the starting position and the data information amount to obtain the transmission data; where the data information sequence is input data of the symbol-level processing.

For the above three configurations, when performing symbol-level processing on the codeword, it is necessary to determine the starting position and data information amount (such as the number of symbols) of the information sequence of the codeword on each carrier or each time-domain symbol. The data information sequence can be bit information of the codeword (for the modulation process), symbols obtained after modulation (for the layer mapping process), a result of layer mapping (for the antenna port mapping process), and a result of antenna port mapping (for the resource mapping process).

In some embodiments, the codeword includes a plurality of data information sequences;

each data information sequence includes: data information of the codeword on a time domain symbol of a carrier; or,

each data information sequence includes: data information of the codeword on all time domain symbols of a carrier.

When one transport block is transmitted on multiple scheduled carriers, the above three configurations are processed based on each carrier/each symbol (such as one or more steps in modulation, layer mapping, antenna port mapping, and resource mapping). Accordingly, for all data information sequences $z^{(q)}(0), ... , z^{(q)}(M^{(q)} - 1)$ of one transport block, it is necessary to calculate the starting position of the data information sequence of the corresponding carrier/-corresponding symbol and the number (num) of data information, in order to perform the corresponding processing.

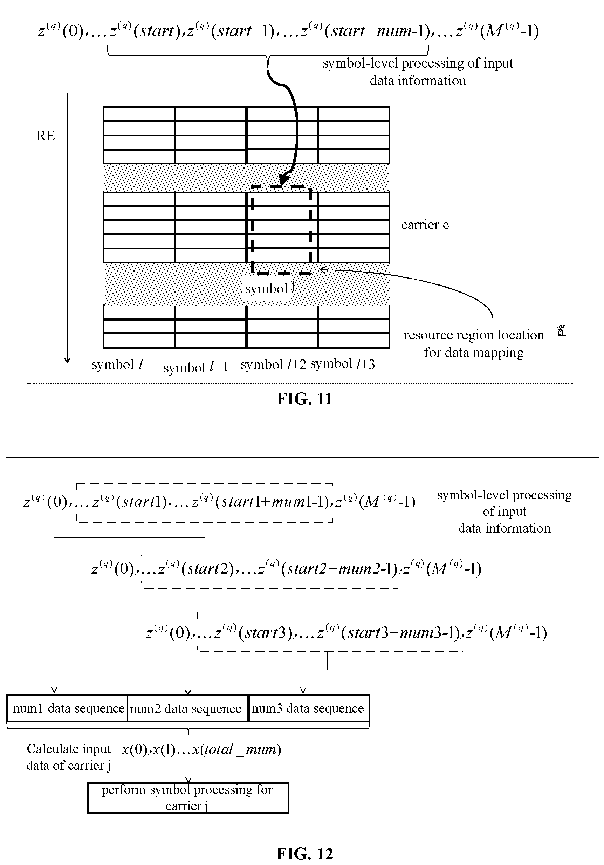

As shown in FIG. 11, considering the processing process based on the scheduled carrier, in order to reduce the modification of the existing solution, to-be-processed data information in different regions of a carrier can be put into a data sequence, and then processing based on the carrier is performed. This execution process includes the following two methods:
Method 1: based on carrier j (i.e., c=j)/symbol *l* as a resource region unit, for carrier j, all to-be-processed data information of symbol *l* are put into a data sequence.

The process is as follows.

It is assumed that the number of scheduled carriers is C, and a layer indication for codeword q for each carrier is denoted as $v_c$; and the modulation order of each scheduled carrier is $Q_m^c$.

It is assumed that the number of scheduled time-domain symbols is L; for symbol *l* and carrier c, the number of resource elements (REs) available for mapping scheduled data is $RE_c^l$.

It is assumed that $\tilde{z}^{(q)}(0), \ldots, \tilde{z}^{(q)}(M^{(q)} - 1)$ is to-be-processed input data.

It is assumed that a to-be-processed data sequence of to-be-determined carrier j is $\tilde{x}^{(j)}$, where $\tilde{x}^{(j)} = NULL$ //the to-be-processed data sequence of the carrier j is cleared.

*end_x = 0* // to-be-processed data sequence is an end position or number of $\tilde{x}^{(j)}$.

Initializing a temporary variable: tmp=0; and the following loop is performed from *l*=0 to L-1:

{

performing the following steps from c=0 to C-1:

{

$start_c^l = $ tmp //copy the starting position of the sequence $\tilde{z}^{(q)}(0), \ldots, \tilde{z}^{(q)}(M^{(q)} - 1)$

$num_c^l = f(Q_m^c, v_c, RE_c^l)$ //the to-be-processed data amount is determined based on the modulation order, layer indication, or resource number.

$tmp = start_c^l + num_c^l$ //an end of the data processed in this execution is used as starting for the next processing of data

if c=j, performing the following steps //the to-be-determined carrier j is identical to the carrier c in the current loop

{

$\tilde{x}^{(j)}(end\_x) \quad ) \quad , \ldots, \tilde{x}^{(j)}(end\_x + num_c^l - 1 \quad )$ $= \tilde{z}^{(q)}(start_c^l), \ldots, z^{(q)}start_c^l + num_c^l - 1$)//copy $num_c^l$ data from data input to a transport block into $\tilde{x}^{(j)}$

$end\_x = end\_x + num_c^l \quad$ //update the end position/number of data for carrier j

}

}//terminate carrier cycle

}//terminate symbol cycle

It is to be noted that the above process can perform the above steps on different carriers j. The actual effect of the above process is the same as that of configurations 1 to 3, only the expression manner is different. The calculation method of the above $f(Q_m^c, v_c, RE_c^l)$ depends on different technical solutions, which is similar to the method of calculating one or more parameters of $f(Q_m^c, v_c, RE_c^l)$ in the embodiments of configurations 1 to 3, and will not be repeated here.

The implementation effect of this embodiment is shown in FIG. 12. Assuming that 3 symbols are scheduled, position information of three data regions in carrier j and the data length that can be transmitted are calculated, and the input data (z data) corresponding to the three regions are placed in a data sequence (x sequence). Then the symbol processing process based on carrier j is performed (including: one or more steps of modulation, layer mapping, antenna port mapping, and resource mapping). For example, for the resource mapping of carrier j, mapping the frequency domain resources of the carrier j is first performed (from the resource index k-0 to the maximum scheduled resource index RE-1 of of the carrier j), and then mapping of the time domain symbol resources of the carrier j (from symbol l=0 to the maximum scheduled time domain symbol L-1) is performed, that is, first performing all frequency domain resource mappings of the first scheduled symbol, and then performing all frequency domain resource mappings of the second scheduled symbol, and so on.

Further, for this data mapping method, at the receiver, since it is necessary to calculate the starting position and duration of each carrier/each symbol, this will lengthen the receiving processing time, that is, the minimum data demodulation/decoding time (N1) becomes longer. Generally, for multi-carrier scheduling, when the scheduling symbol length of each scheduled carrier is L symbols, the N1 value is extended to N1+X symbols, where X is an integer greater than or equal to 1, and this parameter can be set to a fixed value (such as: X=1, 2); it can also be related to L.

Correspondingly, when the network device indicates a hybrid automatic repeat request acknowledgement (HARQ-ACK) feedback, the value of the HARQ-ACK feedback timing indicated by the network device is k1, and a calculated feedback time is not less than N1+X.

Method 2: based on the scheduling of carrier j as a resource region unit; for the carrier j, all to-be-processed data information of symbol $l$ are put into a data sequence.

The method 2 is to use the scheduled carrier as a resource region unit to calculate the data start position of the carrier and the to-be-processed data amount. The end of the previous carrier data is used as the start of processing the next carrier data.

The process is as follows.

It is assumed that the number of scheduled carriers is C, and a layer indication for codeword q for each carrier is denoted as $v_c$; and the modulation order of each scheduled carrier is $Q_m^c$.

It is assumed that the number of scheduled time-domain symbols is L; for symbol $l$ and carrier c, the number of resource elements (REs) available for mapping scheduled data is $RE_c^l$.

It is assumed that $\tilde{z}^{(q)}(0), \dots, \tilde{z}^{(q)}(M^{(q)} - 1)$ is to-be-processed input data.

It is assumed that a to-be-processed data sequence of to-be-determined carrier j is $\tilde{x}^{(j)}$, where $\tilde{x}^{(j)} = NULL$ //the to-be-processed data sequence of the carrier j is cleared.

Initializing a temporary variable: tmp=0; and performing the following process from j=0 to C-1:

$$\{$$

$$start = tmp$$

$$num_j = Q_m^j * v_j * RE_j \quad \text{//the to-be-processed data amount is determined}$$

based on the modulation order/layer indication/carrier resource count (where $RE_j$ represents the number of available frequency-domain resources on all scheduled symbols of carrier j)

$$tmp = start + num_j \quad \text{//the end of data processed for the current carrier}$$

is used as the starting position for the execution of the next carrier

$$\tilde{x}^{(j)}(0), \tilde{x}^{(j)}(1) \dots \tilde{x}^{(j)}(num_j - 1) =$$

$$\tilde{z}^{(q)}(0), \dots \tilde{z}^{(q)}(start), \dots \tilde{z}^{(q)}(start + num_j - 1), \tilde{z}^{(q)}(M^{(q)} - 1),$$

$$\}\text{//terminate carrier cycle}$$

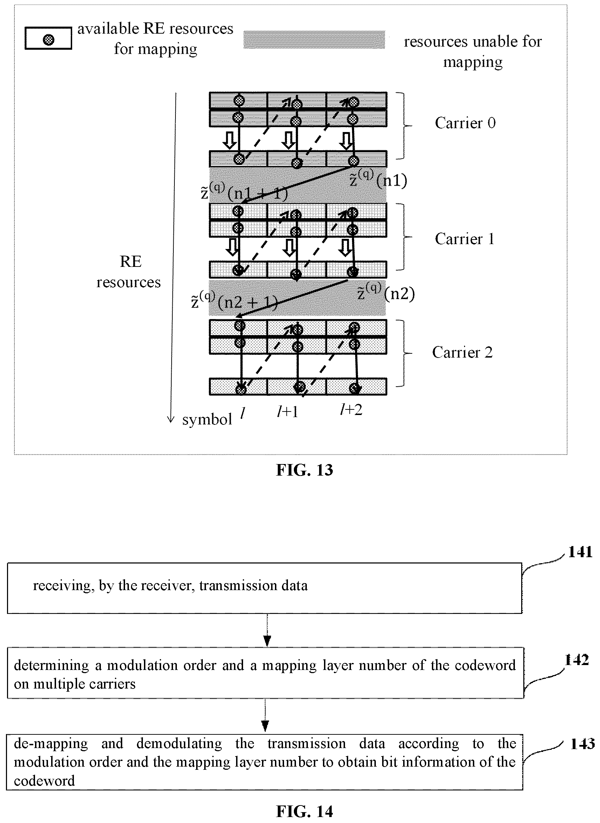

The implementation effect of this embodiment is shown in FIG. 13. The data at the last RE of the last scheduled symbol of the carrier 0 is $\tilde{z}^{(q)}(n1)$; the data at the first RE of the first scheduled symbol of the carrier 1 is $\tilde{z}^{(q)}(n1 + 1)$. That is, on scheduling resources of the carrier 0 and carrier 1, their data mapping relationships are continuously connected end-to-start. Similarly, the data at the last RE of the last scheduled symbol of the carrier 1 is $\tilde{z}^{(q)}(n2)$; the data at the first RE of the first scheduled symbol of the carrier 2 is $\tilde{z}^{(q)}(n2 + 1)$. That is, on scheduling resources of the carrier 1 and carrier 2, their data mapping relationships are continuously connected end-to-start. Within each carrier, data is still mapped first in the frequency domain, then in the time domain (e.g., first mapping frequency-domain resources of the carrier j, for example, first performing the mapping of all frequency-domain resources for the first scheduled symbol, then performing the mapping of all frequency-domain resources for the second scheduled symbol, and so on).

When processing data, the transmitter handles the data $\tilde{z}^{(q)}(0) \dots \tilde{z}^{(q)}(n1)$ for the carrier 0. This data can be input data used for modulation or other data. For the carrier 1, the processed data is: $\tilde{z}^{(q)}(n1 + 1) \dots \tilde{z}^{(q)}(n2)$; this data can be input data used for modulation or other data.

In the embodiment of the present application, when data transmission is performed based on multiple carriers, the modulation order and the mapping layer number of the codeword of the scheduled transport block on the multiple carriers are determined; symbol-level processing is performed on the codeword according to the modulation order and the mapping layer number to obtain transmission data. The embodiment of the present application provides a method for symbol-level processing under SCOMX, and realizes the processing technical solution when the modulation order and/or layer indication of different carriers are the same or different, thereby ensuring the scheduling flexibility. Appropriate transmission parameters are selected for each carrier according to actual channel conditions, which can reduce signaling overhead during data processing. In addition, the present application makes minor modifications to the existing protocol and can minimize complexity of the existing user equipment.

As shown in FIG. 14, one embodiment of the present application further provides a multi-carrier data processing method, which is applied to a receiver. The method includes:

step 141: receiving, by the receiver, transmission data, where the transmission data is data obtained by a transmitter through performing symbol-level processing on a codeword of a scheduled transport block;

step 142: determining a modulation order and a mapping layer number of the codeword on multiple carriers, where the multiple carriers are carriers in a multi-carrier serving cell (SCOMX);

step 143: de-mapping and demodulating the transmission data according to the modulation order and the mapping layer number to obtain bit information of the codeword;

for a codeword, the modulation order and the mapping layer number on the multiple carriers are the same; or,

for a codeword, the modulation order on the multiple carriers is the same and the mapping layer numbers are different; or,

for a codeword, the modulation orders on the multiple carriers are different and the mapping layer numbers on the multiple carriers are different.

In this embodiment, the transmitter is a data transmitter, which can be a user equipment or a network device (such as a base station); the receiver is a data receiver, which can be a network device or a user equipment. For uplink transmission, the transmitter is a user equipment, and the receiver is a network device; for downlink transmission, the transmitter is a network device, and the receiver is a user equipment. The network device schedules uplink transmission or downlink transmission.

Since the data received by the receiver is obtained after symbol-level processing, the receiver needs to demodulate and de-map the data after receiving the data. Therefore, it is necessary to determine the modulation order and mapping layer number of the codeword on multiple carriers to obtain the bit information corresponding to the codeword.

The modulation order and mapping layer number of the codeword on multiple carriers can include various situations:

1) for a codeword, values of modulation orders of multiple scheduled carriers are the same, and mapping layer numbers of layer indications are also the same;

2) values of modulation orders of multiple scheduled carriers are the same, but values of layer indications are different;

3) values of modulation orders of multiple scheduled carriers may be different, and values of layer indications may also be different.

In this embodiment of the present application, after receiving the transmission data, the receiver determines the modulation order and mapping layer number of the codeword of the scheduled transport block on the multi-carrier; de-maps and demodulates the codeword according to the modulation order and mapping layer number to obtain the bit information of the codeword. The embodiment of the present application provides a method for symbol-level processing under SCOMX, and realizes the processing technical solution when the modulation order and/or layer indication of different carriers are the same or different, thereby ensuring the scheduling flexibility. Appropriate transmission parameters are selected for each carrier according to actual channel conditions, which can reduce signaling overhead during data processing. In addition, the present application makes minor modifications to the existing protocol and can minimize complexity of the existing user equipment.

As an optional embodiment, for a codeword, the mapping layer number of the codeword in the multiple carriers is the same; and determining the mapping layer number of the codeword on the multiple carriers includes at least one of the following:

(1) if the multiple carriers all carry a codeword of one scheduled transport block, determining the mapping layer number of the codeword on the multiple carriers according to a first layer number indication;

(2) if the multiple carriers all carry codewords of two scheduled transport blocks, determining the mapping layer number of the codeword of each scheduled transport block on the multiple carriers respectively according to a second layer number indication;

(3) if a first portion of the multiple carriers carries codewords of two scheduled transport blocks and a second portion of the multiple carriers carries a codeword of one scheduled transport block, then determining the mapping layer number of the codeword of each scheduled transport block on the multiple carriers according to the second layer number indication, or determining the mapping layer number of the codeword of each scheduled transport block on the multiple carriers according to the first layer number indication and the second layer number indication, respectively;

Where the first layer number indication indicates the mapping layer number of a codeword of a scheduled transport block; and the second layer number indication indicates a sum of the mapping layer numbers corresponding to the codewords of two scheduled transport blocks.

In this embodiment, when determining the mapping layer number, it is determined respectively according to conditions of the scheduled transport blocks carried by multiple carriers. The network device indicates the mapping layer number corresponding to the codeword through the first layer number indication and/or the second layer number indication. The first layer number indication can only indicate the mapping layer number of one codeword (which can be the mapping layer number of the codeword of the first transport block, or the mapping layer number of the codeword of the second transport block), and the second layer number indication is used to indicate the sum of the mapping layer numbers corresponding to two codewords.

For the SCOMX cell, before performing de-mapping, the mapping layer number of the codeword needs to be determined, and the determination method is divided into the following three types of situations.

Case 1

In some embodiments, if the multiple carriers all carry a codeword of one scheduled transport block, determining the mapping layer number of the codeword on the multiple carriers according to the first layer number indication includes at least one of the following:

a: if the multiple carriers all carry a codeword of a first transport block, determining a mapping layer number corresponding to the codeword according to a layer number indication 1 corresponding to the first transport block;
b: if the multiple carriers all carry a codeword of a second transport block, determining a mapping layer number corresponding to the codeword according to a layer number indication 2 corresponding to the second transport block;
c: if a first portion of the multiple carriers carries the codeword of the first transport block, and a second portion of the multiple carriers carries the codeword of the second transport block, determining a mapping layer number of the codeword in the first portion of the multiple carriers according to the layer number indication 1 corresponding to the first transport block, and determining a mapping layer number of the codeword in the second portion of the multiple carrier according to the layer number indication 2 corresponding to the second transport block.

In this embodiment, for a codeword, the mapping layer number of the codeword on the multiple carriers is the same, that is, the modulation orders of the codeword on the multiple carriers are the same, and the mapping layer numbers are also the same. All carriers carry a codeword of one scheduled transport block, and the scheduled transport block can be the first transport block or the second transport block.

Case 2

In some embodiments, if the multiple carriers all carry codewords of two scheduled transport blocks, determining the mapping layer number of the codeword of each scheduled transport block on the multiple carriers according to the second layer number indication, includes:
according to the second layer number indication, determining that in the multiple carriers, the mapping layer number corresponding to the codeword of the first transport block is a first value, and the mapping layer number corresponding to the codeword of the second transport block is a second value; where a value indicated by the second layer number is a sum of the first value and the second value.

After the network device indicates the value of the second layer number indication, the mapping layer number corresponding to each codeword can be predefined. For example, all scheduled carriers use 2 codewords (codeword 0 and codeword 1); in this case, on the SCOMX cell, this scheduling transmits 2 TBs, and data of the two TBs are transmitted on all scheduled carriers. At this point, the layer indication values in_layer1&2 (that is, the second layer number indication) of all scheduled carriers are the same and greater than a value max_layer (such as max_layer=4).

Case 3

Method 1: in some embodiments, if a first portion of the multiple carriers carries codewords of two scheduled transport blocks, and a second portion of the multiple carriers carries a codeword of one scheduled transport block, then determining the mapping layer number of each scheduled transmission codeword on the multiple carriers according to the second layer number indication, includes:

if the first portion of the multiple carriers carries the codeword of the first transport block and the codeword of the second transport block and the second portion of the multiple carrier carries the codeword of the first transport block, determining, according to the second layer number indication, the mapping layer number of the codeword of the first transport block on the first portion of the multiple carriers and the second portion of the multiple carriers is a third value, and the mapping layer number of the codeword of the second transport block on the first portion of the multiple carriers is a fourth value; where a value of the second layer number indication is a sum of the third value and the fourth value.

In this embodiment, some scheduled carriers carry 2 codewords, and other scheduled carriers carry 1 codeword (such as q0TB1). In the SCOMBX cell, this scheduling transmits 2 TBs. The transmission relationship between layer indication and codeword 0/codeword 1 on the scheduled carrier is as follows:

for TB whose codeword is q0TB1: data is transmitted on all scheduled carriers, that is, all scheduled carriers transmit q0TB1, i.e., the second portion of the multiple carriers transmits q0TB1. In the symbol-level processing process, q0 is q0TB1;

for TB whose codeword is q1TB2: data is transmitted only on the scheduled carrier that carries two codewords, that is, q1TB2 is transmitted on the first portion of the multiple carriers, i.e., the first portion of the multiple carriers transmits q0TB1 and q1TB2. In the symbol-level processing process, q1 is q1TB2.

Method 2: in some embodiments, if the first portion of the multiple carriers carries codewords of two scheduled transport blocks and the second portion of the multiple carriers carries a codeword of one scheduled transport block, then determining the mapping layer number of the codeword of each scheduled transport block on the multiple carriers according to the first layer number indication and the second layer number indication, includes:

if the first portion of the multiple carrier carries the codeword of the first transport block and the codeword of the second transport block and the second portion of the multiple carrier carries the codeword of the first transport block, then according to the first layer number indication, determining that the mapping layer number of the codeword of the first transport block on the first portion of the multiple carrier and the second portion of the multiple carrier is a fifth value; and according to the second layer number indication, determining that the mapping layer number of the codeword of the second transport block on the first portion of the multiple carrier is a sixth value; where a value of the second layer number indication is a sum of the fifth value and the sixth value.

In this embodiment, the mapping layer number corresponding to the codeword of the first transport block is determined according to a scheduling signaling indication corresponding to the first transport block, and the mapping layer number corresponding to the codeword of the second transport block is determined according to the second layer number indication which is used to indicate the total number of layers, that is, the value of the second layer number indication is subtracted from the value of the first layer number indication to obtain a result which is the mapping layer number corresponding to the codeword of the second transport block.

As an optional embodiment, the method further includes:

receiving scheduling signaling sent by the transmitter, where the scheduling signaling includes the first layer number indication and/or the second layer number indication, the transmitter is a network device, and the receiver is a user equipment.

In this embodiment, when the transmitter is a network device and the receiver is a user equipment, the network device needs to send scheduling signaling to the user equipment to indicate the mapping layer number of the codeword on multiple carriers.

The following describes the implementation process of de-mapping and demodulating the transmission data according to the modulation order and the mapping layer number through a specific embodiment.

As an optional embodiment, de-mapping and demodulating the transmission data according to the modulation order and the mapping layer number to obtain the bit information of the codeword includes:

performing resource de-mapping on the transmission data to obtain a second mapping result before resource mapping;

performing antenna port de-mapping on the second mapping result to obtain a first mapping result before antenna port mapping;

performing layer de-mapping on the first mapping result according to the mapping layer number to obtain modulation symbols before layer mapping;

performing Quadrature Amplitude Modulation (QAM) demodulation on the modulation symbols according to the modulation order to obtain bit information of the scheduled codeword om all scheduled carriers.

In this embodiment, the symbol-level processing includes four steps: modulation process, layer mapping process, antenna port mapping process and resource mapping process. When de-mapping and demodulating, it is necessary to operate in the reverse direction, where the output of the modulation process is used as the input of the layer mapping process, the output of the layer mapping process is used as the input of the antenna port mapping process, the output of the antenna port mapping process is used as the input of the resource mapping process, and the output result of the resource mapping process is the data to be transmitted. When de-mapping and demodulating, the transmission data is subjected to resource de-mapping, antenna port de-mapping, layer de-mapping, and modulation symbol demodulation, thereby obtaining the bit information of the codeword before modulation.

In some embodiments, de-mapping and demodulating the transmission data according to the modulation order and the mapping layer number to obtain the bit information of the codeword includes:

determining a starting position and data information amount of a data information sequence of the codeword in each carrier or each time domain symbol;
according to the starting position and the data information amount, de-mapping and demodulating the transmission data to obtain bit information of the scheduled codeword.

In some embodiments, the codeword includes a plurality of data information sequences;

each data information sequence includes: data information of the codeword on a time domain symbol of a carrier; or,
each data information sequence includes: data information of the codeword on all time domain symbols of a carrier.

In this embodiment, when the transmission data is de-mapped and demodulated, no matter in which step of the de-mapping or demodulation operation, it is necessary to determine, in the operation, the starting position of the information sequence in each carrier or each time domain symbol and the data information amount (such as the number of symbols). The data information sequence can be bit information of the codeword (for the modulation process), symbols obtained after modulation (for the layer mapping process), a result of layer mapping (for the antenna port mapping process), and a result of antenna port mapping (for the resource mapping process).

When one transport block is transmitted on multiple scheduled carriers, it is processed based on each carrier/each symbol (such as one or more steps in demodulation, layer de-mapping, antenna port de-mapping, and resource de-mapping). Accordingly, for all data information sequences $z^{(q)}(0), ... , z^{(q)}(M^{(q)} - 1)$ of one transport block, it is necessary to calculate the starting position of the data information sequence of the corresponding carrier/corresponding symbol and the number (num) of data information, in order to perform the corresponding processing. The specific determination process is consistent with the processing method applied to the transmitter and will not be repeated here.

In this embodiment of the present application, after receiving the transmission data, the receiver determines the modulation order and mapping layer number of the codeword of the scheduled transport block on the multi-carrier; de-maps and demodulates the codeword according to the modulation order and mapping layer number to obtain the bit information of the codeword. The embodiment of the present application provides a method for symbol-level processing under SCOMX, and realizes the processing technical solution when the modulation order and/or layer indication of different carriers are the same or different, thereby ensuring the scheduling flexibility. Appropriate transmission parameters are selected for each carrier according to actual channel conditions, which can reduce signaling overhead during data processing. In addition, the present application makes minor modifications to the existing protocol and can minimize complexity of the existing user equipment.

The above embodiments introduce the multi-carrier data processing method in the present application. The following embodiments will further illustrate the corresponding device in conjunction with the accompanying drawings.

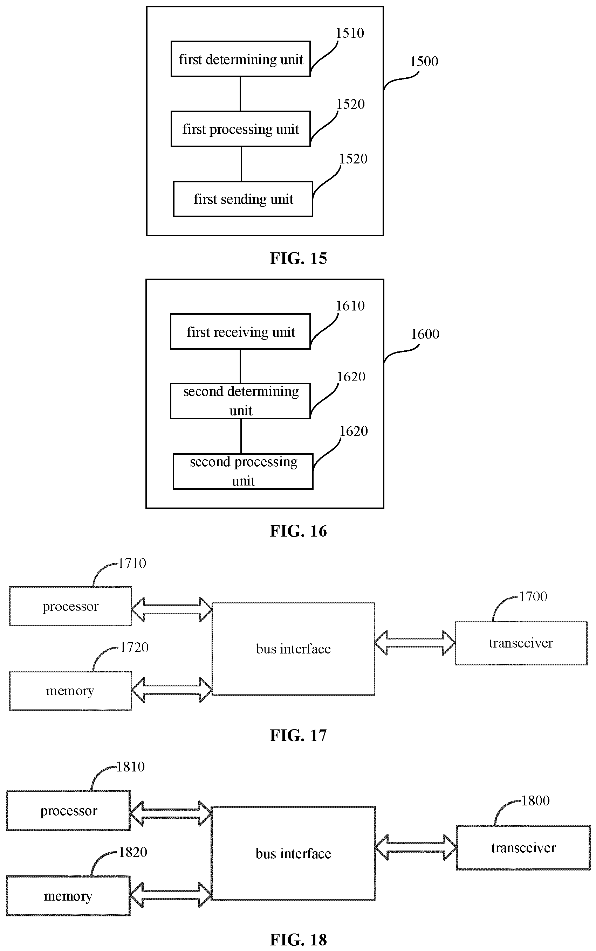

Specifically, as shown in FIG. 15, one embodiment of the present application provides a multi-carrier data processing device 1500, which is applied to a transmitter and includes:

a first determining unit 1510 configured to determine a modulation order and a mapping layer number of a codeword of a scheduled transport block on multiple carriers, where the multiple carriers are carriers in a multi-carrier serving cell (SCOMX);
a first processing unit 1520 configured to perform symbol-level processing on the codeword according to the modulation order and the mapping layer number to obtain transmission data;
a first sending unit 1530 configured to send the transmission data to a receiver;
wherein for a codeword, the modulation orders and the mapping layer numbers on the multiple carriers are the same; or,
for a codeword, the modulation orders on the multiple carriers are the same and the mapping layer numbers are different; or,
for a codeword, the modulation orders and the mapping layer numbers on the multiple carriers are different.

**EP 4 637 093 A1**

In some embodiments, for a codeword, the mapping layer number of the codeword on the multiple carriers is the same.

The first determining unit includes at least one of the following:

a first determining subunit configured to determine, if the multiple carriers all carry a codeword of one scheduled transport block, the mapping layer number of the codeword on the multiple carriers according to a first layer number indication;

a second determining subunit configured to determine, if the multiple carriers all carry codewords of two scheduled transport blocks, the mapping layer number of the codeword of each scheduled transport block on the multiple carriers respectively according to a second layer number indication;

a third determining subunit configured to determine, if a first portion of the multiple carriers carries codewords of two scheduled transport blocks and a second portion of the multiple carriers carries a codeword of one scheduled transport block, the mapping layer number of the codeword of each scheduled transport block on the multiple carriers according to the second layer number indication, or determining the mapping layer number of the codeword of each scheduled transport block on the multiple carriers according to the first layer number indication and the second layer number indication, respectively;

Where the first layer number indication indicates the mapping layer number of a codeword of a scheduled transport block; and the second layer number indication indicates a sum of the mapping layer numbers corresponding to the codewords of two scheduled transport blocks.

In some embodiments, the first determining subunit is specifically configured to perform at least one of the following:

if the multiple carriers all carry a codeword of a first transport block, determining a mapping layer number corresponding to the codeword according to a layer number indication 1 corresponding to the first transport block;

if the multiple carriers all carry a codeword of a second transport block, determining a mapping layer number corresponding to the codeword according to a layer number indication 2 corresponding to the second transport block;

if a first portion of the multiple carriers carries the codeword of the first transport block, and a second portion of the multiple carriers carries the codeword of the second transport block, determining a mapping layer number of the codeword in the first portion of the multiple carriers according to the layer number indication 1 corresponding to the first transport block, and determining a mapping layer number of the codeword in the second portion of the multiple carrier according to the layer number indication 2 corresponding to the second transport block.

In some embodiments, the second determining subunit is specifically configured to:

according to the second layer number indication, determine that in the multiple carriers, the mapping layer number corresponding to the codeword of the first transport block is a first value, and the mapping layer number corresponding to the codeword of the second transport block is a second value;

where a value indicated by the second layer number is a sum of the first value and the second value.

In some embodiments, the third determining subunit is specifically configured to:

if the first portion of the multiple carriers carries the codeword of the first transport block and the codeword of the second transport block and the second portion of the multiple carrier carries the codeword of the first transport block, determine, according to the second layer number indication, the mapping layer number of the codeword of the first transport block on the first portion of the multiple carriers and the second portion of the multiple carriers is a third value, and the mapping layer number of the codeword of the second transport block on the first portion of the multiple carriers is a fourth value;

where a value of the second layer number indication is a sum of the third value and the fourth value.

In some embodiments, the third determining subunit is specifically configured to:

if the first portion of the multiple carrier carries the codeword of the first transport block and the codeword of the second transport block and the second portion of the multiple carrier carries the codeword of the first transport block, then according to the first layer number indication, determine that the mapping layer number of the codeword of the first transport block on the first portion of the multiple carrier and the second portion of the multiple carrier is a fifth value; and according to the second layer number indication, determine that the mapping layer number of the codeword of the second transport block on the first portion of the multiple carrier is a sixth value;

where a value of the second layer number indication is a sum of the fifth value and the sixth value.

In some embodiments, the device further includes:

a second receiving unit configured to receive scheduling signaling sent by the receiver; where the scheduling signaling includes the first layer number indication and/or the second layer number indication;
where the transmitter is a user equipment and the receiver is a network device.

In some embodiments, the first processing unit includes:

a modulation subunit configured to, according to the modulation order, modulate bit information of all scheduled carriers of the codeword to obtain modulation symbols corresponding to the codeword;
a first mapping subunit configured to, according to the mapping layer number, perform layer mapping processing on the modulation symbols to obtain a first mapping result;
a second mapping subunit configured to perform antenna port mapping processing on the first mapping result to obtain a second mapping result;
a third mapping subunit configured to perform resource mapping processing on the second mapping result to obtain transmission data.

In some embodiments, when a codeword has the same modulation order and the same mapping layer number on the multiple carriers, the third mapping subunit is specifically configured to:

determine a starting position and the number of symbols on each carrier and each time domain symbol, for performing resource mapping on the second mapping result;
according to the starting position and the number of symbols, perform resource mapping on the second mapping result corresponding to each antenna port to obtain transmission data.

In some embodiments, the third mapping subunit is specifically configured to:

for the second mapping result corresponding to each antenna port, first perform frequency domain resource mapping, and then perform symbol resource mapping;
where the frequency domain resource include resource unit (RE), the symbol resources include time domain symbol resources.

In some embodiments, the third mapping subunit is specifically configured to perform:

step 1: for the second mapping result corresponding to each antenna port, performing frequency domain resource mapping on the time domain symbol $l$ according to a first carrier order;
step 2: when resource mapping of all frequency domain resources on the time domain symbol $l$ is completed, performing frequency domain resource mapping on the time domain symbol $l + 1$ according to the first carrier order until resource mapping of all frequency domain resources on the time domain symbol $l + 1$ is completed;
Step 3: repeating the step 2 until the second mapping result is mapped to all time domain symbols.

In some embodiments, the first carrier order comprises one of the following:

an order of carrier indexes from low to high;
an order of carrier indexes from high to low;
preconfigured carrier order.

In some embodiments, when a codeword has the same modulation order and different mapping layer numbers on the multiple carriers, the first mapping subunit is specifically configured to:

determine a starting modulation symbol and the number of symbols in each carrier and each time domain symbol for performing layer mapping processing on the modulation symbol;
according to the starting modulation symbol and the number of symbols, perform layer mapping on the modulation symbol to obtain the first mapping result.

In some embodiments, when one codeword has different modulation orders and different mapping layer numbers on the multiple carriers, the modulation unit is specifically configured to:

determine a starting bit position and bit length for modulating the bit information of the scheduled carrier, on each carrier and each time-domain symbol;
perform modulation processing on the bit information according to the starting bit position and bit length to obtain the modulation symbol.

In some embodiments, the first processing unit is specifically configured to:

determine a starting position and data information amount of a data information sequence of the codeword on each carrier or each time-domain symbol;
perform symbol-level processing on the codeword according to the starting position and the data information amount to obtain the transmission data;
where the data information sequence is input data of the symbol-level processing.

In some embodiments, the codeword includes a plurality of data information sequences;

each data information sequence includes: data information of the codeword on a time domain symbol of a carrier; or,
each data information sequence includes: data information of the codeword on all time domain symbols of a carrier.

It is to be noted that the foregoing device provided in the embodiments of the present application can perform all the method steps performed in the foregoing method embodiments applied to the transmitter, and can achieve the same technical effect. The parts and beneficial effects in this embodiment that are the same as those in the method embodiment will not be described in detail here.

Specifically, as shown in FIG. 16, one embodiment of the present application provides a multi-carrier data processing device 1600, which is applied to a receiver and includes:

a first receiving unit 1610 configured to receive transmission data, where the transmission data is data obtained by a transmitter through performing symbol-level processing on a codeword of a scheduled transport block;
a second determining unit 1620 configured to determine a modulation order and a mapping layer number of the codeword on multiple carriers, where the multiple carriers are carriers in a multi-carrier serving cell (SCOMX);
a second processing unit 1630 configured to de-map and demodulate the transmission data according to the modulation order and the mapping layer number to obtain bit information of the codeword;
for a codeword, the modulation order and the mapping layer number on the multiple carriers are the same; or,
for a codeword, the modulation order on the multiple carriers is the same and the mapping layer numbers are different; or,
for a codeword, the modulation orders on the multiple carriers are different and the mapping layer numbers on the multiple carriers are different.

In some embodiments, for a codeword, the mapping layer number of the codeword on the multiple carriers is the same; and the second determining unit specifically includes at least one of the following:

a fourth determining subunit configured to determine, if the multiple carriers all carry a codeword of one scheduled transport block, the mapping layer number of the codeword on the multiple carriers according to a first layer number indication;
a fifth determining subunit configured to determine, if the multiple carriers all carry codewords of two scheduled transport blocks, the mapping layer number of the codeword of each scheduled transport block on the multiple carriers respectively according to a second layer number indication;
a sixth determining subunit configured to determine, if a first portion of the multiple carriers carries codewords of two scheduled transport blocks and a second portion of the multiple carriers carries a codeword of one scheduled transport block, the mapping layer number of the codeword of each scheduled transport block on the multiple carriers according to the second layer number indication, or determining the mapping layer number of the codeword of each scheduled transport block on the multiple carriers according to the first layer number indication and the second layer number indication, respectively;
Where the first layer number indication indicates the mapping layer number of a codeword of a scheduled transport block; and the second layer number indication indicates a sum of the mapping layer numbers corresponding to the codewords of two scheduled transport blocks.

In some embodiments, the fourth determining subunit is configured to perform at least one of the following:

if the multiple carriers all carry a codeword of a first transport block, determining a mapping layer number corresponding to the codeword according to a layer number indication 1 corresponding to the first transport block; if the multiple carriers all carry a codeword of a second transport block, determining a mapping layer number corresponding to the codeword according to a layer number indication 2 corresponding to the second transport block; if a first portion of the multiple carriers carries the codeword of the first transport block, and a second portion of the multiple carriers carries the codeword of the second transport block, determining a mapping layer number of the codeword in the first portion of the multiple carriers according to the layer number indication 1 corresponding to the first transport block, and determining a mapping layer number of the codeword in the second portion of the multiple carrier according to the layer number indication 2 corresponding to the second transport block.

In some embodiments, the fifth determining subunit is specifically configured to:

according to the second layer number indication, determine that in the multiple carriers, the mapping layer number corresponding to the codeword of the first transport block is a first value, and the mapping layer number corresponding to the codeword of the second transport block is a second value;
where a value indicated by the second layer number is a sum of the first value and the second value.

In some embodiments, the sixth subunit is specifically configured to:

if the first portion of the multiple carriers carries the codeword of the first transport block and the codeword of the second transport block and the second portion of the multiple carrier carries the codeword of the first transport block, determine, according to the second layer number indication, the mapping layer number of the codeword of the first transport block on the first portion of the multiple carriers and the second portion of the multiple carriers is a third value, and the mapping layer number of the codeword of the second transport block on the first portion of the multiple carriers is a fourth value;
where a value of the second layer number indication is a sum of the third value and the fourth value.

In some embodiments, the sixth subunit is specifically configured to:

if the first portion of the multiple carrier carries the codeword of the first transport block and the codeword of the second transport block and the second portion of the multiple carrier carries the codeword of the first transport block, according to the first layer number indication, determine that the mapping layer number of the codeword of the first transport block on the first portion of the multiple carrier and the second portion of the multiple carrier is a fifth value; and according to the second layer number indication, determining that the mapping layer number of the codeword of the second transport block on the first portion of the multiple carrier is a sixth value;
where a value of the second layer number indication is a sum of the fifth value and the sixth value.

In some embodiments, the device further includes:

a third receiving unit configured to receive scheduling signaling sent by the transmitter, where the scheduling signaling includes the first layer number indication and/or the second layer number indication,
where the transmitter is a network device, and the receiver is a user equipment.

In some embodiments, the second processing unit includes:

a first de-mapping subunit configured to perform resource de-mapping on the transmission data to obtain a second mapping result before resource mapping;
a second de-mapping subunit configured to perform antenna port de-mapping on the second mapping result to obtain a first mapping result before antenna port mapping;
a third de-mapping subunit configured to perform layer de-mapping on the first mapping result according to the mapping layer number to obtain modulation symbols before layer mapping;
a demodulation unit configured to perform Quadrature Amplitude Modulation (QAM) demodulation on the modulation symbols according to the modulation order to obtain bit information of the scheduled codeword om all scheduled carriers.

In some embodiments, the second processing unit is specifically configured to:

determine a starting position and data information amount of a data information sequence of the codeword in each carrier or each time domain symbol;

according to the starting position and the data information amount, de-map and demodulate the transmission data to obtain bit information of the scheduled codeword.

In some embodiments, the codeword includes a plurality of data information sequences;

each data information sequence includes: data information of the codeword on a time domain symbol of a carrier; or,

each data information sequence includes: data information of the codeword on all time domain symbols of a carrier.

It is to be noted that the foregoing device provided in the embodiments of the present application can perform all the method steps performed in the foregoing method embodiments applied to the receiver, and can achieve the same technical effect. The parts and beneficial effects in this embodiment that are the same as those in the method embodiment will not be described in detail here.

It is to be noted that division of units in the embodiment of the present application is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present application or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present application. The storage medium includes various media capable of storing program codes such as U disk, mobile hard disk, ROM, RAM, magnetic disk or optical disk.

As shown in FIG. 17, one embodiment of the present application further provides a multi-carrier data processing device, which is applied to a transmitter, and includes: a memory 1720, a transceiver 1700, and a processor 1710. The memory 1720 is used to store a computer program. The transceiver 1700 is used to send and receive data under the control of the processor 1710. The processor 1710 is used to read the computer program in the memory and perform the following operations:

determining a modulation order and a mapping layer number of a codeword of a scheduled transport block on multiple carriers, where the multiple carriers are carriers in a multi-carrier serving cell (SCOMX);

performing symbol-level processing on the codeword according to the modulation order and the mapping layer number to obtain transmission data;

sending the transmission data to a receiver;

wherein for a codeword, the modulation orders and the mapping layer numbers on the multiple carriers are the same; or,

for a codeword, the modulation orders on the multiple carriers are the same and the mapping layer numbers are different; or,

for a codeword, the modulation orders and the mapping layer numbers on the multiple carriers are different.

In some embodiments, for a codeword, the mapping layer number of the codeword on the multiple carriers is the same.

The processor is configured to read the computer program in the memory and perform at least one of the following operations:

determining, if the multiple carriers all carry a codeword of one scheduled transport block, the mapping layer number of the codeword on the multiple carriers according to a first layer number indication;

determining, if the multiple carriers all carry codewords of two scheduled transport blocks, the mapping layer number of the codeword of each scheduled transport block on the multiple carriers respectively according to a second layer number indication;

determining, if a first portion of the multiple carriers carries codewords of two scheduled transport blocks and a second portion of the multiple carriers carries a codeword of one scheduled transport block, the mapping layer number of the codeword of each scheduled transport block on the multiple carriers according to the second layer number indication, or determining the mapping layer number of the codeword of each scheduled transport block on the multiple carriers according to the first layer number indication and the second layer number indication, respectively;

Where the first layer number indication indicates the mapping layer number of a codeword of a scheduled transport block; and the second layer number indication indicates a sum of the mapping layer numbers corresponding to the codewords of two scheduled transport blocks.

In some embodiments, the processor is configured to read the computer program in the memory and perform at least one of the following operations:

if the multiple carriers all carry a codeword of a first transport block, determining a mapping layer number corresponding to the codeword according to a layer number indication 1 corresponding to the first transport block; if the multiple carriers all carry a codeword of a second transport block, determining a mapping layer number corresponding to the codeword according to a layer number indication 2 corresponding to the second transport block; if a first portion of the multiple carriers carries the codeword of the first transport block, and a second portion of the multiple carriers carries the codeword of the second transport block, determining a mapping layer number of the codeword in the first portion of the multiple carriers according to the layer number indication 1 corresponding to the first transport block, and determining a mapping layer number of the codeword in the second portion of the multiple carrier according to the layer number indication 2 corresponding to the second transport block.

In some embodiments, the processor is configured to read the computer program in the memory and perform the following operations:

according to the second layer number indication, determining that in the multiple carriers, the mapping layer number corresponding to the codeword of the first transport block is a first value, and the mapping layer number corresponding to the codeword of the second transport block is a second value; where a value indicated by the second layer number is a sum of the first value and the second value.

In some embodiments, the processor is configured to read the computer program in the memory and perform the following operations:

if the first portion of the multiple carriers carries the codeword of the first transport block and the codeword of the second transport block and the second portion of the multiple carrier carries the codeword of the first transport block, determining, according to the second layer number indication, the mapping layer number of the codeword of the first transport block on the first portion of the multiple carriers and the second portion of the multiple carriers is a third value, and the mapping layer number of the codeword of the second transport block on the first portion of the multiple carriers is a fourth value; where a value of the second layer number indication is a sum of the third value and the fourth value.

In some embodiments, the processor is configured to read the computer program in the memory and perform the following operations:

if the first portion of the multiple carrier carries the codeword of the first transport block and the codeword of the second transport block and the second portion of the multiple carrier carries the codeword of the first transport block, according to the first layer number indication, determining that the mapping layer number of the codeword of the first transport block on the first portion of the multiple carrier and the second portion of the multiple carrier is a fifth value; and according to the second layer number indication, determine that the mapping layer number of the codeword of the second transport block on the first portion of the multiple carrier is a sixth value; where a value of the second layer number indication is a sum of the fifth value and the sixth value.

In some embodiments, the processor is configured to read the computer program in the memory and perform the following operations:

receiving scheduling signaling sent by the receiver; where the scheduling signaling includes the first layer number indication and/or the second layer number indication; where the transmitter is a user equipment and the receiver is a network device.

In some embodiments, the processor is configured to read the computer program in the memory and perform the following operations:

according to the modulation order, modulating bit information of all scheduled carriers of the codeword to obtain modulation symbols corresponding to the codeword;

according to the mapping layer number, performing layer mapping processing on the modulation symbols to obtain a first mapping result;

performing antenna port mapping processing on the first mapping result to obtain a second mapping result;

performing resource mapping processing on the second mapping result to obtain transmission data.

In some embodiments, when a codeword has the same modulation order and the same mapping layer number on the multiple carriers, the processor is configured to read the computer program in the memory and perform the following operations:

determining a starting position and the number of symbols on each carrier and each time domain symbol, for performing resource mapping on the second mapping result;

according to the starting position and the number of symbols, performing resource mapping on the second mapping result corresponding to each antenna port to obtain transmission data.

In some embodiments, the processor is configured to read the computer program in the memory and perform the following operations:

for the second mapping result corresponding to each antenna port, first performing frequency domain resource mapping, and then performing symbol resource mapping;

where the frequency domain resource include resource unit (RE), the symbol resources include time domain symbol resources.

In some embodiments, the processor is configured to read the computer program in the memory and perform the following operations:

step 1: for the second mapping result corresponding to each antenna port, performing frequency domain resource mapping on the time domain symbol $l$ according to a first carrier order;

step 2: when resource mapping of all frequency domain resources on the time domain symbol $l$ is completed, performing frequency domain resource mapping on the time domain symbol $l + 1$ according to the first carrier order until resource mapping of all frequency domain resources on the time domain symbol $l + 1$ is completed;

step 3: repeating the step 2 until the second mapping result is mapped to all time domain symbols.

In some embodiments, the first carrier order comprises one of the following:

an order of carrier indexes from low to high;

an order of carrier indexes from high to low;

preconfigured carrier order.

In some embodiments, when a codeword has the same modulation order and different mapping layer numbers on the multiple carriers, the processor is configured to read the computer program in the memory and perform the following operations:

determining a starting modulation symbol and the number of symbols in each carrier and each time domain symbol for performing layer mapping processing on the modulation symbol;

according to the starting modulation symbol and the number of symbols, performing layer mapping on the modulation symbol to obtain the first mapping result.

In some embodiments, when one codeword has different modulation orders and different mapping layer numbers on the multiple carriers, the processor is configured to read the computer program in the memory and perform the following operations:

determining a starting bit position and bit length for modulating the bit information of the scheduled carrier, on each carrier and each time-domain symbol;

performing modulation processing on the bit information according to the starting bit position and bit length to obtain the modulation symbol.

In some embodiments, the processor is configured to read the computer program in the memory and perform the following operations:

determining a starting position and data information amount of a data information sequence of the codeword on each carrier or each time-domain symbol;
performing symbol-level processing on the codeword according to the starting position and the data information amount to obtain the transmission data;
where the data information sequence is input data of the symbol-level processing.

In some embodiments, the codeword includes a plurality of data information sequences;

each data information sequence includes: data information of the codeword on a time domain symbol of a carrier; or,
each data information sequence includes: data information of the codeword on all time domain symbols of a carrier.

In FIG. 17, a bus architecture may include any number of interconnected bus and bridge. Specifically, various circuits of one or more processors, which are represented by the processor 1710, and one or more memories, which are represented by the memory 1720, are linked together. The bus architecture may link various other circuits, such as a peripheral device, voltage regulator and a power management circuit together. These features are well known in this field; therefore, this disclosure does not make further description on these features. The bus interface provides an interface. The transceiver 1700 may be multiple elements, including a transmitter and a receiver and provide units, which communicate with other devices on the transmission medium. The processor 1710 is responsible for managing the bus architecture and the normal processing. The memory 1720 may be used to store data used by the processor 1710 for performing operations.

The processor 1710 may be a central processing unit (CPU), an application specific integrated circuit (ASIC), a field-programmable gate array (FPGA) or a complex programmable logic device (CPLD). The processor may also adopt multicore architecture.

It is to be noted that the foregoing device provided in the embodiments of the present application can perform all the method steps performed in the foregoing method embodiments applied to the transmitter, and can achieve the same technical effect. The parts and beneficial effects in this embodiment that are the same as those in the method embodiment will not be described in detail here.

As shown in FIG. 18, one embodiment of the present application further provides a multi-carrier data processing device, which is applied to a receiver, and includes: a memory 1820, a transceiver 1800, and a processor 1810. The memory 1820 is used to store a computer program. The transceiver 1800 is used to send and receive data under the control of the processor 1810. The processor 1810 is used to read the computer program in the memory and perform the following operations:

receiving transmission data, where the transmission data is data obtained by a transmitter through performing symbol-level processing on a codeword of a scheduled transport block;
determining a modulation order and a mapping layer number of the codeword on multiple carriers, where the multiple carriers are carriers in a multi-carrier serving cell (SCOMX);
de-mapping and demodulating the transmission data according to the modulation order and the mapping layer number to obtain bit information of the codeword;
for a codeword, the modulation order and the mapping layer number on the multiple carriers are the same; or,
for a codeword, the modulation order on the multiple carriers is the same and the mapping layer numbers are different; or,
for a codeword, the modulation orders on the multiple carriers are different and the mapping layer numbers on the multiple carriers are different.

In some embodiments, for a codeword, the mapping layer number of the codeword on the multiple carriers is the same; and the processor is configured to read the computer program in the memory and perform at least one of the following operations:

determining, if the multiple carriers all carry a codeword of one scheduled transport block, the mapping layer number of the codeword on the multiple carriers according to a first layer number indication;
determining, if the multiple carriers all carry codewords of two scheduled transport blocks, the mapping layer number of the codeword of each scheduled transport block on the multiple carriers respectively according to a second layer number indication;

determining, if a first portion of the multiple carriers carries codewords of two scheduled transport blocks and a second portion of the multiple carriers carries a codeword of one scheduled transport block, the mapping layer number of the codeword of each scheduled transport block on the multiple carriers according to the second layer number indication, or determining the mapping layer number of the codeword of each scheduled transport block on the multiple carriers according to the first layer number indication and the second layer number indication, respectively;

Where the first layer number indication indicates the mapping layer number of a codeword of a scheduled transport block; and the second layer number indication indicates a sum of the mapping layer numbers corresponding to the codewords of two scheduled transport blocks.

In some embodiments, the processor is configured to read the computer program in the memory and perform at least one of the following operations:

if the multiple carriers all carry a codeword of a first transport block, determining a mapping layer number corresponding to the codeword according to a layer number indication 1 corresponding to the first transport block; if the multiple carriers all carry a codeword of a second transport block, determining a mapping layer number corresponding to the codeword according to a layer number indication 2 corresponding to the second transport block; if a first portion of the multiple carriers carries the codeword of the first transport block, and a second portion of the multiple carriers carries the codeword of the second transport block, determining a mapping layer number of the codeword in the first portion of the multiple carriers according to the layer number indication 1 corresponding to the first transport block, and determining a mapping layer number of the codeword in the second portion of the multiple carrier according to the layer number indication 2 corresponding to the second transport block.

In some embodiments, the processor is configured to read the computer program in the memory and perform the following operations:

according to the second layer number indication, determining that in the multiple carriers, the mapping layer number corresponding to the codeword of the first transport block is a first value, and the mapping layer number corresponding to the codeword of the second transport block is a second value; where a value indicated by the second layer number is a sum of the first value and the second value.

In some embodiments, the processor is configured to read the computer program in the memory and perform the following operations:

if the first portion of the multiple carriers carries the codeword of the first transport block and the codeword of the second transport block and the second portion of the multiple carrier carries the codeword of the first transport block, determining, according to the second layer number indication, the mapping layer number of the codeword of the first transport block on the first portion of the multiple carriers and the second portion of the multiple carriers is a third value, and the mapping layer number of the codeword of the second transport block on the first portion of the multiple carriers is a fourth value; where a value of the second layer number indication is a sum of the third value and the fourth value.

In some embodiments, the processor is configured to read the computer program in the memory and perform the following operations:

if the first portion of the multiple carrier carries the codeword of the first transport block and the codeword of the second transport block and the second portion of the multiple carrier carries the codeword of the first transport block, according to the first layer number indication, determining that the mapping layer number of the codeword of the first transport block on the first portion of the multiple carrier and the second portion of the multiple carrier is a fifth value; and according to the second layer number indication, determining that the mapping layer number of the codeword of the second transport block on the first portion of the multiple carrier is a sixth value; where a value of the second layer number indication is a sum of the fifth value and the sixth value.

In some embodiments, the processor is configured to read the computer program in the memory and perform the following operations:

receiving scheduling signaling sent by the transmitter, where the scheduling signaling includes the first layer number indication and/or the second layer number indication, where the transmitter is a network device, and the receiver is a user equipment.

In some embodiments, the processor is configured to read the computer program in the memory and perform the following operations:

performing resource de-mapping on the transmission data to obtain a second mapping result before resource mapping;
performing antenna port de-mapping on the second mapping result to obtain a first mapping result before antenna port mapping;
performing layer de-mapping on the first mapping result according to the mapping layer number to obtain modulation symbols before layer mapping;
performing Quadrature Amplitude Modulation (QAM) demodulation on the modulation symbols according to the modulation order to obtain bit information of the scheduled codeword om all scheduled carriers.

In some embodiments, the processor is configured to read the computer program in the memory and perform the following operations:

determining a starting position and data information amount of a data information sequence of the codeword in each carrier or each time domain symbol;
according to the starting position and the data information amount, de-mapping and demodulating the transmission data to obtain bit information of the scheduled codeword.

In some embodiments, the codeword includes a plurality of data information sequences;

each data information sequence includes: data information of the codeword on a time domain symbol of a carrier; or,
each data information sequence includes: data information of the codeword on all time domain symbols of a carrier.

In FIG. 18, a bus architecture may include any number of interconnected bus and bridge. Specifically, various circuits of one or more processors, which are represented by the processor 1810, and one or more memories, which are represented by the memory 1820, are linked together. The bus architecture may link various other circuits, such as a peripheral device, voltage regulator and a power management circuit together. These features are well known in this field; therefore, this disclosure does not make further description on these features. The bus interface provides an interface. The transceiver 1800 may be multiple elements, including a transmitter and a receiver and provide units, which communicate with other devices on the transmission medium. The processor 1810 is responsible for managing the bus architecture and the normal processing. The memory 1820 may be used to store data used by the processor 1810 for performing operations.

The processor 1810 may be a central processing unit (CPU), an application specific integrated circuit (ASIC), a field-programmable gate array (FPGA) or a complex programmable logic device (CPLD). The processor may also adopt multicore architecture.

It is to be noted that the foregoing device provided in the embodiments of the present application can perform all the method steps performed in the foregoing method embodiments applied to the receiver, and can achieve the same technical effect. The parts and beneficial effects in this embodiment that are the same as those in the method embodiment will not be described in detail here.

One embodiment of the present application further provides a processor-readable storage medium, which includes program instructions stored thereon. The computer program is used to cause a processor to perform the steps of the foregoing multi-carrier data processing method, and the same technical effect can be achieved. To avoid repetition, it will not be repeated here. The processor-readable storage medium may be any available medium or data storage device that can be accessed by a processor, including but not limited to magnetic storage (such as floppy disk, hard disk, magnetic tape, magneto-optical disk (MO)), optical storage (such as CD, DVD, BD, HVD), and semiconductor memory (such as ROM, EPROM, EEPROM, non-volatile memory (Nand flash), solid-state drive (SSD)).

It is to be noted that the technical solutions provided in the embodiments of the present application may be applicable to various systems, especially the fifth generation communication (5G) system. For example, applicable systems may be global system of mobile communication (GSM) system, code division multiple access (CDMA) system, wideband code division multiple access (WCDMA) general packet wireless service (GPRS) system, long term evolution (LTE) system, LTE frequency division duplex (FDD) system, LTE time division duplex (TDD) system, long term evolution advanced (LTE-A) system, universal mobile telecommunication system (UMTS), worldwide interoperability for microwave access (WiMAX) system, 5G new radio (NR) system, etc. Each of the various systems includes a user equipment and a network device. The system may further include a core network part, such as an evolved packet system (EPS), a 5G system (5GS).

Terminal devices involved in the embodiments of the present application may be a device that provides voice and/or data connectivity to a user, a handheld device with a wireless connection function, or other processing device coupled to a wireless modem. In different systems, names of terminal devices may be different. For example, in the 5G system, the terminal device may be referred as user equipment (UE). A wireless terminal device may communicate with one or more core networks (CN) via a radio access network (RAN). The wireless terminal device may be a mobile terminal device such as a mobile phone (or referred as cell phone), or a computer with a mobile terminal device, such as a portable, pocket-sized, handheld, computer built-in or vehicle-mounted mobile device, which exchange language and/or data with wireless access networks, for example, a personal communication service (PCS) phone, a cordless phone, a session initiated protocol (SIP) phone, a wireless local loop (WLL) station, a personal digital assistant (PDA) and other device. The wireless terminal device may also be referred to as system, subscriber unit, subscriber station, mobile station, mobile, remote station, access point, remote terminal, access terminal, user terminal, user agent, or user device, which are not limited in the embodiments of the present application.

The network device involved in the embodiments of the present application may be a base station, and the base station may include a plurality of cells for providing services for the terminal. According to different specific application scenarios, the base station may also be referred as an access point, or the base station may be a device in an access network that communicates with wireless terminal devices through one or more sectors on air interfaces, or other names. The network device may be used to exchange received frames with internet protocol (IP) packets, and act as a router between the wireless terminal device and the rest of the access network, where the rest of the access network may include an internet protocol (IP) communication network. The network device may also coordinate attribute management for air interfaces. For example, the network device involved in the embodiments of the present application may be a base transceiver station (BTS) in global system for mobile communications (GSM) or code division multiple access (CDMA), a NodeB in wideband code division multiple access (WCDMA), an evolutional Node B (eNB or e-NodeB) in long term evolution (LTE) system, a 5G base station (gNB) in the 5G network architecture (next generation system), a home evolved Node B (HeNB), a relay node, a femto, or a pico, which are not limited in the embodiments of the present application. In some network structures, the network device may include a centralized unit (CU) node and a distributed unit (DU) node; and the centralized unit and the distributed unit may also be geographically separated.

Each of the network device and the terminal can use one or more antennas for multi input multi output (MIMO) transmission between the network device and the terminal. The MIMO transmission may be single user MIMO (SU-MIMO), or multiple user MIMO (MU-MIMO). According to forms and numbers of antenna combinations, MIMO transmission may be two dimensional-MIMO (2D-MIMO), three dimensional-MIMO (3D-MIMO), full dimensional-MIMO (FD-MIMO), or massive-MIMO, or diversity transmission, precoding transmission, or beamforming transmission.

Those skilled in the art should understand that the embodiments of the present application may be provided as methods, systems, or computer program products. Accordingly, in this application, an entirely hardware embodiment, an entirely software embodiment, or an embodiment combining software and hardware aspects may be adopted. Further, this application may adopt the form of a computer program product implemented on one or more computer available storage media (including but not limited to disk memory and optical memory) including computer available program codes.

The present application has been described with reference to the flow charts and/or block diagrams of the method, device (system) and computer program product according to the embodiments of the present application. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicate computer, an embedded processor or any other programmable data processing apparatus to create a machine, so that instructions executable by the processor of the computer or the other programmable data processing apparatus may create a device to achieve the functions assigned in one or more work flows in the flow chart and/or one or more blocks in the block diagram.

These processor-executable instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These processor-executable instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, a determining module may be a separate processing element, or may be integrated into a certain chip of the above device, or, may be stored in the memory of the above device in the form of program code, and a certain processing element of the above device may call and execute the functions of the determination module. Other modules have similar implementations. In addition, all or part of these modules may be integrated together, and may be implemented independently. The processing element mentioned herein may be an integrated circuit with signal processing capability. In the implementation process, the various steps of the above method or the above various modules may be implemented by an integrated logic circuit in hardware form in elements of a processor or implemented by instructions in the form of software.

For example, the various modules, units, subunits or submodules may be one or more integrated circuits used to implement the above methods, such as one or more application specific integrated circuits (Application Specific Integrated Circuit, ASIC), or one or more microprocessors (Digital Signal Processor, DSP), or one or more field programmable gate arrays (Field Programmable Gate Array, FPGA), etc. As another example, when a module described above is implemented in the form of scheduling program codes by a processing element, the processing element may be a general purpose processor, such as a central processing unit (Central Processing Unit, CPU) or other processors that may call program codes. As another example, these modules may be integrated together and implemented as a system-on-a-chip (system-on-a-chip, SOC).

Terms such as "first" and "second" in the specification and the claims of the present application are used to distinguish similar objects and are not necessarily used to describe a specific order or sequence. It should be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device. Moreover, the term "and/or" used in the specification and the claims indicates involving at least one of connected objects, for example, A and/or B and/or C means 7 situations, including: A alone, B alone, C alone, both A and B, both B and C, both A and C, and all of A, B and C. Similarly, the use of "at least one of A and B" in this specification and claims should be understood as "A alone, B alone, or both A and B".

Obviously, those skilled in the art can make various changes and modifications to the present application without departing from the spirit and scope of the present application. Thus, if these modifications and variations of the present application fall within the scope of the claims of the present application and equivalent technologies thereof, the present application also intends to include these modifications and variations.

## Claims

1. A multi-carrier data processing method, comprising:

   determining, by a transmitter, a modulation order and a mapping layer number of a codeword of a scheduled transport block on multiple carriers, wherein the multiple carriers are carriers in a multi-carrier serving cell;
   performing, by the transmitter, symbol-level processing on the codeword according to the modulation order and the mapping layer number to obtain transmission data; and
   sending, by the transmitter, the transmission data to a receiver;
   wherein for a codeword, modulation orders on the multiple carriers are the same and mapping layer numbers on the multiple carriers are the same; or,
   for a codeword, modulation orders on the multiple carriers are the same and mapping layer numbers on the multiple carriers are different; or,
   for a codeword, modulation orders on the multiple carriers are different and mapping layer numbers on the multiple carriers are different.

2. The method according to claim 1, wherein for a codeword, the mapping layer numbers of the codeword on the multiple carriers are the same;
   the determining a mapping layer number of the codeword of the scheduled transport block on multiple carriers, includes:

   if the multiple carriers all carry a codeword of one scheduled transport block, determining the mapping layer number of the codeword on the multiple carriers according to a first layer number indication;
   if the multiple carriers all carry codewords of two scheduled transport blocks, determining the mapping layer number of the codeword of each scheduled transport block on the multiple carriers respectively according to a second layer number indication;

if a first portion of the multiple carriers carries codewords of two scheduled transport blocks and a second portion of the multiple carriers carries a codeword of one scheduled transport block, determining a mapping layer number of the codeword of each scheduled transport block on the multiple carriers according to the second layer number indication, or determining a mapping layer number of the codeword of each scheduled transport block on the multiple carriers according to the first layer number indication and the second layer number indication, respectively;

wherein the first layer number indication indicates a mapping layer number of a codeword of one scheduled transport block; and the second layer number indication indicates a sum of the mapping layer numbers corresponding to the codewords of two scheduled transport blocks.

3. The method according to claim 2, wherein if the multiple carriers all carry a codeword of one scheduled transport block, the determining the mapping layer number of the codeword on the multiple carriers according to a first layer number indication, includes at least one of the following:

if the multiple carriers all carry a codeword of a first transport block, determining a mapping layer number corresponding to the codeword according to a layer number indication 1 corresponding to the first transport block; if the multiple carriers all carry a codeword of a second transport block, determining a mapping layer number corresponding to the codeword according to a layer number indication 2 corresponding to the second transport block; or,

if a first portion of the multiple carriers carries the codeword of the first transport block, and a second portion of the multiple carriers carries the codeword of the second transport block, determining a mapping layer number of the codeword in the first portion of the multiple carriers according to the layer number indication 1 corresponding to the first transport block, and determining a mapping layer number of the codeword in the second portion of the multiple carrier according to the layer number indication 2 corresponding to the second transport block.

4. The method according to claim 2, wherein if the multiple carriers all carry codewords of two scheduled transport blocks, the determining a mapping layer number of the codeword of each scheduled transport block on the multiple carriers respectively according to a second layer number indication, includes:

according to the second layer number indication, determining that in the multiple carriers, the mapping layer number corresponding to the codeword of the first transport block is a first value, and the mapping layer number corresponding to the codeword of the second transport block is a second value;

wherein a value indicated by the second layer number is a sum of the first value and the second value.

5. The method according to claim 2, wherein if a first portion of the multiple carriers carries codewords of two scheduled transport blocks and a second portion of the multiple carriers carries a codeword of one scheduled transport block, determining a mapping layer number of the codeword of each scheduled transport block on the multiple carriers according to the second layer number indication, includes:

if the first portion of the multiple carriers carries the codeword of the first transport block and the codeword of the second transport block and the second portion of the multiple carrier carries the codeword of the first transport block, determining, according to the second layer number indication, the mapping layer number of the codeword of the first transport block on the first portion of the multiple carriers and the second portion of the multiple carriers is a third value, and the mapping layer number of the codeword of the second transport block on the first portion of the multiple carriers is a fourth value;

wherein a value of the second layer number indication is a sum of the third value and the fourth value.

6. The method according to claim 2, wherein if a first portion of the multiple carriers carries codewords of two scheduled transport blocks and a second portion of the multiple carriers carries a codeword of one scheduled transport block, determining a mapping layer number of the codeword of each scheduled transport block on the multiple carriers according to the first layer number indication and the second layer number indication, respectively, includes:

if the first portion of the multiple carrier carries the codeword of the first transport block and the codeword of the second transport block and the second portion of the multiple carrier carries the codeword of the first transport block, according to the first layer number indication, determining that the mapping layer number of the codeword of the first transport block on the first portion of the multiple carrier and the second portion of the multiple carrier is a fifth value; and according to the second layer number indication, determine that the mapping layer number of the codeword of the second transport block on the first portion of the multiple carrier is a sixth value;

wherein a value of the second layer number indication is a sum of the fifth value and the sixth value.

7. The method according to claim 2, wherein the method further includes:

receiving scheduling signaling sent by the receiver; wherein the scheduling signaling includes the first layer number indication and/or the second layer number indication;

where the transmitter is a user equipment and the receiver is a network device.

8. The method according to claim 1, wherein the performing, by the transmitter, symbol-level processing on the codeword according to the modulation order and the mapping layer number to obtain transmission data, includes:

according to the modulation order, modulating bit information of all scheduled carriers of the codeword to obtain modulation symbols corresponding to the codeword;

according to the mapping layer number, performing layer mapping processing on the modulation symbols to obtain a first mapping result;

performing antenna port mapping processing on the first mapping result to obtain a second mapping result;

performing resource mapping processing on the second mapping result to obtain the transmission data.

9. The method according to claim 8, wherein when one codeword has the same modulation order and the same mapping layer number on the multiple carriers, the performing resource mapping processing on the second mapping result to obtain the transmission data, includes:

determining a starting position and the number of symbols on each carrier and each time domain symbol, for performing resource mapping on the second mapping result;

according to the starting position and the number of symbols, performing resource mapping on the second mapping result corresponding to each antenna port to obtain the transmission data.

10. The method according to claim 9, wherein the performing resource mapping on the second mapping result corresponding to each antenna port to obtain the transmission data, includes:

for the second mapping result corresponding to each antenna port, first performing frequency domain resource mapping, and then performing symbol resource mapping;

wherein the frequency domain resource include resource unit (RE), the symbol resources include time domain symbol resources.

11. The method according to claim 10, wherein for the second mapping result corresponding to each antenna port, first performing frequency domain resource mapping, and then performing symbol resource mapping, includes:

step 1: for the second mapping result corresponding to each antenna port, performing frequency domain resource mapping on a time domain symbol $l$ according to a first carrier order;

step 2: when resource mapping of all frequency domain resources on the time domain symbol $l$ is completed, performing frequency domain resource mapping on a time domain symbol $l + 1$ according to the first carrier order until resource mapping of all frequency domain resources on the time domain symbol $l + 1$ is completed;

step 3: repeating the step 2 until the second mapping result is mapped to all time domain symbols.

12. The method according to claim 11, wherein the first carrier order comprises one of the following:

an order of carrier indexes from low to high;

an order of carrier indexes from high to low;

preconfigured carrier order.

13. The method according to claim 8, wherein when one codeword has the same modulation order and different mapping layer numbers on the multiple carriers, according to the mapping layer number, performing layer mapping processing on the modulation symbols to obtain a first mapping result, includes:

determining a starting modulation symbol and the number of symbols in each carrier and each time domain symbol for performing layer mapping processing on the modulation symbols;

according to the starting modulation symbol and the number of symbols, performing layer mapping on the modulation symbols to obtain the first mapping result.

14. The method according to claim 8, wherein when one codeword has different modulation orders and different mapping layer numbers on the multiple carriers, according to the modulation order, modulating bit information of all scheduled carriers of the codeword to obtain modulation symbols corresponding to the codeword, includes:

determining a starting bit position and bit length for modulating the bit information of the scheduled carrier, on each carrier and each time-domain symbol;
performing modulation processing on the bit information according to the starting bit position and bit length to obtain the modulation symbols.

15. The method according to claim 1 or 8, wherein performing, by the transmitter, symbol-level processing on the codeword according to the modulation order and the mapping layer number to obtain transmission data, includes:

determining a starting position and data information amount of a data information sequence of the codeword on each carrier or each time-domain symbol; and
performing symbol-level processing on the codeword according to the starting position and the data information amount to obtain the transmission data;
wherein the data information sequence is input data of the symbol-level processing.

16. The method according to claim 15, wherein the codeword includes a plurality of data information sequences;

each data information sequence includes: data information of the codeword on a time domain symbol of a carrier; or,
each data information sequence includes: data information of the codeword on all time domain symbols of a carrier.

17. A multi-carrier data processing method, comprising:

receiving, by a receiver, transmission data, wherein the transmission data is data obtained by a transmitter through performing symbol-level processing on a codeword of a scheduled transport block;
determining a modulation order and a mapping layer number of the codeword on multiple carriers, wherein the multiple carriers are carriers in a multi-carrier serving cell; and
de-mapping and demodulating the transmission data according to the modulation order and the mapping layer number to obtain bit information of the codeword;
wherein for a codeword, modulation orders on the multiple carriers are the same and mapping layer numbers on the multiple carriers are the same; or,
for a codeword, modulation orders on the multiple carriers are the same and mapping layer numbers on the multiple carriers are different; or,
for a codeword, modulation orders on the multiple carriers are different and mapping layer numbers on the multiple carriers are different.

18. The method according to claim 17, wherein the method further includes:

receiving scheduling signaling sent by the transmitter, wherein the scheduling signaling includes a first layer number indication and/or a second layer number indication,
wherein the transmitter is a network device, and the receiver is a user equipment.

19. The method according to claim 17, wherein the de-mapping and demodulating the transmission data according to the modulation order and the mapping layer number to obtain bit information of the codeword, includes:

performing resource de-mapping on the transmission data to obtain a second mapping result before resource mapping;
performing antenna port de-mapping on the second mapping result to obtain a first mapping result before antenna port mapping;
performing layer de-mapping on the first mapping result according to the mapping layer number to obtain modulation symbols before layer mapping;

performing quadrature amplitude modulation (QAM) demodulation on the modulation symbols according to the modulation order to obtain bit information of the scheduled codeword om all scheduled carriers.

20. The method according to claim 17 or 19, wherein the de-mapping and demodulating the transmission data according to the modulation order and the mapping layer number to obtain bit information of the codeword, includes:

determining a starting position and data information amount of a data information sequence of the codeword in each carrier or each time domain symbol;
according to the starting position and the data information amount, de-mapping and demodulating the transmission data to obtain bit information of the scheduled codeword.

21. A multi-carrier data processing device, comprising: a memory, a transceiver, and a processor;
wherein the memory is used to store a computer program; the transceiver is used to send and receive data under the control of the processor; the processor is used to read the computer program in the memory and perform the following operations:

determining a modulation order and a mapping layer number of a codeword of a scheduled transport block on multiple carriers, wherein the multiple carriers are carriers in a multi-carrier serving cell;
performing symbol-level processing on the codeword according to the modulation order and the mapping layer number to obtain transmission data; and
sending the transmission data to a receiver;
wherein for a codeword, modulation orders on the multiple carriers are the same and mapping layer numbers on the multiple carriers are the same; or,
for a codeword, modulation orders on the multiple carriers are the same and mapping layer numbers on the multiple carriers are different; or,
for a codeword, modulation orders on the multiple carriers are different and mapping layer numbers on the multiple carriers are different.

22. The device according to claim 21, wherein for a codeword, the mapping layer numbers of the codeword on the multiple carriers are the same;
the processor is configured to read the computer program in the memory and perform at least one of the following:

if the multiple carriers all carry a codeword of one scheduled transport block, determining the mapping layer number of the codeword on the multiple carriers according to a first layer number indication;
if the multiple carriers all carry codewords of two scheduled transport blocks, determining the mapping layer number of the codeword of each scheduled transport block on the multiple carriers respectively according to a second layer number indication; or,
if a first portion of the multiple carriers carries codewords of two scheduled transport blocks and a second portion of the multiple carriers carries a codeword of one scheduled transport block, determining a mapping layer number of the codeword of each scheduled transport block on the multiple carriers according to the second layer number indication, or determining a mapping layer number of the codeword of each scheduled transport block on the multiple carriers according to the first layer number indication and the second layer number indication, respectively;
wherein the first layer number indication indicates a mapping layer number of a codeword of one scheduled transport block; and the second layer number indication indicates a sum of the mapping layer numbers corresponding to the codewords of two scheduled transport blocks.

23. The device according to claim 22, wherein the processor is configured to read the computer program in the memory and perform at least one of the following:

if the multiple carriers all carry a codeword of a first transport block, determining a mapping layer number corresponding to the codeword according to a layer number indication 1 corresponding to the first transport block;
if the multiple carriers all carry a codeword of a second transport block, determining a mapping layer number corresponding to the codeword according to a layer number indication 2 corresponding to the second transport block;
if a first portion of the multiple carriers carries the codeword of the first transport block, and a second portion of the multiple carriers carries the codeword of the second transport block, determining a mapping layer number of the codeword in the first portion of the multiple carriers according to the layer number indication 1 corresponding to the first transport block, and determining a mapping layer number of the codeword in the second portion of the multiple carrier according to the layer number indication 2 corresponding to the second transport block.

24. The device according to claim 22, wherein the processor is configured to read the computer program in the memory and perform:

according to the second layer number indication, determining that in the multiple carriers, the mapping layer number corresponding to the codeword of the first transport block is a first value, and the mapping layer number corresponding to the codeword of the second transport block is a second value;
wherein a value indicated by the second layer number is a sum of the first value and the second value.

25. The device according to claim 22, wherein the processor is configured to read the computer program in the memory and perform:

if the first portion of the multiple carriers carries the codeword of the first transport block and the codeword of the second transport block and the second portion of the multiple carrier carries the codeword of the first transport block, determining, according to the second layer number indication, the mapping layer number of the codeword of the first transport block on the first portion of the multiple carriers and the second portion of the multiple carriers is a third value, and the mapping layer number of the codeword of the second transport block on the first portion of the multiple carriers is a fourth value;
wherein a value of the second layer number indication is a sum of the third value and the fourth value.

26. The device according to claim 22, wherein the processor is configured to read the computer program in the memory and perform:

if the first portion of the multiple carrier carries the codeword of the first transport block and the codeword of the second transport block and the second portion of the multiple carrier carries the codeword of the first transport block, according to the first layer number indication, determining that the mapping layer number of the codeword of the first transport block on the first portion of the multiple carrier and the second portion of the multiple carrier is a fifth value; and according to the second layer number indication, determine that the mapping layer number of the codeword of the second transport block on the first portion of the multiple carrier is a sixth value;
wherein a value of the second layer number indication is a sum of the fifth value and the sixth value.

27. The device according to claim 22, wherein the processor is configured to read the computer program in the memory and perform:

receiving scheduling signaling sent by the receiver; wherein the scheduling signaling includes the first layer number indication and/or the second layer number indication;
where the transmitter is a user equipment and the receiver is a network device.

28. The device according to claim 21, wherein the processor is configured to read the computer program in the memory and perform:

according to the modulation order, modulating bit information of all scheduled carriers of the codeword to obtain modulation symbols corresponding to the codeword;
according to the mapping layer number, performing layer mapping processing on the modulation symbols to obtain a first mapping result;
performing antenna port mapping processing on the first mapping result to obtain a second mapping result;
performing resource mapping processing on the second mapping result to obtain the transmission data.

29. The device according to claim 28, wherein when one codeword has the same modulation order and the same mapping layer number on the multiple carriers, the processor is configured to read the computer program in the memory and perform:

determining a starting position and the number of symbols on each carrier and each time domain symbol, for performing resource mapping on the second mapping result;
according to the starting position and the number of symbols, performing resource mapping on the second mapping result corresponding to each antenna port to obtain the transmission data.

30. The device according to claim 29, wherein the processor is configured to read the computer program in the memory and perform:

for the second mapping result corresponding to each antenna port, first performing frequency domain resource mapping, and then performing symbol resource mapping;
wherein the frequency domain resource include resource unit (RE), the symbol resources include time domain symbol resources.

31. The device according to claim 30, wherein the processor is configured to read the computer program in the memory and perform:

step 1: for the second mapping result corresponding to each antenna port, performing frequency domain resource mapping on a time domain symbol $l$ according to a first carrier order;
step 2: when resource mapping of all frequency domain resources on the time domain symbol $l$ is completed, performing frequency domain resource mapping on a time domain symbol $l + 1$ according to the first carrier order until resource mapping of all frequency domain resources on the time domain symbol $l + 1$ is completed;
step 3: repeating the step 2 until the second mapping result is mapped to all time domain symbols.

32. The device according to claim 31, wherein the first carrier order comprises one of the following:

an order of carrier indexes from low to high;
an order of carrier indexes from high to low;
preconfigured carrier order.

33. The device according to claim 28, wherein when one codeword has the same modulation order and different mapping layer numbers on the multiple carriers, the processor is configured to read the computer program in the memory and perform:

determining a starting modulation symbol and the number of symbols in each carrier and each time domain symbol for performing layer mapping processing on the modulation symbols;
according to the starting modulation symbol and the number of symbols, performing layer mapping on the modulation symbols to obtain the first mapping result.

34. The device according to claim 28, wherein when one codeword has different modulation orders and different mapping layer numbers on the multiple carriers, the processor is configured to read the computer program in the memory and perform:

determining a starting bit position and bit length for modulating the bit information of the scheduled carrier, on each carrier and each time-domain symbol;
performing modulation processing on the bit information according to the starting bit position and bit length to obtain the modulation symbols.

35. The device according to claim 21 or 28, wherein the processor is configured to read the computer program in the memory and perform:

determining a starting position and data information amount of a data information sequence of the codeword on each carrier or each time-domain symbol;
performing symbol-level processing on the codeword according to the starting position and the data information amount to obtain the transmission data;
wherein the data information sequence is input data of the symbol-level processing.

36. The device according to claim 35, wherein the codeword includes a plurality of data information sequences;

each data information sequence includes: data information of the codeword on a time domain symbol of a carrier; or,
each data information sequence includes: data information of the codeword on all time domain symbols of a carrier.

37. A multi-carrier data processing device, comprising: a memory, a transceiver, and a processor; wherein the memory is used to store a computer program; the transceiver is used to send and receive data under the control of the processor; the processor is used to read the computer program in the memory and perform the following operations:

    receiving transmission data, wherein the transmission data is data obtained by a transmitter through performing symbol-level processing on a codeword of a scheduled transport block;
    determining a modulation order and a mapping layer number of the codeword on multiple carriers, wherein the multiple carriers are carriers in a multi-carrier serving cell; and
    de-mapping and demodulating the transmission data according to the modulation order and the mapping layer number to obtain bit information of the codeword;
    wherein for a codeword, modulation orders on the multiple carriers are the same and mapping layer numbers on the multiple carriers are the same; or,
    for a codeword, modulation orders on the multiple carriers are the same and mapping layer numbers on the multiple carriers are different; or,
    for a codeword, modulation orders on the multiple carriers are different and mapping layer numbers on the multiple carriers are different.

38. A multi-carrier data processing device, comprising:

    a first determining unit configured to determine a modulation order and a mapping layer number of a codeword of a scheduled transport block on multiple carriers, wherein the multiple carriers are carriers in a multi-carrier serving cell;
    a first processing unit configured to perform symbol-level processing on the codeword according to the modulation order and the mapping layer number to obtain transmission data; and
    a first sending unit configured to send the transmission data to a receiver;
    wherein for a codeword, modulation orders on the multiple carriers are the same and mapping layer numbers on the multiple carriers are the same; or,
    for a codeword, modulation orders on the multiple carriers are the same and mapping layer numbers on the multiple carriers are different; or,
    for a codeword, modulation orders on the multiple carriers are different and mapping layer numbers on the multiple carriers are different.

39. A multi-carrier data processing device, comprising:

    a first receiving unit configured to receive transmission data, wherein the transmission data is data obtained by a transmitter through performing symbol-level processing on a codeword of a scheduled transport block;
    a second determining unit configured to determine a modulation order and a mapping layer number of the codeword on multiple carriers, wherein the multiple carriers are carriers in a multi-carrier serving cell; and
    a second processing unit configured to de-map and demodulate the transmission data according to the modulation order and the mapping layer number to obtain bit information of the codeword;
    wherein for a codeword, modulation orders on the multiple carriers are the same and mapping layer numbers on the multiple carriers are the same; or,
    for a codeword, modulation orders on the multiple carriers are the same and mapping layer numbers on the multiple carriers are different; or,
    for a codeword, modulation orders on the multiple carriers are different and mapping layer numbers on the multiple carriers are different.

40. A processor-readable storage medium, comprising a computer program stored thereon; wherein the computer program is used to cause a processor to execute the multi-carrier data processing method according to any one of claims 1 to 16, or the multi-carrier data processing method according to any one of claims 17 to 20.

determining, by the transmitter, a modulation order and a mapping layer number of a codeword of a scheduled transport block on multiple carriers, where the multiple carriers are carriers in a multi-carrier serving cell (SCOMX) — 101

performing, by the transmitter, symbol-level processing on the codeword according to the modulation order and the mapping layer number to obtain transmission data — 102

sending, by the transmitter, the transmission data to a receiver — 103

**FIG. 1**

integrated carrier & integrated carrier index

one serving cell

| 0 | | 1 | 2 | 3 |

（5MHz）　　　　（2MHz）　（2MHz）　（3MHz）

frequency domain（F）

**FIG. 2**

**FIG. 3**

**FIG. 4**

available RE resources
for mapping

other frequency domain
resources (unable Used
for mapping)

RE
resources

Carrier 0

Carrier 1

Carrier 2

symbol    $l$    $l+1$    $l+2$

**FIG. 5**

i    modulation symbol i of codeword 0

Resource mapping for P=0

Resource mapping for P=1

RE

| 0 | |
| 2 | Carrier 0 |

| 4 | |
| 6 | Carrier 1 |

| 8 | |
| 10 | Carrier 2 |

symbol $l$

| 1 | |
| 3 | Carrier 0 |

| 5 | |
| 7 | Carrier 1 |

| 9 | |
| 11 | Carrier 2 |

symbol $l$

**FIG. 6**

modulation symbol i of codeword 1

Resource mapping for P=2 Resource mapping for P=3

RE

| 0 |
| 3 | Carrier 0

| 6 |
| 9 | Carrier 1

Carrier 2

symbol $l$

| 1 |
| 4 | Carrier 0

| 7 |
| 10 | Carrier 1

Carrier 2

symbol $l$

| 2 |
| 5 | Carrier 0

| 8 |
| 11 | Carrier 1

Carrier 2

symbol $l$

**FIG. 7**

$\tilde{b}^{(q)}(0), \ldots, \tilde{b}^{(q)}(M^{(q)}_{\text{bit}} - 1)$

modulation

$d^{(q)}(0), \ldots, d^{(q)}(M^{(q)}_{\text{symb}} - 1)$

calculate $start\_syb^l_c, num\_syb^l_c$

$d^{(q)}(start\_syb^l_i), \ldots, d^{(q)}(num\_syb^l_c + start\_syb^l_c - 1)$

cycle through all carriers C, and cycle through all scheduled symbols l

layer mapping

antenna port mapping

resource mapping

**FIG. 8**

FIG. 9

FIG. 10

$$z^{(q)}(0),\ldots z^{(q)}(start),z^{(q)}(start+1),\ldots z^{(q)}(start+mum-1),\ldots z^{(q)}(M^{(q)}-1)$$

symbol-level processing of input
data information

RE

carrier c

symbol l

resource region location 置
for data mapping

symbol *l*    symbol *l*+1    symbol *l*+2    symbol *l*+3

**FIG. 11**

$$z^{(q)}(0),\ldots z^{(q)}(start1),\ldots z^{(q)}(start1+mum1-1),z^{(q)}(M^{(q)}-1)$$    symbol-level processing
of input
data information

$$z^{(q)}(0),\ldots z^{(q)}(start2),\ldots z^{(q)}(start2+mum2-1),z^{(q)}(M^{(q)}-1)$$

$$z^{(q)}(0),\ldots z^{(q)}(start3),\ldots z^{(q)}(start3+mum3-1),z^{(q)}(M^{(q)}-1)$$

| num1 data sequence | num2 data sequence | num3 data sequence |

Calculate input  $x(0),x(1)\ldots x(total\_mum)$
data of carrier j

| perform symbol processing for carrier j |

**FIG. 12**

available RE resources
for mapping

resources unable for
mapping

Carrier 0

$\tilde{z}^{(q)}(n1+1)$   $\tilde{z}^{(q)}(n1)$

Carrier 1

RE
resources

$\tilde{z}^{(q)}(n2+1)$   $\tilde{z}^{(q)}(n2)$

Carrier 2

symbol   $l$   $l+1$   $l+2$

**FIG. 13**

receiving, by the receiver, transmission data — 141

determining a modulation order and a mapping layer number of the codeword on multiple carriers — 142

de-mapping and demodulating the transmission data according to the modulation order and the mapping layer number to obtain bit information of the codeword — 143

**FIG. 14**

1510

first determining unit

1520

first processing unit

1520

first sending unit

1500

**FIG. 15**

1610

first receiving unit

1600

1620

second determining unit

1620

second processing unit

**FIG. 16**

1710

processor

1720

memory

bus interface

1700

transceiver

**FIG. 17**

1810

processor

1820

memory

bus interface

1800

transceiver

**FIG. 18**

## INTERNATIONAL SEARCH REPORT

| International application No. |
| --- |
| **PCT/CN2023/138067** |

| A. | CLASSIFICATION OF SUBJECT MATTER |
| --- | --- |

H04L27/26(2006.01)i

According to International Patent Classification (IPC) or to both national classification and IPC

| B. | FIELDS SEARCHED |
| --- | --- |

Minimum documentation searched (classification system followed by classification symbols)

　　IPC: H04L,H04B,H04L

Documentation searched other than minimum documentation to the extent that such documents are included in the fields searched

Electronic data base consulted during the international search (name of data base and, where practicable, search terms used)

　　CNTXT, ENTXTC, EXTXT, VEN, 3GPP: 载波, 载频, 频域, 多, 聚合, 锚定, 集成, 调制, 阶数, 映射, 层, 码字, 传输块, 码流, 数据块, 符号, carrier, frequency, CA, multi-carriers, modulation, mapping, layer, code word, code flow, symbol, TB, transport block

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2016029480 A1 (HUAWEI TECHNOLOGIES CO., LTD.) 03 March 2016 (2016-03-03) description, pages 11-33 | 1-40 |
| A | CN 101808364 A (DATANG MOBILE COMMUNICATIONS EQUIPMENT CO., LTD.) 18 August 2010 (2010-08-18) entire document | 1-40 |
| A | CN 107612862 A (THE 41ST INSTITUTE OF CHINA ELECTRONICS TECHNOLOGY GROUP CORP.) 19 January 2018 (2018-01-19) entire document | 1-40 |
| A | CN 108809598 A (HUAWEI TECHNOLOGIES CO., LTD.) 13 November 2018 (2018-11-13) entire document | 1-40 |
| A | CN 114553382 A (CETC SIYI TECHNOLOGY CO., LTD.) 27 May 2022 (2022-05-27) entire document | 1-40 |
| A | US 2020214024 A1 (LG ELECTRONICS INC.) 02 July 2020 (2020-07-02) entire document | 1-40 |

☑ Further documents are listed in the continuation of Box C.　　☑ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
| --- | --- |
| **07 February 2024** | **26 February 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/138067**

| C. | DOCUMENTS CONSIDERED TO BE RELEVANT | |
|---|---|---|
| Category* | Citation of document, with indication, where appropriate, of the relevant passages | Relevant to claim No. |
| A | WO 2018127093 A1 (HUAWEI TECHNOLOGIES CO., LTD.) 12 July 2018 (2018-07-12)<br>entire document | 1-40 |

Form PCT/ISA/210 (second sheet) (July 2022)

## INTERNATIONAL SEARCH REPORT
**Information on patent family members**

International application No.

**PCT/CN2023/138067**

| Patent document cited in search report | | | Publication date (day/month/year) | Patent family member(s) | | | Publication date (day/month/year) |
|---|---|---|---|---|---|---|---|
| WO | 2016029480 | A1 | 03 March 2016 | JP | 2017531373 | A | 19 October 2017 |
| | | | | US | 2018159605 | A1 | 07 June 2018 |
| | | | | KR | 20170048449 | A | 08 May 2017 |
| | | | | US | 2017170887 | A1 | 15 June 2017 |
| | | | | EP | 3188376 | A1 | 05 July 2017 |
| | | | | CN | 106575985 | A | 19 April 2017 |
| CN | 101808364 | A | 18 August 2010 | | None | | |
| CN | 107612862 | A | 19 January 2018 | | None | | |
| CN | 108809598 | A | 13 November 2018 | US | 2020076647 | A1 | 05 March 2020 |
| | | | | EP | 3621235 | A1 | 11 March 2020 |
| | | | | JP | 2020519185 | A | 25 June 2020 |
| | | | | EP | 3917057 | A1 | 01 December 2021 |
| | | | | US | 2022116246 | A1 | 14 April 2022 |
| | | | | WO | 2018202128 | A1 | 08 November 2018 |
| | | | | CN | 110679109 | A | 10 January 2020 |
| CN | 114553382 | A | 27 May 2022 | | None | | |
| US | 2020214024 | A1 | 02 July 2020 | WO | 2017026871 | A1 | 16 February 2017 |
| WO | 2018127093 | A1 | 12 July 2018 | CN | 108282866 | A | 13 July 2018 |

Form PCT/ISA/210 (patent family annex) (July 2022)

**EP 4 637 093 A1**

**Patent documents cited in the description**

- CN 202211599020